(19) **Europäisches Patentamt / European Patent Office / Office européen des brevets**

(11) **EP 1 450 426 B1**

(12) **EUROPEAN PATENT SPECIFICATION**

(45) Date of publication and mention of the grant of the patent:
**02.06.2010 Bulletin 2010/22**

(21) Application number: **02788648.0**

(22) Date of filing: **26.11.2002**

(51) Int Cl.:
*H01M 8/02* (2006.01)   *H01M 4/86* (2006.01)
*H01M 4/88* (2006.01)   *H01M 8/10* (2006.01)

(86) International application number:
**PCT/JP2002/012301**

(87) International publication number:
**WO 2003/047018 (05.06.2003 Gazette 2003/23)**

(54) **METHOD FOR MANUFACTURING ELECTRODE FOR FUEL CELL**

VERAHREN ZUR HERSTELLUNG EINER ELEKTRODE FÜR EINE BRENNSTOFFZELLE

PROCEDE DE FABRICATION D'ELECTRODE DE PILE A COMBUSTIBLE

(84) Designated Contracting States:
**DE FR GB**

(30) Priority: **30.11.2001   JP 2001366598**
**30.11.2001   JP 2001366631**
**30.11.2001   JP 2001366662**
**30.11.2001   JP 2001366711**
**22.05.2002   JP 2002148428**
**22.05.2002   JP 2002148429**
**22.05.2002   JP 2002148099**
**22.05.2002   JP 2002147550**
**22.05.2002   JP 2002147579**
**04.06.2002   JP 2002163549**

(43) Date of publication of application:
**25.08.2004   Bulletin 2004/35**

(73) Proprietor: **HONDA GIKEN KOGYO KABUSHIKI KAISHA**
**Minato-ku,**
**Tokyo 107-8556 (JP)**

(72) Inventors:
• **Kakutani, Osamu**
**c/o Honda Engineering Co., Ltd.**
**Sayama-shi, Saitama 350-1381 (JP)**
• **Okiyama, Gen**
**c/o Honda Engineering Co., Ltd.**
**Sayama-shi, Saitama 350-1381 (JP)**

• **Suzuki, Takashi**
**c/o Honda Engineering Co., Ltd.**
**Sayama-shi, Saitama 350-1381 (JP)**
• **Shibata, Tetsuo**
**c/o Honda Engineering Co., Ltd.**
**Sayama-shi, Saitama 350-1381 (JP)**
• **Kamiyama, Youichi**
**c/o Honda Engineering Co., Ltd.**
**Sayama-shi, Saitama 350-1381 (JP)**
• **Watanabe, Hideki**
**c/o Honda Engineering Co., Ltd.**
**Sayama-shi, Saitama 350-1381 (JP)**
• **Date, Tomoko**
**c/o Honda Engineering Co., Ltd.**
**Sayama-shi, Saitama 350-1381 (JP)**
• **Hirano, Yoshiki**
**c/o Honda Engineering Co., Ltd.**
**Sayama-shi, Saitama 350-1381 (JP)**

(74) Representative: **Böhm, Brigitte et al**
**Weickmann & Weickmann**
**Patentanwälte**
**Postfach 86 08 20**
**81635 München (DE)**

(56) References cited:
EP-A- 0 955 687    WO-A1-99/34466
JP-A- 6 251 779    JP-A- 8 162 123
JP-A- 8 236 122    JP-A- 9 092 303
JP-A- 9 180 740    JP-A- 9 501 535
JP-A- 11 288 728   JP-A- 2000 285 932

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This invention relates to a method for manufacturing an electrode for use in a fuel cell which has an ion exchange film disposed between positive and negative electrodes and generates electricity by hydrogen being brought into contact with a catalyst in the negative electrode and oxygen being brought into contact with a catalyst in the positive electrode.

BACKGROUND ART

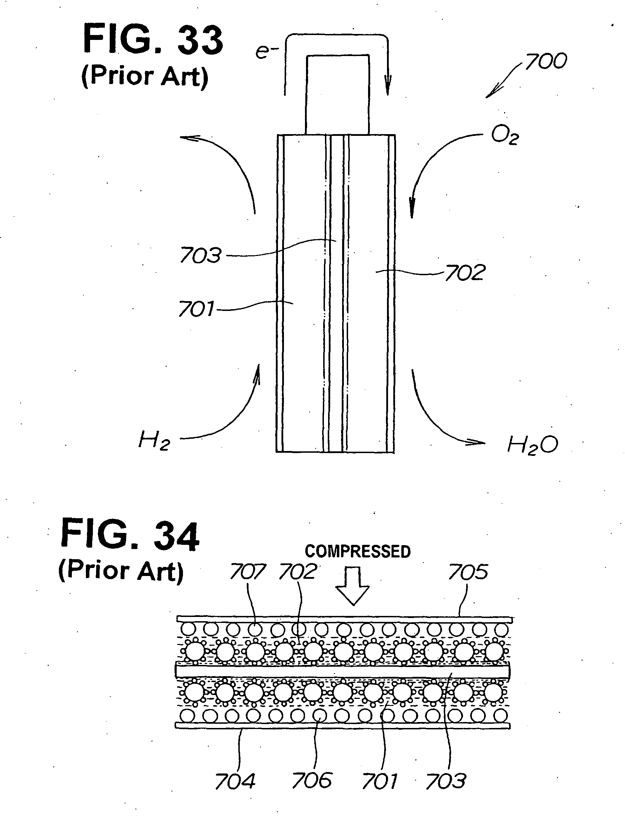

Fig. 33 and Fig. 34 hereof show a fuel cell electrode of related art. In this fuel cell electrode 700, an ion exchange film 703 is disposed between a negative electrode layer (hydrogen electrode) 701 and a positive electrode layer (oxygen electrode) 702, and an electrical current is generated by a hydrogen molecules ($H_2$) being brought into contact with a catalyst included in the negative electrode layer 701 and oxygen molecules ($O_2$) being brought into contact with a catalyst included in the positive electrode layer 702 to cause electrons e- to flow as shown by the arrow. In the generation of the current, water ($H_2O$) is produced from the hydrogen molecules ($H_2$) and the oxygen molecules ($O_2$).

As shown in Fig. 34, the fuel cell electrode 700 has binder layers 706, 707 on the respective inner sides of a pair of diffusion layers 704, 705. These binder layers 706, 707 have the negative electrode layer 701 and the positive electrode layer 702 on their inner sides. The ion exchange film 703 is positioned between the negative electrode layer 701 and the positive electrode layer 702.

To manufacture this fuel cell electrode 700, first a solution for making the binder layer 706 is applied to the diffusion layer 704, a solution for making the binder layer 707 is then applied to the diffusion layer 705, and then by the applied binder layers 706, 707 being fired, the binder layers 706, 707 are hardened.

Next, a solution of the negative electrode layer 701 is applied to the hardened binder layer 706, a solution of the positive electrode layer 702 is applied to the hardened binder layer 707, and by the applied negative and positive electrode layers 701, 702 being dried, the negative and positive electrode layers 701, 702 are hardened.

Then, an ion exchange film 703 in the form of a sheet is placed on the hardened negative electrode layer 701 and the diffusion layer 705 with the positive electrode layer 702 hardened on it is placed on the ion exchange film 703 to form a 7-layer laminate, after which this laminate is heated and compressed as shown by the arrow to form an electrode structure.

Because, as mentioned above, in the fuel cell electrode 700 a sheet is used as the ion exchange film 703, and the heating and compression are carried out with the respective layers of the binder layer 706, the negative electrode layer 701, the positive electrode layer 702 and the binder layer 707 each hardened, there is a risk of areas of defective intimacy arising at the interfaces of the layers.

When areas of defective intimacy arise in the layers of the fuel cell electrode, it becomes difficult for a current to be generated efficiently, and at the inspection stage of the production line these electrodes are disposed of as waste or are repaired, and this has been an impediment to raising productivity.

Also, because a sheet is used as the ion exchange film 703, when the handlability of the ion exchange film 703 is considered, the ion exchange film 703 must be made somewhat thick. Consequently, it is difficult to make the electrode thin, and this constitutes an impediment to making the fuel cell compact.

Thus, there has been a need for it to be possible to prevent areas of defective intimacy arising at the interfaces, also for it to be possible to prevent performance deterioration of the ion exchange film, and further for it to be possible to make the ion exchange film thin.

Among these positive and negative electrodes of fuel cells, there are those which, to suit the application, are polygonal (for example, octagonal).

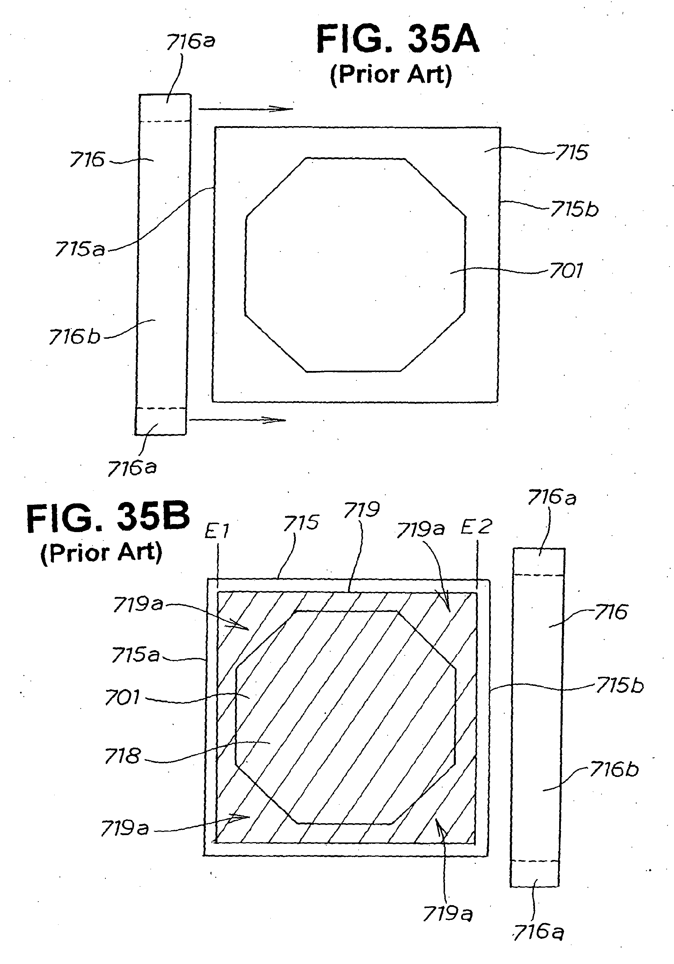

Fig. 35A and Fig. 35B are views showing a method for forming a polygonal ion exchange film of a fuel cell of related art, and illustrate an example of applying an ion exchange film 703 to a negative electrode 701.

In Fig. 35A, a polygonal (octagonal) negative electrode 701 is made of carbon paper, and this negative electrode 701 is placed on a table 715. Then, a screen printer 716 is moved from one side 715a toward the other side 715b of the table 715 as shown with arrows.

This screen printer 716 has leg parts 716a, 716a at its ends and a delivery part 716b extending between the leg parts 716a, 716a, and when the delivery part 716b of the screen printer 716 reaches a position above the negative electrode 701, a resin solution for making an ion exchange film is delivered through the delivery part 716b.

In Fig. 35B, when the screen printer 716 moves between a position E1 and a position E2, a slurry (resin solution) for making an ion exchange film is applied to the negative electrode 701 through the delivery part 716b of the screen printer 716. The slurry 718 applied outside this negative electrode is then removed, after which the resin solution on the negative electrode 701 surface is dried to obtain a polygonal ion exchange film.

When the slurry 718 is applied with the screen printer 716, because the slurry 718 is delivered through the delivery part 716b while the delivery part 716b is moved as shown by the arrows in Fig. 35A, the area 719 to which the slurry 718 is applied is a rectangle, as shown in Fig. 35B. Consequently, the slurry 718 is applied to a number of excess areas 719a outside the negative electrode 701 (that is, the corners of the rectangle), and it is necessary for the slurry 718 applied to these excess areas 719a to be recovered. This recovery work takes time, and this has been an impediment to raising productivity.

To secure the performance of the fuel cell, it is necessary for the surface of the ion exchange film 703 (see Fig. 33) to be made flat. Consequently, when the slurry 718 is applied with the screen printer 716, the slurry 718 must be delivered uniformly from the whole area of the delivery part 716b.

However, to deliver the slurry 718 uniformly over the whole area, from a relatively wide part like the delivery part 716b, it is necessary for the delivery precision of the screen printer 716 to be made very high. Because of this, the equipment cost of the screen printer 716 is high, and this has been an impediment to lowering the cost of the fuel cell. Accordingly, a method for forming an ion exchange film for a fuel cell has been awaited with which it is possible to prevent slurry from being applied to excess areas and an ion exchange film can be formed flat relatively simply.

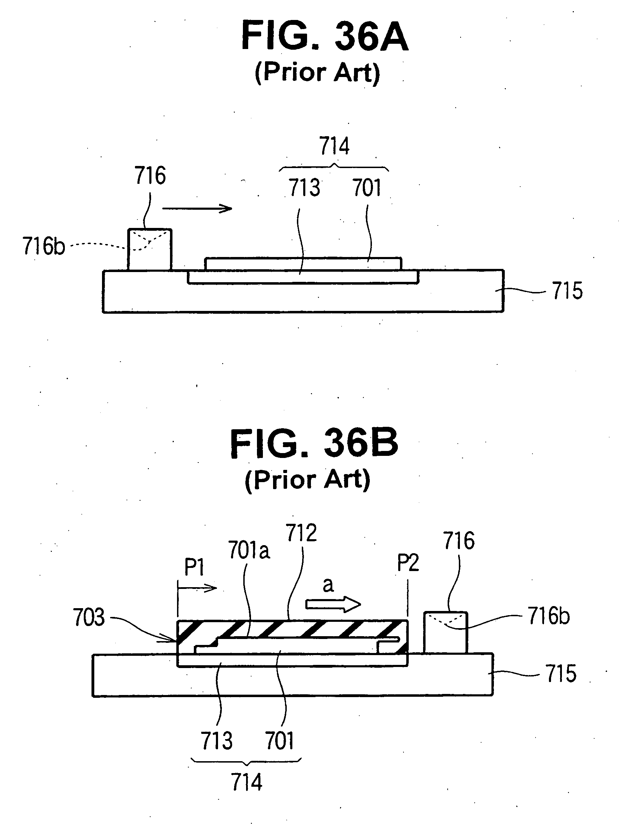

Fig. 36A and Fig. 36B are schematic views illustrating another method for forming an ion exchange film of a fuel cell of related art.

In Fig. 36A, an electrode plate 714 made by applying a negative electrode 701 to a substrate 713 is prepared, and this electrode plate 714 is placed on a table 715. Then, before the applied negative electrode 701 has dried, the screen printer 716 is moved as shown by the arrow. This screen printer 716 has a delivery part 716b at its top, and when the delivery part 716b of the screen printer 716 reaches a position above the electrode plate 714 (the substrate 713 and the negative electrode 701), a resin solution for making an ion exchange film is delivered from the delivery part 716b.

In Fig. 36B, when the screen printer 716 is moved between a position P1 and a position P2, the resin solution for making an ion exchange film 712 is applied to the electrode plate 714 (the substrate 713 and the negative electrode 701) through the delivery part 716b of the screen printer 716, and the electrode plate 714 is thereby covered with the resin solution 712. Then, this resin solution is dried and an ion exchange film 703 is obtained.

Now, when while the resin solution 712 is applied to the electrode plate 714 from the screen printer 716 it is moved from the position P1 as shown by the arrows, a shear force arises at the surface of the negative electrode 701 as shown by the arrow $\underline{a}$. Also, when the resin solution 712 is applied to the electrode plate 714 from the screen printer 716, the negative electrode 701 is not yet dry.

When a shear force arises as shown by the arrow a at the surface of the negative electrode 701 like this, there is a risk of a surface layer part 701a of the negative electrode 701 shifting under this shear force. Product units in which the surface layer part 701a of the negative electrode 701 has shifted have to be disposed of as waste or repaired, and this constitutes an impediment to raising productivity. Accordingly, in forming an ion exchange film on an electrode such as a negative electrode, there has been a need to prevent shifting of the surface layer part of the electrode.

DISCLOSURE OF THE INVENTION

The present inventors discovered that the cause of areas of defective intimacy arising between the layers is that when a next solution is applied after a previously applied film has hardened, this solution does not permeate the previously applied film, and defective intimacy arises as a result.

When accordingly they applied a solution before the previously applied film had dried, they found that the solution permeated the previously applied film and the intimacy of contact rose markedly.

Similarly, they discovered that also when a solution is applied to an ion exchange film in the form of a sheet, the solution does not permeate the sheet-form ion exchange film, and defective intimacy arising as a result constitutes another cause.

Accordingly, the present invention provides a fuel cell electrode manufacturing method including: a step of applying a solution for making a first electrode of positive and negative electrodes of a fuel cell to a sheet to form a first electrode layer; a step of, before this electrode layer has dried, applying a solution for making an ion exchange film to this first electrode layer to form an ion exchange film; a step of, before this ion exchange film has dried, applying a solution for making the second electrode to the ion exchange film to form a second electrode layer; and a step of hardening the first electrode layer, the second electrode layer and the ion exchange film by drying them.

That is, in this invention, if a solution is employed for the ion exchange film, and solutions for the electrodes and the solution for the ion exchange film are each applied in an undried state, mixing occurs at their interfaces. By this means, because it is possible to prevent areas of defective intimacy arising at the interfaces of the respective layers of the pair of electrodes and the ion exchange film, the reaction efficiency at the ion exchange film can be kept good.

Here, when a sheet is used for the ion exchange film, it is necessary for the ion exchange film to be made somewhat thick, to keep the handlability of the sheet-form ion exchange film good. Consequently, it is difficult to make the electrode structure thin, and this constitutes an impediment to making the electrode structure small.

In this invention, the ion exchange film is made a solution, so that the ion exchange film can be handled in the state of a solution. As a result of the ion exchange film being made a solution, it is not necessary for the thickness of the ion exchange film to be regulated for handling. Consequently, the ion exchange film can be made thin, and the electrode structure can be made as thin as possible.

In this invention, preferably, the above-mentioned drying is carried out without a load being applied. That is, the solutions for making the electrodes and the solution for making the ion exchange film are each applied in an undried state, and after the solutions are applied they are dried without a load being applied. By this means, because it is not necessary for a load to be applied to the ion exchange film, the performance of the ion exchange film can be prevented from falling due to loading.

Also, in this invention, preferably, the negative electrode layer is formed below the ion exchange film and the positive electrode layer is formed above the ion exchange film. When the solution for making the ion exchange film is applied to an undried electrode layer, there is a risk of the solution for making the ion exchange film flowing downward under the influence of gravity and permeating the electrode layer. When the solution for making the ion exchange film permeates an electrode layer, there is a risk of the voids in the layer being diminished by the permeating solution. Consequently, in the manufacture of an electrode structure for a fuel cell, if, of the positive and negative electrode layers, the positive electrode layer is disposed below the ion exchange film, there is the concern that the voids in the positive electrode layer will be diminished by the solution for making the ion exchange film and that it will not be possible for product water produced by the electricity generation to be efficiently drained through the positive electrode side diffusion layer to outside the fuel cell. When product water cannot be drained efficiently, because optimal supplying of the reaction gases hydrogen and oxygen is impeded, a density overvoltage becomes high, and it becomes difficult for the electricity generating performance of the fuel cell to be kept good.

Here, "density overvoltage" refers to a voltage drop which appears when the rate of replenishment and removal of reactants and reaction products at the electrodes is slow and the reactions at the electrodes are impeded. That is, the density overvoltage being high means the amount of the voltage drop being large. To avoid this, as described above, in this invention, the positive electrode layer is provided above the ion exchange film. By disposing the positive electrode layer above the ion exchange film, it is possible to prevent the solution for making the ion exchange film from permeating the positive electrode layer under the influence of gravity, and it is possible to prevent the voids of the positive electrode layer from being diminished by the solution for making the ion exchange film. As a result, product water produced by electricity generation can be guided from the positive electrode layer to the positive electrode side diffusion layer and drained well through voids in the positive electrode side diffusion layer, and density overvoltage arising in the fuel cell can be kept low.

The solution for making the positive electrode is preferably applied in a spray state. When the application pressure of the solution for making the positive electrode is high, in the application of the solution for making the positive electrode, there is a risk of the solution for making the ion exchange film permeating the positive electrode layer. When the solution for making the ion exchange film permeates the positive electrode layer, there is a risk of the solution for making the ion exchange film reaching the positive electrode side diffusion layer and the voids of the positive electrode side diffusion layer being diminished by the solution for making the ion exchange film. To avoid this, by the solution for making the positive electrode being applied in a spray state, it is applied without excess application pressure being exerted on the ion exchange film, that is, the solution for making the positive electrode is applied with a minimal application pressure. By applying the solution for making the positive electrode without exerting excess application pressure on the ion exchange film like this, it is possible to prevent the solution for making the ion exchange film from permeating the positive electrode layer. Therefore, the voids of the positive electrode layer are prevented from being diminished by the solution for making the ion exchange film, and the voids of the positive electrode layer can be secured much better. By this means it is possible to guide product water produced by electricity generation from the positive electrode layer to the positive electrode diffusion layer and drain it through voids in the positive electrode side diffusion layer much better, and density overvoltage arising in the fuel cell can be kept low.

In this invention, the above-mentioned drying is carried out by heating from the insides of the electrodes with far infrared radiation, and excessive permeation of the solution for making the ion exchange film into the electrodes is thereby prevented. By thermally drying the first electrode layer, the ion exchange film and the second electrode layer using far infrared radiation like this, it is possible to dry the whole of the ion exchange film rapidly from its surface to its interior, and permeation of the solution for making the ion exchange film into the first electrode layer and the second electrode layer can be suppressed. By suppressing the permeation of the solution for making the ion exchange film into the electrode layers, it is possible to prevent the voids in the electrode layers being blocked by the solution for making the ion exchange film. Therefore, product water produced by electricity generation can be guided through voids in the electrode layers to the diffusion layers and drained through voids in the diffusion layers well.

Preferably, in this invention, in the solutions for making the positive and negative electrode layers, solvents having higher vaporization temperatures than the solvent used in the solution for making the ion exchange film are used. When solvents having higher vaporization temperatures than the solvent used in the solution for making the ion exchange film are used like this, the ion exchange film can be dried surely, preferentially to the electrode layers. Therefore, permeation of the solution for making the ion exchange film into the electrode layers can be much more efficiently suppressed.

In this invention, preferably, the above-mentioned first of the electrode layers is divided into a first layer on the side away from the ion exchange film and a second layer on the side in contact with the ion exchange film, and the porosity of the second layer is set lower than the porosity of the first layer. By making the porosity of the second layer low like this it is possible to suppress permeation of the solution for making the ion exchange film into the second layer and it is possible to prevent the voids in the electrode layers being diminished by the solution for making the ion exchange film.

The above-mentioned porosity of the second layer is preferably 70 to 75%. When the porosity of the second layer is less than 70%, the porosity is too low and there is a risk of the solution for making the ion exchange film not permeating into the second layer in a suitable amount. In this case, it is difficult for the intimacy between the ion exchange film and the second layer to be kept good, and there is a risk of not securing the required effective area for reaction. Because of this, there is a risk of the activation overvoltage becoming high and it not being possible for a current to be generated efficiently. To avoid this, the porosity of the second layer is set to at least 70% to keep the intimacy between the ion exchange film and the second layer good.

Here, "activation overvoltage" refers to a voltage drop which appears to make up the activation energy necessary for the reactions at the electrodes. That is, the activation overvoltage being high means the amount of the voltage drop being large. When on the other hand the porosity of the second layer exceeds 75%, there is a risk of the solution for making the ion exchange film permeating the second layer excessively due to the porosity being too high. In this case, the pores in the first electrode layer are diminished by the solution for making the ion exchange film, and the product water produced by electricity generation cannot be drained well through the pores in the first electrode layer. Consequently, the optimal supply of the reaction gases hydrogen and oxygen is impeded, the density overvoltage becomes high, and it becomes difficult for the electricity generating performance of the fuel cell to be kept good. To avoid this, the porosity of the second layer is set to below 75% so that product water can be drained well.

Also, the porosity of the first layer is preferably 76 to 85%. When the porosity of the first layer is made less than 76%, the porosity is too low and it is difficult for product water to be efficiently drained. Consequently, the optimal supply of the reaction gases hydrogen and oxygen is impeded, the density overvoltage becomes high, and it becomes difficult for the electricity generating performance of the fuel cell to be kept good. To avoid this, the porosity of the first layer is set to at least 76% so that product water can be drained well.

When on the other hand the porosity of the first layer exceeds 85%, there is a risk of the retention of product water falling due to the porosity being too high and of the first layer consequently drying and the conduction of ions being hindered. Consequently, there is a risk of resistance overvoltage becoming high and it not being possible for current to be generated efficiently. To avoid this, the porosity of the first layer is set to below 85% to suppress resistance overvoltage and make it possible for current to be generated efficiently.

Here, "resistance overvoltage" refers to a voltage drop arising in proportion to the electrical resistances inside the electrodes. That is, the resistance overvoltage being high means the amount of the voltage drop being large.

In the method of this invention, to make the porosity of the second layer lower than the porosity of the first layer, preferably, the solution for making the second layer is applied with a higher atomization energy than the solution for making the first layer. In this case, the density of the second layer becomes higher than the density of the first layer, and the porosity of the second layer becomes smaller than the porosity of the first layer.

Also, in this invention, to make the porosity of the second layer lower than the porosity of the first layer, alternatively, the density of the second layer may be made higher than the density of the first layer by the size of electrode particles included in the solution for making the second layer being made smaller than the size of electrode particles included in the solution for making the first layer.

In the method of this invention, preferably, a step of forming a first electrode side diffusion layer, before the step of forming the first electrode layer, is included, the first electrode layer then being formed while the first electrode side diffusion layer is not yet dry, and also a step of forming a second electrode side diffusion layer, after the second electrode layer is formed, is included, the second electrode side diffusion layer being formed while the second electrode layer is not yet dry.

Preferably, the first electrode side diffusion layer is made up of a positive electrode side carbon paper and a positive electrode side binder layer, and the second electrode side diffusion layer is made up of a negative electrode side carbon paper and a negative electrode side binder layer.

The solution for making this positive electrode side binder layer, preferably, includes water as a solvent and includes a low-melting-point resin having water repellency and a melting point of not greater than 150°C.

Generally, so that product water can be drained efficiently to outside the fuel cell, a solution including a water repellent resin (polytetrafluoroethylene, for example trade name "Teflon" (a registered trade mark)) is applied to the positive electrode side carbon paper to make the positive electrode side carbon paper water repellent. However, because the melting point of polytetrafluoroethylene is high, at 350°C, compared to the positive and negative electrode layers and the ion exchange film, it is necessary to fire individually only the polytetrafluoroethylene, separately from the positive and negative electrode layers and the ion exchange film, and to dry the positive and negative electrode layers and the ion exchange film after the polytetrafluoroethylene is fired. Because of this, in the manufacture of a fuel cell electrode, two drying steps, a drying step of firing the polytetrafluoroethylene and a drying step of drying the positive and negative electrode layers and the ion exchange film, are needed, and this electrode manufacture takes time and labor.

To avoid this, to reduce the number of drying steps, as mentioned above, in this invention, in place of the above-mentioned polytetrafluoroethylene as the water repellent resin, a low-melting-point resin whose melting point is below 150°C is used. That is, when the melting point of the water repellent resin exceeds 150°C, there is a risk of it not being possible to fire the water repellent resin together with the positive and negative electrode layers and the ion exchange film because its melting point temperature is too high. Because of this, the water repellent resin is made a resin with a low melting point below 150°C, whereby it is made possible to fire the water repellent resin as well at the time of the drying of the positive and negative electrode layers and the ion exchange film.

When it is possible to fire the water repellent resin as well at the time of the drying of the positive and negative electrode layers and the ion exchange film like this, the solution for making the positive electrode layer can be applied to the positive electrode side diffusion layer before the water repellent resin (i.e. the positive electrode side diffusion layer) has dried, and optimal mixing can be obtained at the interface of the positive electrode side diffusion layer and the positive electrode layer.

Here, because the surface of the positive electrode side carbon paper is an irregular surface, it is difficult to apply the solution of the positive electrode side binder layer (and in particular the water repellent resin) to depressions in the positive electrode side carbon paper.

Because of this, in this invention, as mentioned above, water is included as a solvent in the solution for making the positive electrode side binder layer. Because water has excellent dispersing power, by using water as the solvent it is possible to mix the low-melting-point resin and the carbon well with the solvent. Therefore, the solution for making the positive electrode side binder layer can be applied in spray form by a sprayer or an ink jet or the like, and the solution for making the positive electrode side binder layer can be applied well even to the depressions in the positive electrode side carbon paper.

A suitable example of the low-melting-point resin is vinylidene fluoride / tetrafluoroethylene / hexafluoropropylene copolymer. This vinylidene fluoride / tetrafluoroethylene / hexafluoropropylene copolymer has the property of dispersing in water as a solvent, and can be used to work this invention well with a drying temperature of 150°C. That is, after the water serving as the solvent has evaporated, the vinylidene fluoride / tetrafluoroethylene / hexafluoropropylene copolymer which had been dispersed in the water reaches its melting point and melts and exhibits a water repellent effect.

In the invention, the solution for making the positive electrode side binder layer includes an organic solvent. Because an organic solvent has excellent dissolving power, the water repellent resin can be dissolved well in the solvent. The carbon is dispersed or mixed in the solvent. Here, because the drying temperature of the organic solvent is likely to be about 70 to 80°C, in the drying of the positive and negative electrode layers and the ion exchange film, the organic solvent can be evaporated with the water repellent resin being left behind, and the water repellent resin can be fired together with the positive and negative electrode layers and the ion exchange film. Because the water repellent resin can be fired as well at the time of the drying of the positive and negative electrode layers and the ion exchange film like this, the solution of the positive electrode layer can be applied to the positive electrode side diffusion layer before the water repellent resin (i.e. the positive electrode side diffusion layer) has dried, and optimal mixing can be obtained at the interface of the positive electrode side diffusion layer and the positive electrode layer.

As mentioned above, an organic solvent has excellent dissolving capacity, and by using an organic solvent it is possible to dissolve the water repellent resin in the solvent well. In this way, the solution for making the positive electrode side binder layer can be sprayed and applied with a sprayer or an ink jet, and the solution for making the positive electrode side binder layer can be applied well even to the depressions in the surface of the positive electrode side carbon paper.

Also, the solution for making the positive electrode side binder layer of this invention includes a resin which is soluble in an organic solvent and is water repellent. As this water repellent resin soluble in an organic solvent, suitable examples include vinylidene fluoride / tetrafluoroethylene / hexafluoropropylene copolymers, polyvinylidene fluoride, fluoro-olefin / hydrocarbon-olefin copolymers, fluoro-acrylate copolymers, and fluoro-epoxy compounds.

Also, in this invention, a first of positive and negative electrode layers is formed on a binder layer of a first of a positive electrode side diffusion layer and a negative electrode side diffusion layer, an ion exchange film is formed on this first electrode layer, the second electrode layer is formed on this ion exchange film, a second binder layer is formed on this second electrode layer, a second carbon paper is placed on this second binder layer, and to make intimate the contact between the second binder layer and the second carbon paper, an adhesive resin with excellent adhesion is included in a solution for making the second binder layer. As the adhesive resin, preferably, an ion exchange resin is used.

This invention further includes a step of, after the first diffusion layer is formed, flattening the upper face of the first diffusion layer by pressing the upper face of the first diffusion layer before the first diffusion layer has dried. By flattening the upper face of the first diffusion layer like this it is possible to apply the negative electrode layer to the diffusion layer flatly, and also the ion exchange film can be applied flatly to the negative electrode layer. Thus, by forming the ion exchange film flatly, it is possible to prevent the positive electrode layer and the negative electrode layer applied to the ion exchange film from short-circuiting.

This first diffusion layer is preferably made by applying a binder to a sheet consisting of carbon paper, because the binder can be applied to the depressions in the carbon paper. In this way the binder can be applied to the whole area of the carbon paper to obtain a water repellent effect, and product water produced by the reaction of hydrogen molecules with oxygen molecules can be drained well.

The application also describes an ion exchange film forming method for forming an ion exchange film for use in a fuel cell by forming a slurry on a first electrode of positive and negative electrodes of the fuel cell, including: a step of placing the first electrode on a bed and giving this first electrode a plus charge; a step of, with a slurry for making the ion exchange film given a minus charge, spraying the slurry from a slurry nozzle and moving the slurry nozzle over the first electrode to apply the sprayed slurry to the electrode; and a step of drying this applied slurry.

In this way, by a positive or negative electrode being given a plus charge and a slurry for making an ion exchange film being sprayed from a slurry nozzle with a minus charge, application nonuniformity of the slurry can be prevented. By this means it is possible to apply the slurry to the negative electrode well, and the ion exchange film can be formed flat.

When the first electrode is polygonal, preferably, at narrow parts of the first electrode the slurry nozzle is brought close to the electrode, and at wide parts of the electrode the slurry nozzle is moved away from the electrode. By the slurry nozzle being brought close to narrow parts of the electrode, the width of the slurry sprayed from the slurry nozzle can be narrowed, so that slurry does not land outside of the narrow parts of the electrode. And by moving the slurry nozzle away from the electrode at wide parts of the electrode, the width of the slurry sprayed from the slurry nozzle can be widened, so that the wide parts of the electrode are coated with slurry. By adjusting the height of the slurry nozzle in accordance with the width of the electrode like this it is possible to prevent slurry projecting from the electrode and prevent slurry being applied to excess areas.

The application also describes an ion exchange film forming method for forming an ion exchange film for use in a fuel cell by forming a slurry on a first electrode of polygonal positive and negative electrodes of the fuel cell, having: a step of placing the first electrode on a bed; a step of disposing a plurality of slurry nozzles for spraying a slurry for making the ion exchange film in the form of a zigzag; a step of applying the sprayed slurry to the surface of the first electrode while moving the slurry nozzles horizontally over the surface of the first electrode; and a step of drying the applied slurry.

Thus with this forming method, a plurality of slurry nozzles are used, and in the application of the slurry, when some of the slurry nozzles are off the electrode, slurry is not sprayed from these slurry nozzles. By this means it is possible to avoid applying slurry to areas off the electrode.

Also, because the ion exchange film is formed by spraying slurry for making the ion exchange film from multiple slurry nozzles, the amounts of slurry sprayed from the slurry nozzles can be adjusted individually. By this means it is possible to form the surface of the ion exchange film flat relatively simply, without unnecessarily raising the spraying accuracy of the slurry nozzles.

Also, to prevent turbulence arising in the peripheral parts of the sprayed slurry, the slurry nozzles are disposed in the form of a zigzag and disposed so that peripheral parts of slurry sprayed from adjacent nozzles overlap. However, when the multiple slurry nozzles move over the surface of the first electrode, to make up the amounts applied to the peripheral parts the peripheral parts of the applied slurry are made to overlap, so that the amounts applied to the peripheral parts are supplemented. As a result, the amounts applied to the peripheral parts and the amounts applied to the central part become equal, and a flat ion exchange film is obtained.

The forming method described preferably includes a step of, after the first electrode is placed on the bed, disposing a guide frame member along the periphery of the first electrode, so that the region over which the slurry is applied is regulated with this guide frame member. When the region over which the slurry is applied is limited with a guide frame member like this, the slurry can be formed easily to the required shape, and without time and labor the edges of the ion exchange film can be formed well.

Also, the application describes an ion exchange film forming method for forming an ion exchange film for use in a fuel cell by forming a slurry on a first electrode of positive and negative electrodes of the fuel cell, made up of: a step of placing the first electrode on a bed; a step of disposing an outer side regulating wall member along the periphery of this first electrode and surrounding the first electrode with this outer side regulating wall member; and a step of spraying a resin solution including a gas from a spraying device disposed above this first electrode and moving this spraying device over the surface of the first electrode to apply the resin solution to the first electrode.

In this way, in this forming method, by a spraying device being disposed above the electrode and a resin solution being sprayed through this spraying device to apply the resin solution to the electrode, a shear force can be prevented from arising at the electrode. Also, by spraying a resin solution including a gas, it is possible to keep the spray pressure down. By this means, when the resin solution is applied to the electrode, the surface of the electrode is prevented from shifting.

Additionally, by a resin solution including a gas being sprayed, when the resin solution is sprayed at the edge of the electrode, the atomization pressure arising at the edge of the electrode, that is, the shear force, can be kept small. By this means, the shear force arising at the electrode can be kept small, and a surface layer part of the electrode shifting can be prevented.

Also, by the electrode being surrounded with an outer side regulating wall member, when the resin solution is applied to the electrode surface, the resin solution can be formed along the outer side regulating wall member. As a result, the edge of the ion exchange film can be formed well.

The invention also provides a fuel cell electrode, made up of: a first electrode layer, formed by applying a solution for making a first electrode of positive and negative electrodes of a fuel cell to a sheet; an ion exchange film, formed by applying a solution for making an ion exchange film to the first electrode layer before the first electrode layer has dried; and a second electrode layer, formed by applying a solution for making the second electrode to the ion exchange film before the ion exchange film has dried, wherein the first electrode layer is made up of a first layer on the side away from the ion exchange film and a second layer on the side in contact with the ion exchange film, and the porosity of the second layer is lower than the porosity of the first layer.

Preferably, the porosity of the second layer is 70 to 75%, and the porosity of the first layer is 76 to 85%.

Also, in the invention, the porosity of the second layer may be made lower than the porosity of the first layer by the size of electrode particles included in a solution for making the second layer being made smaller than the size of electrode particles included in a solution for making the first layer.

BRIEF DESCRIPTION OF THE DRAWINGS

Fig. 1 is an exploded perspective view showing a fuel cell according to a first embodiment of the invention;
Fig. 2 is a view showing the cross-sectional structure of a fuel cell electrode shown in Fig. 1;
Fig. 3A through Fig. 3F are views illustrating steps of a first method for manufacturing the fuel cell electrode of the first embodiment shown in Fig. 1;
Fig. 4A through Fig. 4E are views illustrating steps of a second method for manufacturing the fuel cell electrode of the first embodiment shown in Fig. 1;
Fig. 5 is a view showing an example of thermal drying in a method for manufacturing the fuel cell electrode of the first embodiment;
Fig. 6A and Fig. 6B are graphs illustrating a relationship between void volume and density overvoltage in the fuel cell electrode of the first embodiment;
Fig. 7 is a view showing the cross-sectional structure of a fuel cell electrode according to a second embodiment of the invention;
Fig. 8A through Fig. 8H are views illustrating steps of a method for manufacturing the fuel cell electrode of the second embodiment shown in Fig. 7;
Fig. 9 is a view showing the cross-sectional structure of a fuel cell electrode according to a third embodiment of the invention;
Fig. 10A through Fig. 10I are views illustrating steps of a method for manufacturing the fuel cell electrode of the third embodiment shown in Fig. 9;
Fig. 11 is a view showing the cross-sectional structure of a fuel cell electrode according to a fourth embodiment of the invention;
Fig. 12A through Fig. 12G are views illustrating steps of a method for manufacturing the fuel cell electrode of the fourth embodiment shown in Fig. 11;
Fig. 13 is a view showing the cross-sectional structure of a fuel cell electrode according to a fifth embodiment of the invention;
Fig. 14A, Fig. 14B and Fig. 14C are views illustrating some steps of a method for manufacturing the fuel cell electrode of the fifth embodiment shown in Fig. 13;
Fig. 15 is a view showing the cross-sectional structure of a fuel cell electrode according to a sixth embodiment of the invention;
Fig. 16A through Fig. 16H are views illustrating steps of a first method for manufacturing the fuel cell electrode of the sixth embodiment shown in Fig. 15;
Fig. 17A and Fig. 17B are views illustrating some steps of a second method for manufacturing the fuel cell electrode of the sixth embodiment shown in Fig. 15;
Fig. 18 is an exploded perspective view of a fuel cell having a fuel cell electrode according to a seventh embodiment;
Fig. 19 is sectional view of an ion exchange film for the fuel cell shown in Fig. 18;

Fig. 20 is a perspective view of a forming apparatus for carrying out a first method for forming the ion exchange film for a fuel cell shown in Fig. 19;

Fig. 21 is a sectional view of the forming apparatus shown in Fig. 20;

Fig. 22A through Fig. 22J are views illustrating steps of the first method for forming an ion exchange film for a fuel cell;

Fig. 23 is a sectional view of a forming apparatus for carrying out a second method for forming the ion exchange film for a fuel cell shown in Fig. 19;

Fig. 24 is a perspective view of a forming apparatus for carrying out a third method for forming the ion exchange film for a fuel cell shown in Fig. 19;

Fig. 25 is a plan view of the forming apparatus shown in Fig. 24;

Fig. 26 is a sectional view of the forming apparatus shown in Fig. 24; Fig. 27A through Fig. 27J are views showing steps of the third method for forming the ion exchange film for a fuel cell shown in Fig. 19;

Fig. 28A and Fig. 28B are views comparing characteristics of the third method for forming the ion exchange film for a fuel cell with a comparison example;

Fig. 29 is a sectional view of an ion exchange film forming apparatus for carrying out a fourth method of forming an ion exchange film for a fuel cell;

Fig. 30 is an exploded perspective view of a fuel cell having an electrode of an eighth embodiment of the invention;

Fig. 31 is a sectional view showing an ion exchange film for the fuel cell shown in Fig. 30;

Fig. 32A through Fig. 32G are views illustrating steps of a method for forming the ion exchange film for a fuel cell shown in Fig. 31;

Fig. 33 is a schematic view of a fuel cell of related art;

Fig. 34 is a view showing the electrode structure of the fuel cell shown in Fig. 33;

Fig. 35A and Fig. 35B are views illustrating a method for forming an ion exchange film of the fuel cell electrode of related art shown in Fig. 33;

Fig. 36A and Fig. 36B are views illustrating another method for forming an ion exchange film of a fuel cell electrode of related art.

BEST MODE FOR CARRYING OUT THE INVENTION

A number of preferred embodiments of the invention will be described below on the basis of the accompanying drawings.

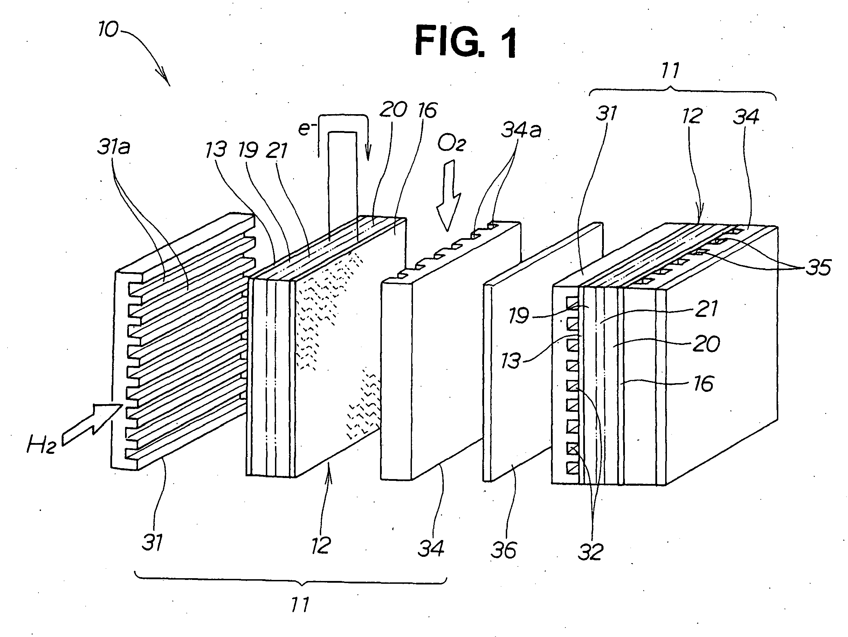

As shown in Fig. 1, a fuel cell unit 10 is made up of a plurality of (in the example shown in the figure, two) fuel cells 11, 11. A fuel cell 11 according to a first embodiment shown in Fig. 1 has a negative electrode side flow channel plate 31 disposed on the outer side of a negative electrode side diffusion layer (sheet) 13 of a fuel cell electrode (hereinafter called simply an electrode) 12, and a positive electrode side flow channel plate 34 disposed on the outer side of a positive electrode side diffusion layer 16 of the electrode 12.

By the negative electrode side flow channel plate 31 being stacked against the negative electrode side diffusion layer 13, multiple flow channels 31a formed in the negative electrode side flow channel plate 31 are covered by the negative electrode side diffusion layer 13, and multiple horizontal hydrogen gas flow passages 32 are thereby formed. By the positive electrode side flow channel plate 34 being stacked against the positive electrode side diffusion layer 16, multiple flow channels 34a formed in the positive electrode side flow channel plate 34 are covered by the positive electrode side diffusion layer 16, and multiple vertical oxygen gas flow passages 35 are thereby formed. The hydrogen gas flow passages 32 and the oxygen gas flow passages 35 are disposed so that they are at right angles.

The electrode 12 has a negative electrode layer 19 serving as one electrode layer and a positive electrode layer 20 serving as the other electrode layer on binder layers respectively on the inner sides of the negative electrode side diffusion layer 13 and the positive electrode side diffusion layer 16, and has an ion exchange film 21 interposed between the negative electrode layer 19 and the positive electrode layer 20.

By multiple fuel cells 11 constructed like this being stacked with separators 36 therebetween, the fuel cell unit 10 is constructed.

With this fuel cell unit 10, by hydrogen gas being supplied to the hydrogen gas flow passages 32, hydrogen molecules ($H_2$) are adsorbed onto a catalyst included in the negative electrode layer 19, and by oxygen gas being supplied to the oxygen gas flow passages 35, oxygen molecules ($O_2$) are adsorbed onto a catalyst included in the positive electrode layer 20. By this means, electrons (e-) can be made to flow as shown with arrows, so that a current is generated. In the generation of the current, product water ($H_2O$) is produced from the hydrogen molecules ($H_2$) and the oxygen molecules ($O_2$).

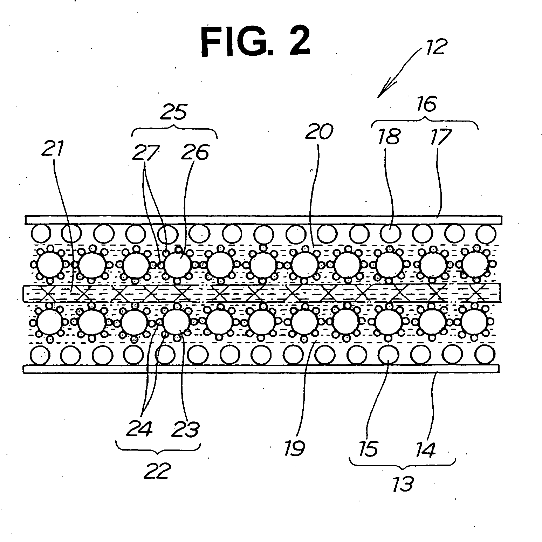

Fig. 2 shows the cross-sectional structure of the electrode 12 of the first embodiment shown in Fig. 1.

The electrode 12 of the first embodiment has the negative electrode layer 19 and the positive electrode layer 20 respectively on the inner sides of the negative electrode side diffusion layer 13 and the positive electrode side diffusion layer 16, and has an ion exchange film 21 between the negative electrode layer 19 and the positive electrode layer 20.

The negative electrode side diffusion layer 13 is a sheet made up of a negative electrode side carbon paper 14 and a negative electrode side binder layer 15.

The positive electrode side diffusion layer 16 is a sheet made up of a positive electrode side carbon paper 17 and a positive electrode side binder layer 18.

The binder of the negative electrode side binder layer 15 is a carbon-fluoro resin and is excellent in hydrophilicity. The binder of the positive electrode side binder layer 18 is a carbon polymer excellent in water repellency. As the carbon polymer, one made by introducing sulfonic acid into a polytetrafluoroethylene structure is suitable.

The negative electrode layer 19 is made by mixing a solution for making a negative electrode with a catalyst 22 and hardening the solution by drying it after it is applied. The catalyst 22 of the negative electrode layer 19 is one made by attaching a platinum-ruthenium alloy 24 as a catalyst to the surface of carbon 23, and hydrogen molecules ($H_2$) are adsorbed onto the platinum-ruthenium alloy 24.

The positive electrode layer 20 is made by mixing a solution for making a positive electrode with a catalyst 25 and hardening the solution by drying it after it is applied. The catalyst 25 of the positive electrode layer 20 is one made by attaching platinum 27 as a catalyst to the surface of carbon 26, and oxygen molecules ($O_2$) are adsorbed onto the platinum 27.

The ion exchange film 21 is formed by applying a solution between the negative electrode layer 19 and the positive electrode layer 20 and hardening it together with the negative electrode layer 19 and the positive electrode layer 20 by drying it together with the negative electrode solution and the positive electrode solution.

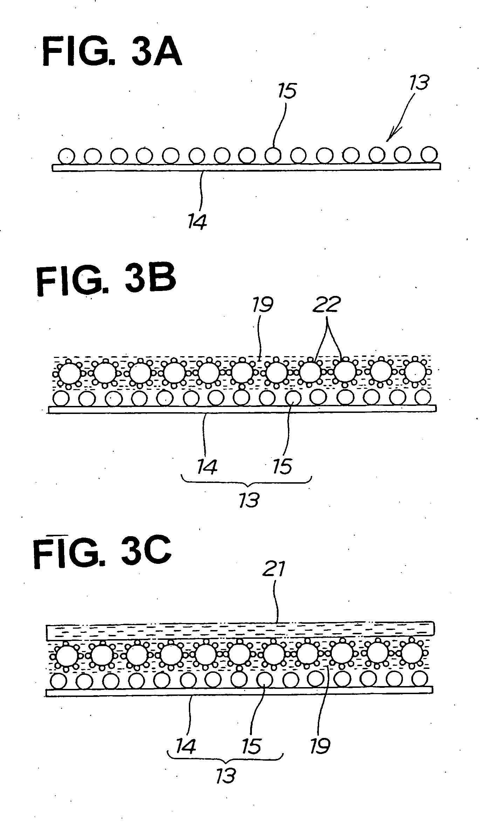

Next, a method of manufacturing the electrode 12 of the first embodiment of the invention will be described, on the basis of Fig. 3A through Fig. 3F.

In Fig. 3A, a sheet-form negative electrode side diffusion layer 13 is prepared by forming a binder layer 15 on a carbon paper 14.

In Fig. 3B, a solution for making a negative electrode is applied to the binder layer 15 to form the negative electrode layer 19.

In Fig. 3C, before the negative electrode layer 19 has dried, a solution for making the ion exchange film 21 is applied to the negative electrode layer 19 to form the ion exchange film 21.

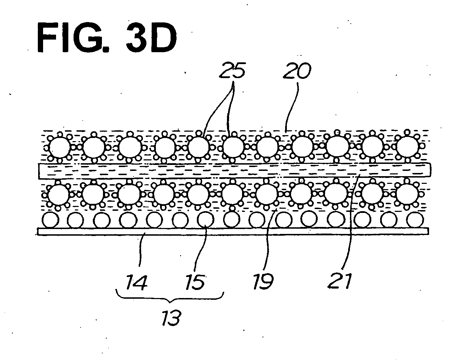

In Fig. 3D, before the ion exchange film 21 has dried, a solution for making the positive electrode layer 20 is applied to the ion exchange film 21 to form the positive electrode layer 20.

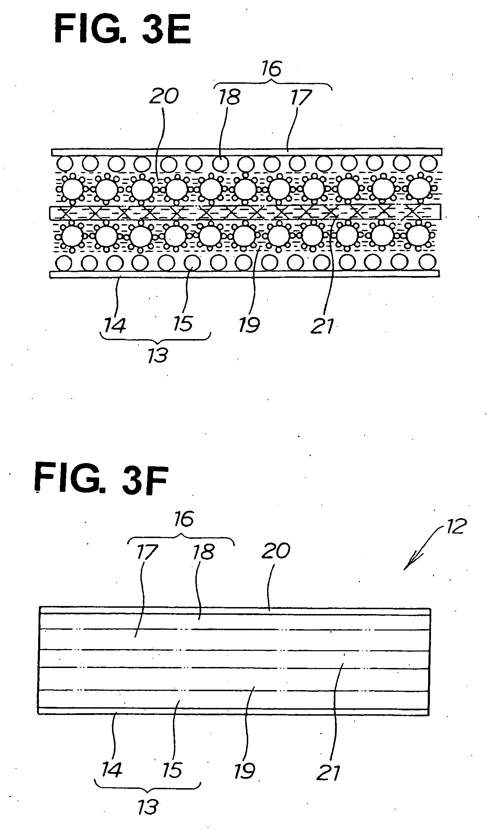

In Fig. 3E, before the positive electrode layer 20 has dried, the positive electrode side diffusion layer 16, made up of the positive electrode side carbon paper 17 and the positive electrode side binder layer 18, is formed on the positive electrode layer 20.

Next, before the negative electrode layer 19, the ion exchange film 21 and the positive electrode layer 20 have dried, without a load being applied to the layers 19 and 20 and the film 21, the layers 19 and 20 and the film 21 are dried together.

In Fig. 3F, by the negative electrode layer 19, the ion exchange film 21 and the positive electrode layer 20 being hardened, the negative electrode layer 19, the ion exchange film 21 and the positive electrode layer 20 are laminated in a hardened state.

Thus, with the manufacturing method of the electrode 12 of the first embodiment, by employing a solution for the ion exchange film 21 and applying the solution for making the negative electrode layer 19, the solution for making the ion exchange film 21 and the solution for making the positive electrode layer 20 in an undried state, the solutions adjacent at the respective interfaces can be mixed well. By this means it is possible to prevent the occurrence of areas of defective intimacy at the interface between the binder layer 15 and the negative electrode layer 19, the interface between the negative electrode layer 19 and the ion exchange film 21, the interface between the ion exchange film 21 and the positive electrode layer 20, and the interface between the positive electrode layer 20 and the positive electrode side binder layer 18, and the reaction efficiency of the electrode 12 can be kept good.

Also, the respective solutions are applied with the negative electrode layer 19, the ion exchange film 21 and the positive electrode layer 20 in an undried state, and the respective solutions are dried after application without any load being applied. As a result, in the hardening of the ion exchange film 21, it is not necessary for a load to be applied to the ion exchange film 21, and consequently the performance of the ion exchange film 21 can be prevented from dropping due to the influence of a load.

Also, because as a result of the ion exchange film 21 being made a solution the ion exchange film 21 can be handled in the form of a solution, it is not necessary for the thickness of the ion exchange film 21 to be regulated from the handling point of view. Consequently, the ion exchange film 21 can be made thin, and the electrode 12 can be made thin.

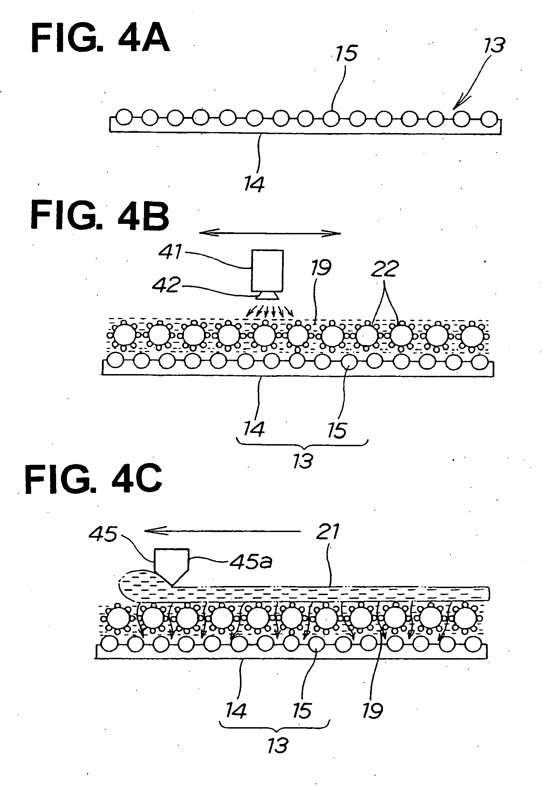

Next, a variation of the method of manufacturing a fuel cell electrode of the first embodiment will be described, on the basis of Fig. 4A through Fig. 4E. Parts the same as parts of the electrode of the first embodiment have been given the same reference numbers and a description thereof will be omitted.

In Fig. 4A, a sheet-form negative electrode side diffusion layer 13 is laid. That is, a carbon paper 14 of a negative electrode side diffusion layer 13 is set, and then a solution for making a binder layer 15 is applied to this carbon paper 14.

In Fig. 4B, before the binder layer 15 has dried, a solution for making a negative electrode layer 19 is sprayed in atomized form from a spray nozzle 42 while a sprayer 41 is moved across the upper face of the binder layer 15 as shown with an arrow, whereby the solution for making the negative electrode layer 19 is applied to the binder layer 15 and the negative electrode layer 19 is formed.

In the solution for making this negative electrode layer 19, a solvent having a higher vaporization temperature than the solvent used in the solution for making the ion exchange film 21 shown in Fig. 2 is used.

As an example here, an alcohol solvent is used in the solution for making the ion exchange film 21 to be applied to the negative electrode layer 19, and in the solution of the negative electrode layer 19 ethylene glycol or N-methyl-2-pyrolidone (NMP) with a higher vaporization temperature than the alcohol solvent is used as the solvent. The reason for using in the solution of the negative electrode layer 19 a solvent having a higher vaporization temperature than the solvent used in the solution for making the ion exchange film 21 will be discussed later.

In Fig. 4C, before the negative electrode layer 19 has dried, while a coater 45 is moved across the upper face of the negative electrode layer 19 as shown by the arrow, the solution for making the ion exchange film 21 is applied to the negative electrode layer 19 to form the ion exchange film 21. Specifically, a blade 45a of the coater 45 is disposed a predetermined spacing away from the upper face of the negative electrode layer 19 and parallel with the upper face, and while this blade 45a is moved across the upper face of the negative electrode layer 19 as shown by the arrow the solution for making the ion exchange film 21 is leveled to a fixed thickness to form the ion exchange film 21.

By employing a solution for the ion exchange film 21 and applying the solution for making the ion exchange film 21 to the negative electrode layer 19 before the negative electrode layer 19 has dried, the solutions at the interface of the negative electrode layer 19 and the ion exchange film 21 can be mixed effectively.

As a result of the solution for making the ion exchange film 21 being applied to the negative electrode layer 19, the solution for making the ion exchange film 21 flows downward under the influence of gravity as shown by the arrow and permeates the negative electrode layer 19. There is a risk of the voids of the negative electrode layer 19 being diminished by this, but even if the voids of the negative electrode layer 19 diminish somewhat, there is no effect on the performance of the fuel cell.

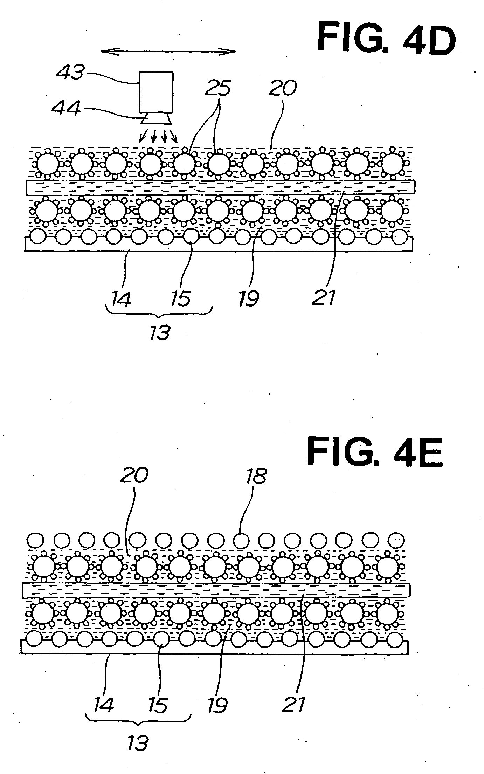

In Fig. 4D, before the ion exchange film 21 has dried, by a solution for making the positive electrode layer 20 being sprayed in an atomized state from a spray nozzle 44 as a sprayer 43 is moved across the upper face of the ion exchange film 21 as shown with an arrow, the solution for making the positive electrode layer 20 is applied to the ion exchange film 21 to form the positive electrode layer 20.

The reason for using the sprayer 43 to apply the solution for making the positive electrode layer 20 to the upper face of the ion exchange film 21 will be discussed later.

In the solution of the positive electrode layer 20, as in the solution of the negative electrode layer 19, a solvent having a higher vaporization temperature than the alcohol solvent used in the solution for making the ion exchange film 21 is used. As an example, in the solution of the positive electrode layer 20 ethylene glycol or N-methyl-2-pyrolidone (NMP) with a higher vaporization temperature than the alcohol solvent is used as the solvent. The reason for using in the solution of the positive electrode layer 20 a solvent having a higher vaporization temperature than the solvent used in the solution for making the ion exchange film 21 will be discussed later.

In Fig. 4E, before the positive electrode layer 20 has dried, a solution for making the binder layer 18 of the positive electrode side diffusion layer 16 (see Fig. 2) is applied to the positive electrode layer 20 to form the binder layer 18.

Next, in the same way as in Fig. 3E, by a positive electrode side carbon paper 17 being placed on the binder layer 18, a sheet-form positive electrode side diffusion layer 16 is formed with the binder layer 18 and the carbon paper 17. After that, before the binder layer 15, the negative electrode layer 19, the ion exchange film 21, the positive electrode layer 20 and the binder layer 18 have dried, without a load being applied to the layers 15, 19, 20 and 18 and the film 21, the layers 15, 19, 20 and 18 and the film 21 are dried together.

Finally, in the same way as in Fig. 3F, by the binder layer 15, the negative electrode layer 19, the ion exchange film 21, the positive electrode layer 20 and the binder layer 18 being hardened, the binder layer 15, the negative electrode layer 19, the ion exchange film 21, the positive electrode layer 20 and the binder layer 18 are laminated integrally in a hardened state. A fuel cell electrode 12 is thus obtained.

In this way, in the first embodiment and its variation, the positive electrode layer 20 is provided on the ion exchange film 21. By this means, the solution for making the ion exchange film 21 can be prevented from permeating the positive electrode layer 20, and diminishing of the voids of the positive electrode layer 20 by the solution for making the ion exchange film 21 can be prevented. As a result, product water produced by electricity generation can be guided through the voids of the positive electrode layer 20 to the positive electrode side diffusion layer 16 and drained well through the positive electrode side diffusion layer 16, and consequently the density overvoltage arising in the fuel cell can be kept low.

Also, with the manufacturing method of the variation, in the forming of the positive electrode layer 20, by the solution for making the positive electrode layer 20 being applied by spraying, it is applied without excess application pressure being exerted on the ion exchange film 21 or the positive electrode layer 20, that is, the solution for making the positive electrode 20 can be applied with a minimal application pressure. That is, by applying the solution for making the positive electrode 20 without exerting excess application pressure on the ion exchange film 21 or the positive electrode layer 20, it is possible to prevent the solution for making the ion exchange film 21 from permeating the positive electrode layer 20. Therefore, the voids of the positive electrode layer 20 are prevented from being diminished by the solution for making the ion exchange film 21, and the voids of the positive electrode layer 20 can be secured much better. By this means it is possible to guide product water produced by electricity generation from the positive electrode layer 20 to the positive electrode diffusion layer 16 and drain it through voids in the positive electrode side diffusion layer 16 much better, and density overvoltage arising in the fuel cell can be kept low.

Although in the variation the solution for making the positive electrode layer 20 was applied to the ion exchange film 21 using a sprayer 43, the application of the solution for making the positive electrode layer 20 is not limited to the sprayer 43, and it is also possible to employ the ink jet method. In short, any method by which the solution for making the positive electrode layer 20 can be applied in spray form may be used.

Here, a sprayer applies the solution in the form of a spray, and an ink jet applies the solution in shots. With a sprayer the spray scope can be made relatively large to shorten the application time, but a masking process is necessary to obtain unsprayed parts. Generally, recovering solution landing on masked parts is difficult.

On the other hand, with an ink jet, because it is possible to focus the application scope exactly, there is no need for the non-application areas to be masked, and the solution can be used efficiently. However, because the application scope is narrow, compared to a sprayer the application speed is poorer.

Also, although in the variation an example was described wherein the solution for making the negative electrode layer 19 was applied to the binder layer 15 using a sprayer 41, the solution for making the negative electrode layer 19 can also be applied by other applying means.

Also, whereas in this variation an example was described wherein the solution for making the ion exchange film 21 was applied to the negative electrode layer 19 using a coater 45, the solution for making the ion exchange film 21 can also be applied by other applying means.

Additionally, with the manufacturing method of the fuel cell electrode 12, the solution for making the ion exchange film 21 can be prevented from permeating the negative electrode layer 19 and the positive electrode layer 20 and blocking the voids of the negative electrode layer 19 and the positive electrode layer 20. Because consequently product water produced by the electricity generation of the fuel cell can be guided through the voids in the negative and positive electrode layers 19, 20 (and particularly the positive electrode layer 20) to the positive electrode side diffusion layer 16 (the carbon paper 17 and the binder layer 18) and drained well to outside through the voids in the positive electrode side diffusion layer 16, the density overvoltage arising in the fuel cell can be kept low.

Also, by solvents with a higher vaporization temperature than the solvent used in the solution for making the ion exchange film 21 being used in the solution for the negative electrode layer 19 and the solution for the positive electrode layer 20, the ion exchange film 21 can be dried surely, preferentially to the negative electrode layer 19 and the positive electrode layer 20. Therefore, permeation of the solution for making the ion exchange film 21 into the negative electrode layer 19 and the positive electrode layer 20 can be much more effectively suppressed, and the solution for making the ion exchange film 21 can be prevented from permeating the negative electrode layer 19 and the positive electrode layer 20 and blocking the voids of the negative electrode layer 19 and the positive electrode layer 20.

Although in the first embodiment and the variation thereof examples where described wherein, in the manufacture of the fuel cell electrode 12, the negative electrode layer 19 was disposed below and the positive electrode layer 20 was disposed above, the invention is not limited to this, and alternatively the positive electrode layer 20 can be disposed below and the negative electrode layer 19 disposed above.

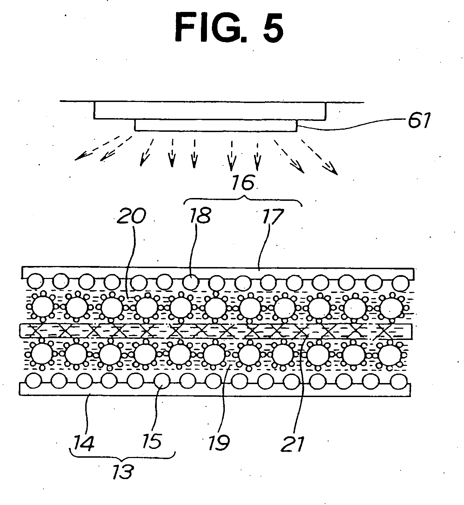

Next, an example wherein when the layers are dried they are dried by being heated artificially as shown in Fig. 5 will be described.

That is, before the negative electrode layer 19, the ion exchange film 21 and the positive electrode layer 20 have dried, without a load being applied to the negative electrode layer 19, the ion exchange film 21 and the positive electrode layer 20, they are dried together by being heated from inside with a far infrared radiation drying apparatus (electromagnetic wave heating apparatus) 61. The far infrared radiation drying apparatus 61 is a heating apparatus which uses far infrared radiation, meaning infrared radiation of long wavelength among electromagnetic waves in the infrared range, of a wavelength range of about 50 to $1000\mu$m in wavelength.

Because this far infrared radiation drying apparatus 61 can heat the inside of a body efficiently, by drying the negative electrode layer 19, the ion exchange film 21 and the positive electrode layer 20 all together with the far infrared radiation drying apparatus 61, it is possible to dry the whole of the ion exchange film 21 rapidly from its interior to its surfaces. By this means it is possible to suppress permeation of the solution for making the ion exchange film 21 into the negative electrode layer 19 and the positive electrode layer 20, and therefore the solution for making the ion exchange film 21 can be prevented from blocking the voids of the negative electrode layer 19 and the positive electrode layer 20.

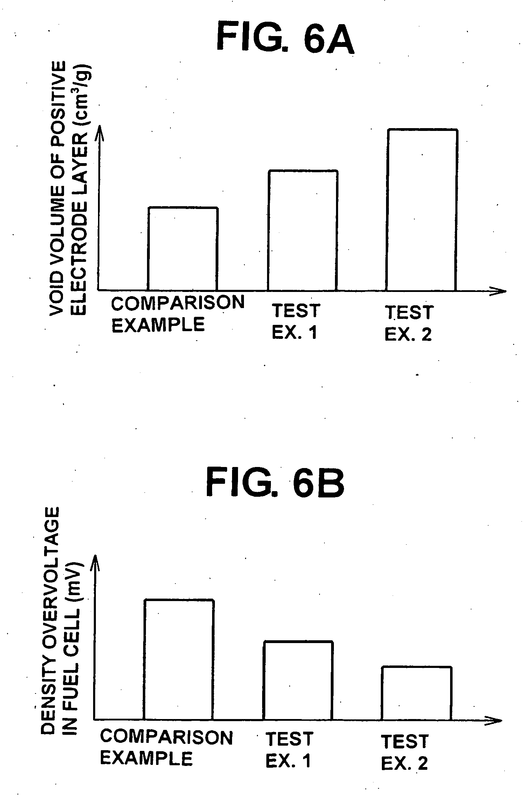

Fig. 6A and Fig. 6B are graphs illustrating the relationship between void volume and density overvoltage in a fuel cell electrode according to the invention.

In the graphs, Test Example 1 is an example wherein an alcohol solvent is used in the solution for making the ion exchange film 21 and ethylene glycol or N-methyl-2-pyloridone (NMP) with a higher vaporization temperature than the alcohol solvent is used as the solvent in the solution of the positive electrode layer 20. In Test Example 1, an ordinary hot air drying apparatus was used for the drying of the negative electrode layer 19, the ion exchange film 21 and the positive electrode layer 20. That is, in Test Example 1, a part of the implementation described above (the ethylene glycol or N-methyl-2-pyloridone (NMP)) was employed.

In Test Example 2, the ethylene glycol or N-methyl-2-pyloridone (NMP) constituting the solvent of Test Example 1 was employed, and also a far infrared radiation drying apparatus 61 was used for the drying of the negative electrode layer 19, the ion exchange film 21 and the positive electrode layer 20.

In the comparison example, the ethylene glycol or N-methyl-2-pyloridone (NMP) constituting the solvent of Test Examples 1 and 2 was not employed, and the far infrared radiation drying apparatus of Test Example 2 was not used either, and an ordinary hot air drying apparatus was used.

In the graph of Fig. 6A, the comparison example has the smallest void volume of the positive electrode layer 20, in Test Example 1 a larger void volume of the positive electrode layer 20 than in the comparison example has been obtained, and in Test Example 2 a larger void volume of the positive electrode layer 20 than in Test Example 1 has been obtained. That is, Test Example 2 has the largest void rate of the positive electrode layer 20.

In the graph of Fig. 6B, because the comparison example has the smallest void volume of the positive electrode layer 20, it has the largest density overvoltage of the fuel cell and the largest voltage drop of the fuel cell.

Because Test Example 1 has a larger void volume of the positive electrode layer 20, the density overvoltage of the fuel cell is smaller than in the comparison example, and the voltage drop of the fuel cell is also smaller than in the comparison example.

Because Test Example 2 has a larger void volume of the positive electrode layer 20 than Test Example 1, the density overvoltage of the fuel cell is smaller than in Test Example 1, and the voltage drop of the fuel cell is kept to a minimum.

Thus, it can be seen that, by using an alcohol solvent in the solution for making the ion exchange film 21 and using in the solution of the positive electrode layer 20 ethylene glycol or N-methyl-2-pyloridone (NMP) with a higher vaporization temperature than the alcohol solvent, as in Test Example 1, it is possible to suppress the voltage drop of the fuel cell relatively well.

Also, it can be seen that by employing the ethylene glycol or N-methyl-2-pyloridone (NMP) constituting the solvent of Test Example 1 and also drying the negative electrode layer 19, the ion exchange film 21 and the positive electrode layer 20 with a far infrared radiation drying apparatus 61, as in Test Example 2, it is possible to keep the voltage drop of the fuel cell to a minimum with the most effectiveness.

Although in the first embodiment an example was described wherein the negative electrode layer 19 was disposed below and the positive electrode layer 20 was disposed above, the same effects can also be obtained by disposing the negative electrode layer 19 above and disposing the positive electrode layer 20 below.

And, in the embodiment using the far infrared radiation drying apparatus 61, instead of the far infrared radiation drying apparatus 61, for example a microwave drying apparatus can be used. A microwave drying apparatus is a heating apparatus which uses microwaves in the wavelength range of about $1\times10^4$ to $30\times10^4\mu$m in wavelength.

Also, there being no restriction to a far infrared radiation drying apparatus 61 or microwaves, the same effects can be obtained by using heating means using electromagnetic waves of wavelength 50 to $30\times10^4\mu$m.

In the example wherein the ion exchange film 21 is heated and dried with just the far infrared radiation drying apparatus 61 (electromagnetic wave drying apparatus), the far infrared radiation drying apparatus 61 and a hot air drying apparatus can be used in combination.

Although in the first embodiment an example was described wherein an alcohol solvent was used in the solution for making the ion exchange film 21 and ethylene glycol or N-methyl-2-pyloridone (NMP) with a higher vaporization temperature than the alcohol solvent was used as the solvent for the solutions of both the negative electrode layer 19 and the positive electrode layer 20, there is no restriction to this, and the same effects can also be obtained by using ethylene glycol or N-methyl-2-pyloridone (NMP) with a higher vaporization temperature than the alcohol solvent as the solvent in the solution of the positive electrode layer 20 only. The reason for this is that when the fuel cell is used to generate current, because the product water produced drains to outside the fuel cell through the positive electrode side diffusion layer (carbon paper), the product water can be drained to outside the fuel cell as long as voids in the positive electrode layer 20 are secured.

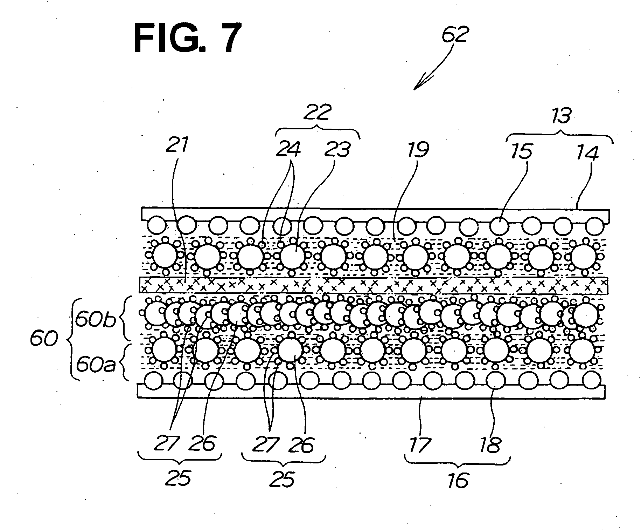

Next, a fuel cell electrode of a second embodiment, wherein the positive electrode layer is made up of two layers, will be described, on the basis of Fig. 7. Parts the same as parts shown in the first embodiment have been given the same reference numbers.

The fuel cell electrode 62 of this embodiment has a negative electrode layer 19 and a positive electrode layer 60 on the inner sides of a negative electrode side diffusion layer 13 and a positive electrode side diffusion layer 16 respectively, and has an ion exchange film 21 between the negative electrode layer 19 and the positive electrode layer 60.

The negative electrode side diffusion layer 13 is a sheet made up of a negative electrode side carbon paper 14 and a negative electrode side binder layer 15. The positive electrode side diffusion layer 16 is a sheet made up of a positive electrode side carbon paper 17 and a positive electrode side binder layer 18.

The binder constituting the negative electrode side binder layer 15 is a very hydrophilic carbon fluoropolymer. The binder constituting the positive electrode side binder layer 18 is a carbon polymer excellent in water repellency. A carbon polymer made by introducing sulfonic acid into a polytetrafluoroethylene matrix is suitable.

The negative electrode layer 19 is made by mixing a catalyst 22 with a solution for making a negative electrode and hardening the solution by drying it after it is applied. The catalyst 22 of the negative electrode layer 19 is one made by attaching a platinum-ruthenium alloy 24 as a catalyst to the surface of carbon 23, and hydrogen molecules ($H_2$) are adsorbed onto the platinum-ruthenium alloy 24.

The positive electrode layer 60 is divided into a first layer 60a on the side away from the ion exchange film 21 (i.e. the side in contact with the positive electrode side diffusion layer 16) and a second layer 60b on the side in contact with the ion exchange film 21, and when porosity is defined by the following equation (1), the second layer 60b has a lower porosity than the first layer 60a.

$$\text{POROSITY} = (1 - \text{BULK S. G.} / \text{TRUE S. G.}) \times 100 \qquad (1)$$

Here, true specific gravity refers to the specific gravity of the material when it has no voids or pores inside it. Bulk specific gravity refers to the specific gravity of the material including voids and pores assuming it has a uniform density distribution.

The first layer 60a is made by mixing a catalyst 25 with a solution for making the first layer 60a and hardening the solution by drying it after it is applied.

The catalyst 25 of the first layer 60a is one made by attaching platinum 27 as a catalyst to the surface of carbon 26, and oxygen molecules ($O_2$) are adsorbed onto this platinum 27.

The second layer 60b, like the first layer 60a, is made by mixing a catalyst 25 with a solution for making the second layer 60b and hardening the solution by drying it after it is applied. The catalyst 25 of the second layer 60b is one made by attaching platinum 27 as a catalyst to the surface of carbon 26, and oxygen molecules ($O_2$) are adsorbed onto this platinum 27.

In this second layer 60b the catalyst 25 is disposed more densely compared to the catalyst 25 in the first layer 60a, to make the porosity of the second layer 60b smaller than that of the first layer 60a. Specifically, the porosity of the second layer 60b is 70 to 75% and the porosity of the first layer 60a is 76 to 85%.

Here, the reasons for setting the porosity of the second layer 60b to 70 to 75% will be explained.

When the porosity of the second layer 60b is less than 70%, there is a risk of the porosity being too low and the solution for making the ion exchange film 21 not permeating into the second layer 60b in a suitable amount. In this case, it is difficult for the intimacy between the ion exchange film 21 and the second layer 60b to be kept good. To avoid this, the porosity of the second layer 60b is set to at least 70% to keep the intimacy between the ion exchange film 21 and the second layer 60b good.

When the porosity of the second layer 60b exceeds 75%, there is a risk of the solution for making the ion exchange film 21 permeating the second layer 60b excessively due to the porosity being too high. In this case, the pores in the first electrode layer 60 are diminished by the solution for making the ion exchange film 21, and the product water produced by electricity generation cannot be drained well through the pores in the first electrode layer 60. To avoid this, the porosity of the second layer 60b is set to below 75% so that product water can be drained well.

Next, the reasons for setting the porosity of the first layer 60a to 76 to 85% will be explained.

When the porosity of the first layer 60a is made less than 76%, the porosity is too low and it is difficult for product water to be efficiently drained. To avoid this, the porosity of the first layer 60a is set to at least 76% so that product water can be drained well.

When the porosity of the first layer 60a exceeds 85%, there is a risk of the retention of product water falling due to the porosity being too high and of the first layer 60a consequently drying and the conduction of ions being hindered. Consequently, there is a risk of resistance overvoltage becoming high and it not being possible for current to be generated efficiently. To avoid this, the porosity of the first layer 60a is set to below 85% to suppress resistance overvoltage and make it possible for current to be generated efficiently.

The ion exchange film 21 is formed by applying a solution between the positive electrode layer 60 (specifically, the second layer 60b) and the negative electrode layer 19 and hardening it together with the negative electrode layer 19 and the positive electrode layer 60 by drying it together with the negative electrode layer 19 and the positive electrode layer 60.

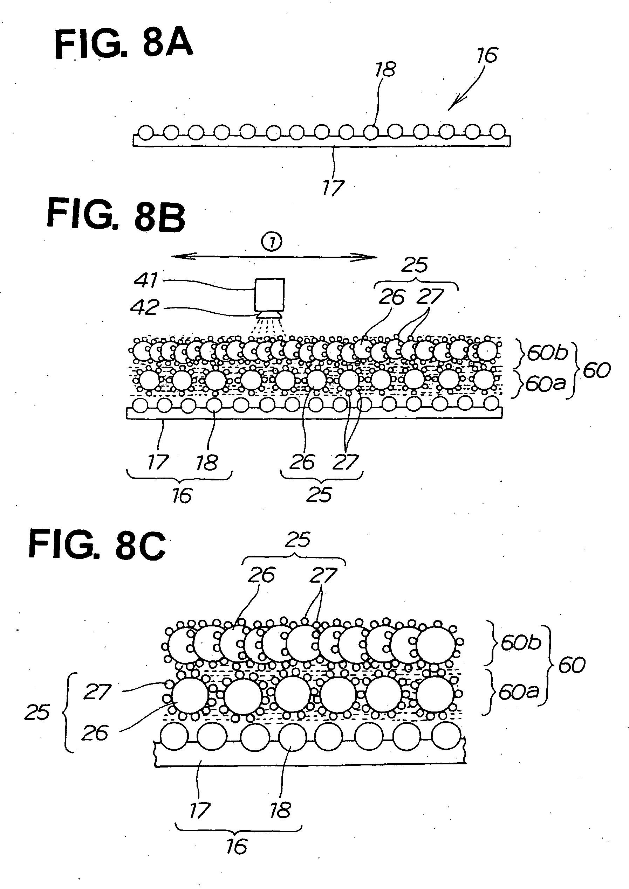

Next, a method of manufacturing the fuel cell electrode 12 of the second embodiment shown in Fig. 7 will be described, on the basis of Fig. 8A through Fig. 8H.

In Fig. 8A, the sheet-form positive electrode side diffusion layer 16 is laid. That is, the carbon paper 17 of the positive electrode side diffusion layer 16 is set and then a solution for making the binder layer 18 is applied to this carbon paper 17.

In Fig. 8B, before the binder layer 18 has dried, a sprayer 41 is moved over the binder layer 18 as shown by the arrow [1], and a solution for forming the first layer 60a of the positive electrode layer 60 is applied to the binder layer 18 through a spray nozzle 42. By this means, the first layer 60a is formed on the binder layer 18

Here, when porosity is defined with the above equation (1), the porosity of the first layer 60a is made 76 to 85%.

Before the first layer 60a has dried, the sprayer 41 is moved over the first layer 60a as shown by the arrow [1] again and a solution for making the second layer 60b of the positive electrode layer 60 is applied to the first layer 60a through the spray nozzle 42. By this means, the second layer 60b is formed on the first layer 60a.

As the solution of the second layer 60b, the same solution as the solution of the first layer 60a is used, and the spray pressure, that is, atomization pressure (atomization energy), of the solution for making the second layer 60b is set higher than the spray pressure, that is, atomization pressure (atomization energy), of the solution for making the first layer 60a. Specifically, when porosity is defined by the above equation (1), the porosity of the second layer 60b is made 70 to 75%. As a result of the atomization pressure of the solution for making the second layer 60b being set high, the spraying speed of the solution also rises.

By the solution for making the second layer 60b being applied with a higher atomization energy than the solution for making the first layer 60a like this, the density of the second layer 60b can be made higher than the density of the first layer 60a and the porosity of the second layer 60b can be made lower than the porosity of the first layer 60a.

Although in the electrode manufacturing method of the second embodiment an example was described in which the solution for making the first layer 60a and the solution for making the second layer 60b were both applied in the form of a spray with the same sprayer 41, there is no restriction to this, and it is also possible to apply the solutions using respective different sprayers for the solution for making the first layer 60a and the solution for making the second layer 60b, and making the respective spray pressures (atomization pressures) different.

Also, as the means for setting the atomization energy of the solution for making the second layer 60b higher than the atomization energy of the solution for making the first layer 60a, instead of the atomization pressure, alternatively the atomization energy can be raised by bringing the spray nozzle 42 of the sprayer 41 closer to the application surface.

In Fig. 8C, by the atomization pressure of the solution for making the second layer 60b being set higher than the atomization pressure of the solution for making the first layer 60a, the catalyst 25 of the second layer 60b can be disposed more densely than the catalyst 25 of the first layer 60a. By this means, when porosity is defined with the above equation (1), the second layer 60b can be formed to a lower density than the first layer 60a.

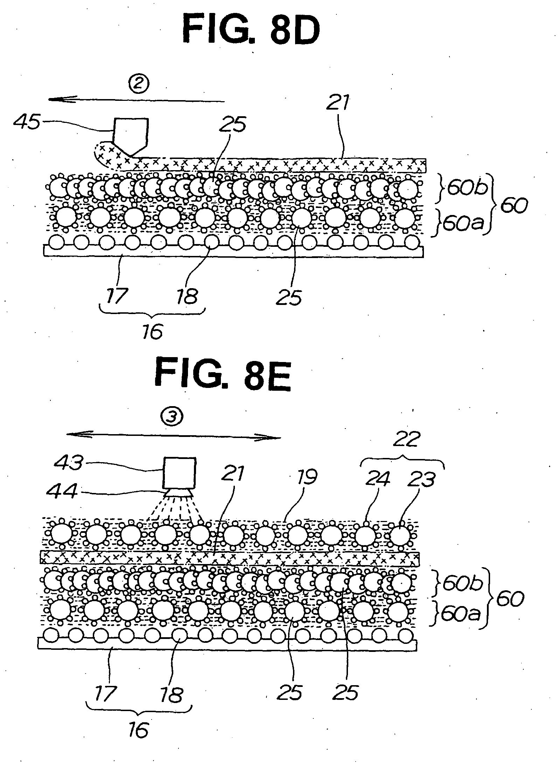

In Fig. 8D, before the second layer 60b of the positive electrode layer 60 has dried, a coater 45 is moved over the second layer 60b as shown by the arrow [2], and a solution for making the ion exchange film 21 is applied to the second layer 60b to form the ion exchange film 21.

Here, because as mentioned above the porosity of the second layer 60b has been set lower than the porosity of the first layer 60a, permeation of the solution of the ion exchange film 21 into the second layer 60b is suppressed. By this means, the pores of the positive electrode layer 60 are prevented from being diminished by the solution for making the ion exchange film 21.

Here, the porosity of the second layer 60b is set to at least 70% so that the intimacy of the ion exchange film 21 and the second layer 60b is kept good. The porosity of the second layer 60b is set to below 75% to provide pores which can drain product water well.

Also, the porosity of the first layer 60a is set to at least 76% to provide pores for draining product water well, and the porosity of the first layer 60a is set to below 85% to suppress resistance overvoltage and make it possible for current to be generated efficiently.

In Fig. 8E, before the ion exchange film 21 has dried, the sprayer 43 is moved over the ion exchange film 21 as shown by the arrow [3], and the solution for making the negative electrode layer 19 is applied to the ion exchange film 21 through the spray nozzle 44. By this means, the negative electrode layer 19 is formed on the ion exchange film 21.

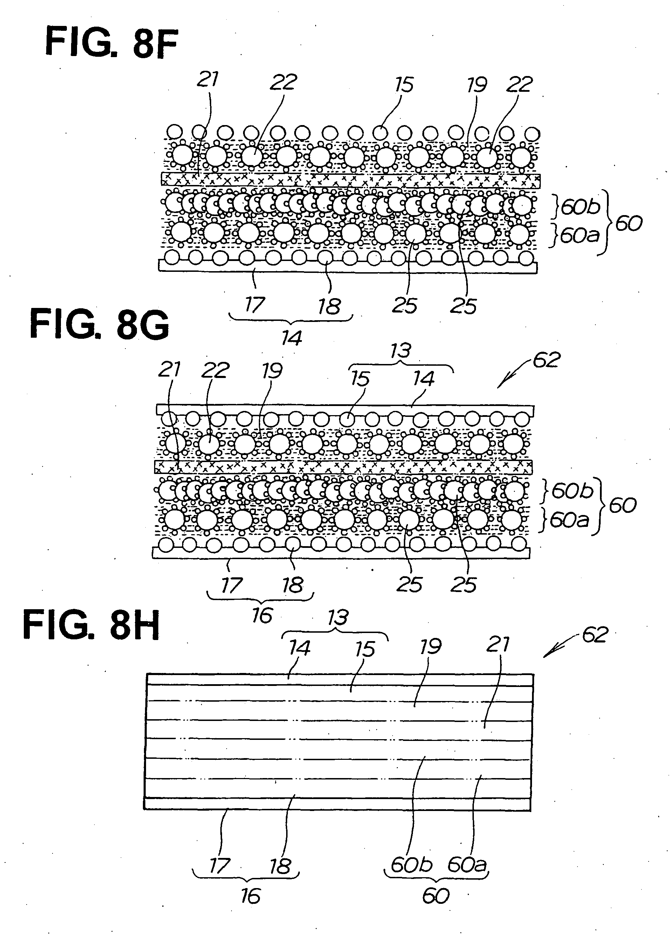

In Fig. 8F, before the negative electrode layer 19 has dried, a solution of the binder layer 15 of the negative electrode side diffusion layer 13 (see Fig. 7) is applied to the negative electrode layer 19.

In Fig. 8G, a negative electrode side carbon paper 14 is placed on the binder layer 15, so that the binder layer 15 and the carbon paper 14 form a sheet-form negative electrode side diffusion layer 13.

Next, before the binder layer 18, the positive electrode layer 60, the ion exchange film 21, the negative electrode layer 19 and the binder layer 15 have dried, without a load being applied to the binder layer 18, the positive electrode layer 60, the ion exchange film 21, the negative electrode layer 19 and the binder layer 15, the binder layer 18, the positive electrode layer 60, the ion exchange film 21, the negative electrode layer 19 and the binder layer 15 are dried together.

In Fig. 8H, by the binder layer 18, the positive electrode layer 60, the ion exchange film 21, the negative electrode layer 19 and the binder layer 15 being hardened, the binder layer 18, the positive electrode layer 60, the ion exchange film 21, the negative electrode layer 19 and the binder layer 15 are laminated integrally in a hardened state. With this, the manufacturing process of the fuel cell electrode 62 shown in Fig. 7 is finished.

Thus, with the method for manufacturing the fuel cell electrode 62 of the second embodiment, by the solutions being applied to the respective upper faces with the binder layer 18, the positive electrode layer 60, the ion exchange film 21, the negative electrode layer 19 and the binder layer 15 in an undried state, the solutions adjacent at the respective interfaces can be made to mix well.

By this means it is possible to prevent areas of defective intimacy arising at the interface between the binder layer 18 and the positive electrode layer 60 (the first layer 60a and the second layer 60b). Also, it is possible to prevent areas of defective intimacy arising at the interface between the positive electrode layer 60 and the ion exchange film 21. And also, it is possible to prevent areas of defective intimacy arising at the interface between the ion exchange film 21 and the negative electrode layer 19. Additionally, it is possible to prevent areas of defective intimacy arising at the interface between the negative electrode layer 19 and the binder layer 15. By this means it is possible to keep the reaction efficiency in the fuel cell electrode 62 good.

Additionally, as a result of the ion exchange film 21 being made a solution, because the ion exchange film 21 can be handled in the form of a solution, it is not necessary for the thickness of the ion exchange film 21 to be restricted from the point of view of handlability. Consequently, the ion exchange film 21 can be made thin, and the fuel cell electrode 62 can be made thin.

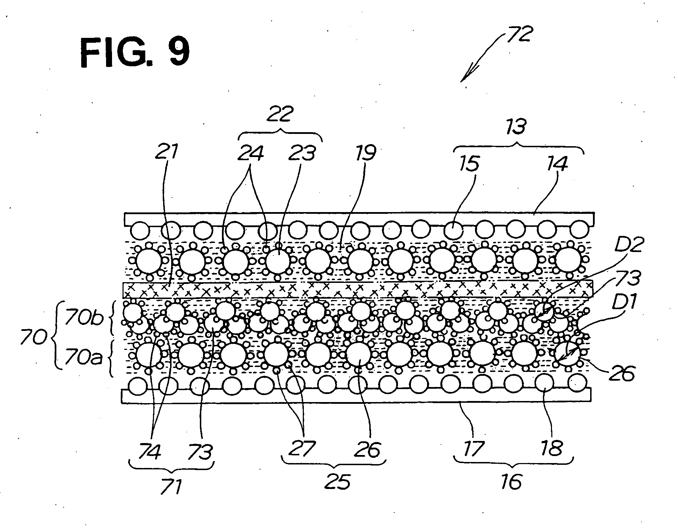

Next, a fuel cell electrode of a third embodiment will be described, on the basis of Fig. 9. Parts the same as in the fuel cell electrode of the second embodiment shown in Fig. 7 have been given the same reference numerals and will not be described again.

The fuel cell electrode 72 of the third embodiment has a positive electrode layer 70 (a first electrode layer) and a negative electrode layer 19 (a second electrode layer) respectively on the inner sides of a positive electrode side diffusion layer 16 and a negative electrode side diffusion layer 13, and has an ion exchange film 21 between the negative electrode layer 19 and the positive electrode layer 70. That is, only the positive electrode layer 70 of the fuel cell electrode 72 of the third embodiment is different compared to the fuel cell electrode 62 of the second embodiment, and the rest of its construction is the same as the second embodiment. The positive electrode layer 70 will be described below.

The positive electrode layer 70 is divided into a first layer 70a on the side away from the ion exchange film 21 (i.e. the side in contact with the positive electrode side diffusion layer 16) and a second layer 70b on the side in contact with the ion exchange film 21, and when porosity is defined by the following equation (1), the second layer 70b has a lower porosity than the first layer 70a.

$$\text{POROSITY} = (1 - \text{BULK S. G.} / \text{TRUE S. G.}) \times 100 \qquad (1)$$

The first layer 70a, like the first layer 60a of the second embodiment shown in Fig. 7, is made by mixing a catalyst 25 with a solution for making the first layer 70a and hardening the solution by drying it after it is applied. The catalyst 25 of the first layer 70a is one made by attaching platinum 27 as a catalyst to the surface of carbon 26, and oxygen molecules ($O_2$) are adsorbed onto this platinum 27. The particle size of this carbon 26 is D1.

The second layer 70b is made by mixing a catalyst 71 with a solution for making the second layer 70b and hardening the solution by drying it after it is applied. The catalyst 71 of the second layer 70b is one made by attaching platinum 74 as a catalyst to the surface of carbon 73, and oxygen molecules ($O_2$) are adsorbed onto this platinum 74. The particle size of this carbon (electrode) 73 is $D_2$. This particle size $D_2$ is smaller than the particle size D1 of the carbon 26 of the first layer 70a.

By the particle size D2 of the carbon 73 of the second layer 70b being set smaller than the particle size D1 of the carbon 26 of the first layer 70a like this, compared to the carbon 26 of the first layer 70a, the carbon 73 of the second layer 70b can be disposed more densely. By this means, the porosity of the second layer 70b can be made lower than that of the first layer 70a. Specifically, the porosity of the second layer 70b is made 70 to 75% and the porosity of the first layer 70a is made 76 to 85%.

The reasons for the porosity of the second layer 70b being made 70 to 75% and the porosity of the first layer 70a being made 76 to 85% are the same as the reasons for the porosity of the second layer 60b of the second embodiment described with reference to Fig. 7 being made 70 to 75% and the porosity of the first layer 60a being made 76 to 85%, and will not be explained again here.

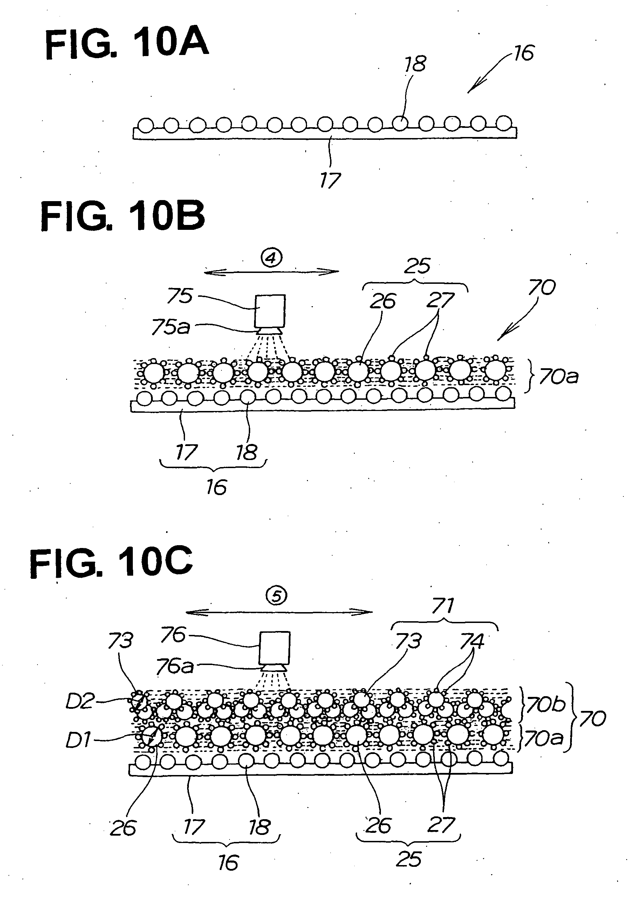

Next, a method of manufacturing the fuel cell electrode 72 of the third embodiment shown in Fig. 9 will be described, on the basis of Fig. 10A through Fig. 10I.

In Fig. 10A, the sheet-form positive electrode side diffusion layer 16 is laid. That is, the carbon paper 17 of the positive electrode side diffusion layer 16 is set, and a solution for making the binder layer 18 is applied to this carbon paper 17.

In Fig. 10B, before the binder layer 18 has dried, a sprayer 75 is moved over the binder layer 18 as shown by the arrow [4], and a solution for making the first layer 70a of the positive electrode layer 70 is applied to the binder layer 18 through a spray nozzle 75a. By this means, the first layer 70a is formed on the binder layer 18.

Here, when porosity is defined by the foregoing equation (1), the porosity of the first layer 70a is made 76 to 85%.

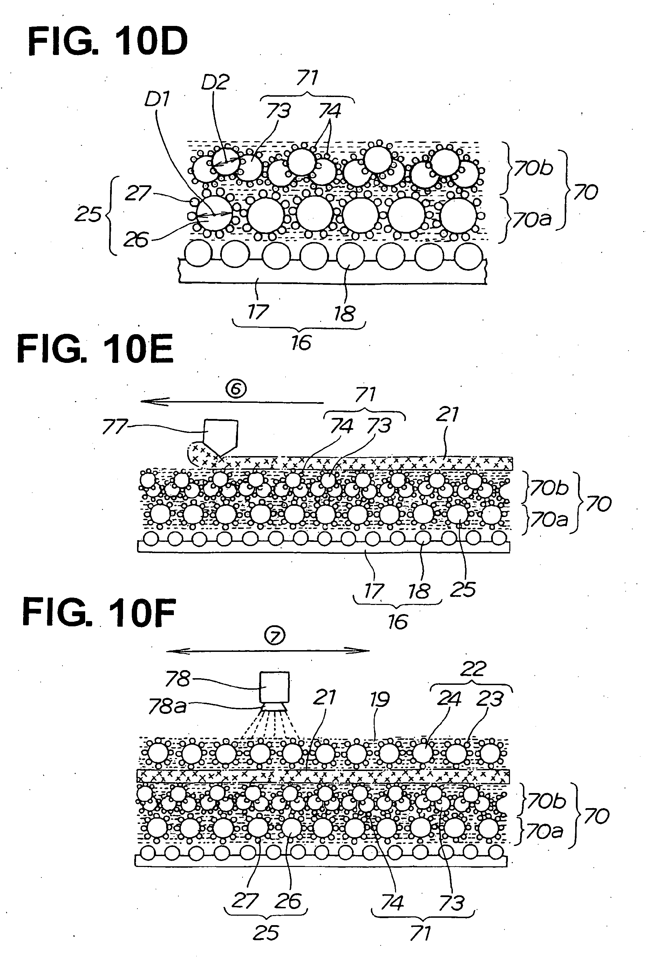

In Fig. 10C and Fig. 10D, before the first layer 70a has dried, a sprayer 76 is moved over the first layer 70a in the direction of the arrow [5], and a solution for making the second layer 70b of the positive electrode layer 70 is applied through a spray nozzle 76a. By this means, the second layer 70b is formed on the first layer 70a. Here, by the particle diameter D2 of the carbon 73 being set smaller than the particle diameter D1 of the carbon 26 of the first layer 70a, the carbon 73 of the second layer 70b can be disposed more densely compared to the carbon 26 of the solution of the first layer 70a. By this means it is possible to make the porosity of the second layer 70b smaller than that of the first layer 70a. That is, the catalyst 71 of the second layer 70b can be disposed more densely than the catalyst 25 of the first layer 70a. Specifically, when porosity is defined by the foregoing equation (1), the porosity of the second layer 70b is made 70 to 75%.

In Fig. 10E, before the second layer 70b of the positive electrode layer 70 has dried, a coater 77 is moved over the second layer 70b as shown by the arrow [6], and a solution for making the ion exchange film 21 is applied to the second layer 70b to form the ion exchange film 21.

At this stage, the positive electrode layer 70 is divided into two layers, the first layer 70a on the side away from the ion exchange film 21 and the second layer 70b on the side in contact with the ion exchange film 21, and the porosity of the second layer 70b is made 70 to 75% and the porosity of the first layer 70a is made 76 to 85%, so that the porosity of the second layer 70b is lower than the porosity of the first layer 70a. By the porosity of the second layer 70b being made low like this, permeation of the solution of the ion exchange film 21 into the first layer 70a can be suppressed, and permeation of the solution for making the ion exchange film 21 into the second layer 70b can be kept down. By this means, the solution for making the ion exchange film 21 can be prevented from diminishing the porosity of the positive electrode layer 70.

When the porosity of the second layer 70b is above 70%, the intimacy of the ion exchange film 21 and the second layer 70b can be kept good, and when the porosity of the second layer 70b is below 75%, the product water can be drained well.

The porosity of the first layer 70a is set to above 76% to provide pores for draining product water well, and the porosity of the first layer 70a is set to below 85% to suppress resistance overvoltage and enable current to be generated well.

In Fig. 10F, before the ion exchange film 21 has dried, a sprayer 78 is moved over the ion exchange film 21 as shown by the arrow [7], and a solution for making the negative electrode layer 19 is applied to the ion exchange film 21 through a spray nozzle 78a. By this means, the negative electrode layer 19 is formed on the ion exchange film 21.

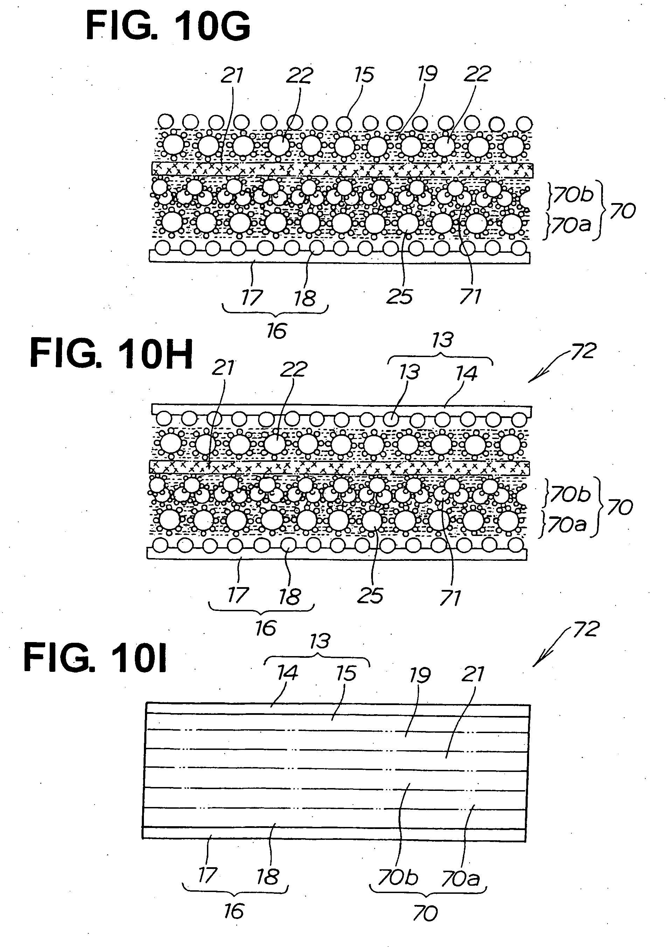

In Fig. 10G, before the negative electrode layer 19 has dried, a solution of the binder layer 15 of the negative electrode side diffusion layer 13 (see Fig. 9) is applied to the negative electrode layer 19.

In Fig. 10H, a negative electrode side carbon paper 14 is placed on the binder layer 15 so that a negative electrode side diffusion layer 13 is formed by the binder layer 15 and the carbon paper 14.

Next, before the binder layer 18, the positive electrode layer 70, the ion exchange film 21, the negative electrode layer 19 and the binder layer 15 have dried, without a load being applied to the binder layer 18, the positive electrode layer 70, the ion exchange film 21, the negative electrode layer 19 or the binder layer 15, the binder layer 18, the positive electrode layer 70, the ion exchange film 21, the negative electrode layer 19 and the binder layer 15 are dried together.

In Fig. 10I, by the binder layer 18, the positive electrode layer 70, the ion exchange film 21, the negative electrode layer 19 and the binder layer 15 being hardened, the binder layer 18, the positive electrode layer 70, the ion exchange film 21, the negative electrode layer 19 and the binder layer 15 are laminated integrally in a hardened state. With this, the manufacturing process of the fuel cell electrode 72 is finished.

Thus, with the method for manufacturing the fuel cell electrode 72 of the third embodiment, by the solutions being applied to the respective upper faces with the binder layer 18, the positive electrode layer 70, the ion exchange film 21, the negative electrode layer 19 and the binder layer 15 in an undried state, the solutions adjacent at the respective interfaces can be made to mix well. By this means it is possible to prevent areas of defective intimacy arising at the interface between the binder layer 18 and the positive electrode layer 70 (the first layer 70a and the second layer 70b). Also, it is possible to prevent areas of defective intimacy arising at the interface between the positive electrode layer 70 and the ion exchange film 21. Also, it is possible to prevent areas of defective intimacy arising at the interface between the ion exchange film 21 and the negative electrode layer 19. Additionally, it is possible to prevent areas of defective intimacy arising at the interface between the negative electrode layer 19 and the binder layer 15, and the reaction efficiency in the fuel cell electrode 72 can be kept good.

Although in the second and third embodiments examples were described wherein the positive electrode layer 60, 70 is disposed below and the negative electrode layer 19 is disposed above, the same effects can be obtained by disposing the positive electrode layer 60, 70 above and disposing the negative electrode layer 19 below.

Although examples were described such that in the manufacture of the electrode of the second embodiment the first and second layers 60a, 60b of the positive electrode layer 60 were applied with a spray and in the manufacture of the electrode of the third embodiment the first and second layers 70a, 70b of the positive electrode layer 70 were applied with a spray, the layers do not have to be sprayed and can alternatively be applied using the ink jet method. In short, any method by which the solutions for making the layers can be applied in spray form will suffice.

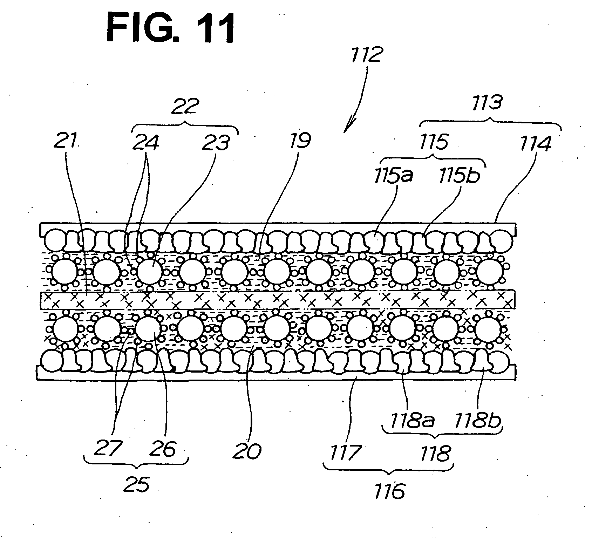

Fig. 11 shows the cross-sectional structure of a fuel cell electrode 112 of a fourth embodiment of the invention. Parts the same as in the fuel cell electrode of the first embodiment have been given the same reference numerals.

The fuel cell electrode 112 of this fourth embodiment has a negative electrode layer 19 and a positive electrode layer 20 on the inner sides of a negative electrode side diffusion layer 113 and a positive electrode side diffusion layer 116 respectively, and has an ion exchange film 21 between the negative electrode layer 19 and the positive electrode layer 20.

The positive electrode side diffusion layer 116 is a sheet made up of a positive electrode side carbon paper 117, which is one carbon paper, and a positive electrode side binder layer 118, which is one binder layer.

The negative electrode side diffusion layer 113 is a sheet made up of a negative electrode side carbon paper 114, which is the other carbon paper, and a negative electrode side binder layer 115, which is the other binder layer.

The solution of the negative electrode side binder layer 115 includes for example granular carbon 115a and an ion exchange resin serving as an adhesive resin 115b with good adhesion. The ion exchange resin serving as the adhesive resin 115b is for example a perfluoro ion exchange resin. Examples of this perfluoro ion exchange resin include those marketed as trade name "Nafion" made by DuPont, trade name "Flemion" made by Asahi Glass Company and trade name "Aciplex" made by Asahi Kasei.

The reason for including an adhesive resin 115b in the negative electrode side binder layer 115 is as follows.

That is, in the manufacture of the fuel cell electrode 112, for example the positive electrode layer 20, the ion exchange film 21 and the negative electrode layer 19 are layered in turn on the positive electrode side binder layer 118, and the negative electrode side binder layer 115 is layered on the negative electrode layer 19. Therefore, to raise the adhesion between the negative electrode side carbon paper 114 and the negative electrode side binder layer 115, a pressing process is necessary, but by an adhesive resin 115b being included in the negative electrode side binder layer 115, the intimacy of the negative electrode side carbon paper 114 and the negative electrode side binder layer 115 is kept good.

The reason for using an ion exchange resin as the adhesive resin 115b is as follows.

That is, by employing an ion exchange resin as the adhesive resin 115b, the solution of the negative electrode side binder layer 115 is made the same kind of substance as the solution of the negative electrode layer 19. By this means the ion exchange resin included in the solution of the negative electrode side binder layer 115 and the ion exchange resin included in the solution of the negative electrode layer 19 can be mixed well and the intimacy between the negative electrode side binder layer 115 and the negative electrode layer 19 can be kept good.

The solution of the positive electrode side binder layer 118 has for example granular carbon 118a, a vinylidene fluoride / tetrafluoroethylene / hexafluoropropylene copolymer serving as a resin 118b, excellent in water repellency, and water serving as a solvent.

The melting point of the water repellent resin 118b of the positive electrode side binder layer 118 is set to below 150°C. When the melting point of the water repellent resin 118b exceeds 150°C, there is a risk of the temperature being too high and it consequently not being possible to fire the water repellent resin 118b together with the positive and negative electrode layers 20, 19 and the ion exchange film 21.

Accordingly, by the water repellent resin 118b being made a resin with a low melting point not higher than 150°C, the water repellent resin 118b can be dried together with the negative electrode side binder layer 115, the positive and negative electrode layers 20, 19 and the ion exchange film 21 after the negative electrode side binder layer 115, the positive and negative electrode layers 20, 19 and the ion exchange film 21 are stacked.

An example of the water repellent resin (low-melting-point resin) 118b of melting point below 150°C is the above-mentioned vinylidene fluoride / tetrafluoroethylene / hexafluoropropylene copolymer. Vinylidene fluoride / tetrafluoroethylene / hexafluoropropylene copolymer has the property of dispersing in water as a solvent. This vinylidene fluoride / tetrafluoroethylene / hexafluoropropylene copolymer, after the water serving as the solvent has evaporated, reaches its melting point and melts, and exhibits a water repellent effect.

Preferably, the melting point of the water repellent resin 118b of the positive electrode side binder layer 118 is set to above 100°C. That is, because vinylidene fluoride / tetrafluoroethylene / hexafluoropropylene copolymer does not dissolve in water, when water is used as the solvent, to dry off the water and melt the vinylidene fluoride / tetrafluoroethylene / hexafluoropropylene copolymer a melting point of at least 100°C is necessary.

The solution of the positive electrode side binder layer 118 includes water serving as a solvent. Because water has excellent dispersing power, by using water as the solvent, the water repellent resin (low-melting-point resin) 118b and the carbon 118a can be made to mix well in the water.

By this means, the solution for making the positive electrode side binder layer 118 can be applied to the positive electrode side carbon paper 117 in a spray state by a sprayer or an ink jet or the like. Consequently, the solution for making the positive electrode side binder layer 118 can be applied well to the depressions in the positive electrode side carbon paper 117, whose surface is irregular.

Thus, the solution for making the positive electrode side binder layer 118 can be applied well over the whole surface of the positive electrode side carbon paper 117, the water repellent resin 118b can be made to permeate the whole surface of the positive electrode side carbon paper 117, and the water repellency of the positive electrode side carbon paper 117 can be increased.

Also, the negative electrode layer 19 of the fuel cell electrode 112 is made by mixing a catalyst 22 with the solution for making the negative electrode and hardening the solution by drying it after it is applied. The catalyst 22 of the negative electrode layer 19 is one made by attaching a platinum-ruthenium alloy 24 as a catalyst to the surface of carbon 23, and hydrogen molecules ($H_2$) are adsorbed onto the platinum-ruthenium alloy 24.

The positive electrode layer 20 is made by mixing a catalyst 25 with the solution for making the positive electrode and hardening the solution by drying it after it is applied. The catalyst 25 of the positive electrode layer 20 is one made by attaching platinum 27 as a catalyst to the surface of carbon 26, and oxygen molecules ($O_2$) are adsorbed onto this platinum 27.

The ion exchange film 21 is formed by applying a solution between the negative electrode layer 19 and the positive electrode layer 20 and then hardening it integrally with the negative electrode layer 19 and the positive electrode layer 20 by drying it together with the negative electrode layer 19 and the positive electrode layer 20.

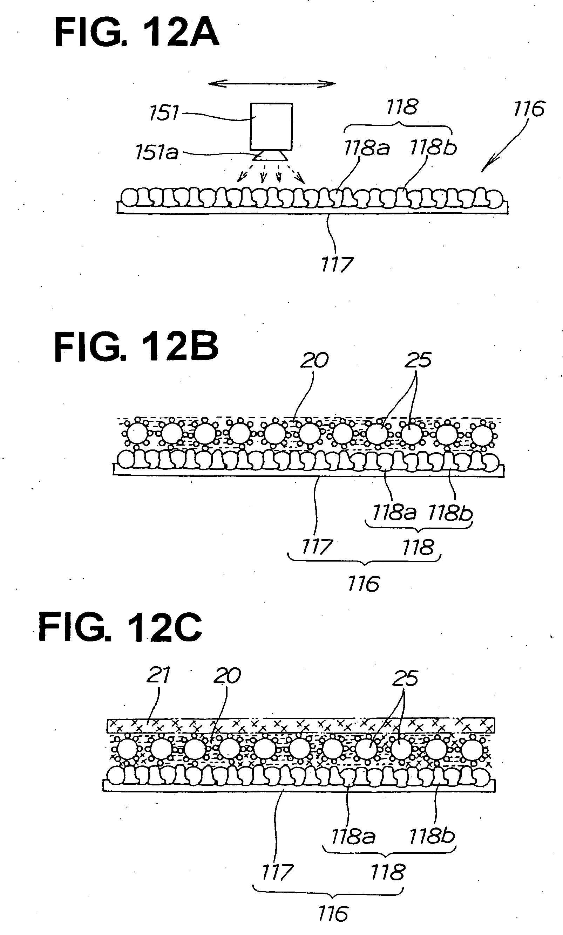

Next, a method for manufacturing the fuel cell electrode 112 of the fourth embodiment shown in Fig. 11 will be described, on the basis of Fig. 12A through Fig. 12G.

In Fig. 12A, a sheet-form positive electrode side diffusion layer 116 is laid. That is, a positive electrode side carbon paper 117 of the positive electrode side diffusion layer 116 is set, and then by a sprayer 151 being moved over the positive electrode side carbon paper 117 in the direction of the arrow while the solution for making the positive electrode side binder layer 118 is sprayed in an atomized state through a spray nozzle 151a of the sprayer 151, the positive electrode side binder layer 118 is formed.

Here, because water, which has excellent dispersing power, is included as a solvent in the solution of the positive electrode side binder layer 118, the low-melting-point resin 118b and the granular carbon 118a can be mixed well with the solvent. As a result, the solution for making the positive electrode side binder layer 118 can be applied in an atomized state, and the solution for making the positive electrode side binder layer 118 can be applied well to the depressions in the surface of the positive electrode side carbon paper 117.

Consequently, as shown in Fig. 12A, the solution for making the positive electrode side binder layer 118 can be applied well to the whole surface of the positive electrode side carbon paper 117. As a result, the water repellent resin 118b is made to permeate into the whole surface of the positive electrode side carbon paper 117, and the water repellency of the positive electrode side carbon paper 117 is increased.

In Fig. 12B, before the positive electrode side binder layer 118 has dried, the solution of the positive electrode layer 20 is applied to the positive electrode side binder layer 118 to form the positive electrode layer 20. By this means, the interface between the positive electrode side binder layer 118 and the positive electrode layer 20 can be mixed well and its intimacy raised.

In Fig. 12C, before the positive electrode layer 20 has dried, the solution of the ion exchange film 21 is applied to the positive electrode layer 20 to form the ion exchange film 21. By this means, the interface between the positive electrode layer 20 and the ion exchange film 21 can be mixed well and its intimacy raised.

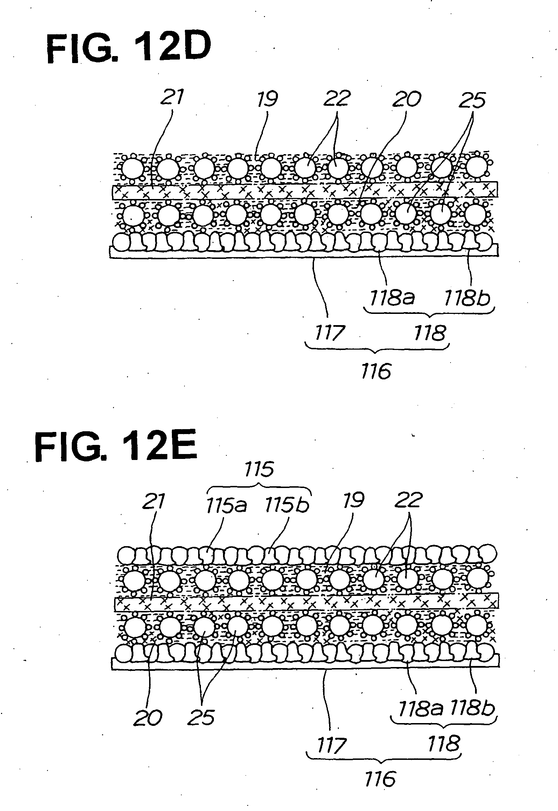

In Fig. 12D, before the ion exchange film 21 as dried, the solution of the negative electrode layer 19 is applied to the ion exchange film 21 to form the negative electrode layer 19. By this means, the interface between the ion exchange film 21 and the negative electrode layer 19 can be mixed well and its intimacy raised.

In Fig. 12E, before the negative electrode layer 19 has dried, the solution for making the negative electrode side binder layer 115 is applied to the negative electrode layer 19 to form the negative electrode side binder layer 115. By this means, the interface between the negative electrode layer 19 and the negative electrode side binder layer 115 can be mixed well and its intimacy raised.

Here, an ion exchange resin is included in the solution of the negative electrode side binder layer 115 as an adhesive resin 115b with good adhesion. This ion exchange resin is the same kind of material as the ion exchange resin included in the solution of the negative electrode layer 19, and the ion exchange resin included in the solution of the negative electrode side binder layer 115 can be mixed well with the ion exchange resin included in the solution of the negative electrode layer 19. By this means, even without the weight of the positive electrode layer 20, the ion exchange film 21 and the negative electrode layer 19 acting upon the negative electrode side binder layer 115, the intimacy between the negative electrode side binder layer 115 and the negative electrode layer 19 can be kept good like the intimacy between the positive electrode side binder layer 118 and the positive electrode layer 20.

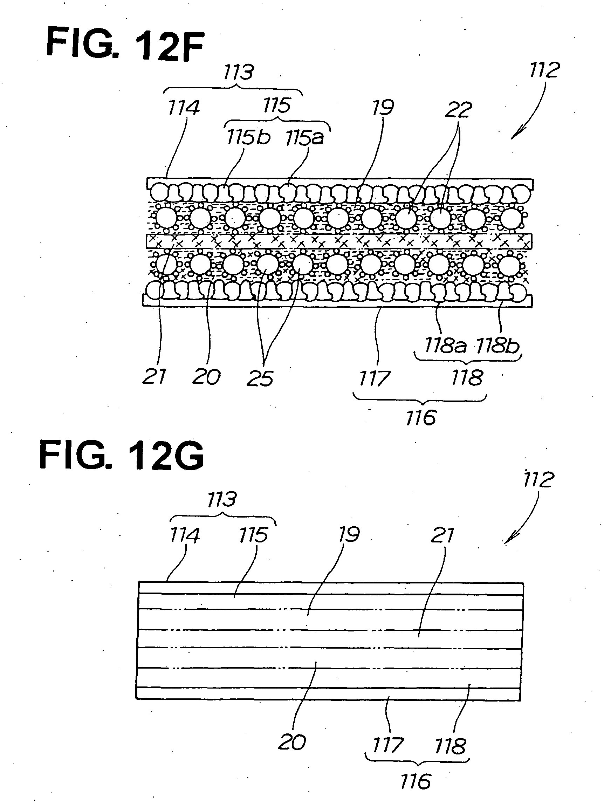

In Fig. 12F, by the negative electrode side carbon paper 114 being placed on the negative electrode side binder layer 115, a sheet-form negative electrode side diffusion layer 113 is formed with the negative electrode side binder layer 115 and the negative electrode side carbon paper 114.

Next, in drying of the positive and negative electrode layers 20, 19 and the ion exchange film 21 without a load being applied to the positive electrode side binder layer 118, the positive and negative electrode layers 20, 19, the ion exchange film 21 and the negative electrode side binder layer 115 (that is, without them being heated and compressed as in related art), the positive electrode side binder layer 118 and the negative electrode side binder layer 115 are fired together.

As a result of the water repellent resin 118b of the positive electrode side binder layer 118 being made a resin with a low melting point below 150°C, when the positive and negative electrode layers 20, 19 and the ion exchange film 21 are dried, the positive electrode side binder layer 118 and the negative electrode side binder layer 115 can be fired together in one go. Consequently, because the related art drying step of firing only the positive electrode side binder layer 118 can be eliminated, the number of drying steps can be reduced and the fuel cell electrode can be manufactured efficiently.

In Fig. 12G, the positive electrode side binder layer 118, the positive electrode layer 20, the ion exchange film 21, the negative electrode layer 19 and the negative electrode side binder layer 115 are laminated integrally in a hardened state. With this, the manufacturing process of the fuel cell electrode 112 of the fourth embodiment shown in Fig. 11 ends.

As explained above, with the manufacturing method of the fuel cell electrode 112 of the fourth embodiment, by employing a solution for the ion exchange film 21 and applying the solution for making the ion exchange film 21 to the positive electrode layer 20 before the positive electrode layer 20 has dried, at the interface between the positive electrode layer 20 and the ion exchange film 21 their solutions can be made to mix effectively.

Further, by applying the solution for the negative electrode layer 19 to the ion exchange film 21 before the ion exchange film 21 has dried, at the interface between the ion exchange film 21 and the negative electrode layer 19 their solutions can be made to mix effectively.

By the positive and negative electrode layers 20, 19 and the ion exchange film 21 being dried together in one go, they can be hardened with the interfaces between the positive and negative electrode layers 20, 19 and the ion exchange film 21 mixed effectively. By this means, areas of defective intimacy can be prevented from arising at the layer interfaces of the positive and negative electrode layers 20, 19 and the ion exchange film 21, and consequently the reaction efficiency at the ion exchange film 21 can be kept good. By this means, the reaction efficiency in the fuel cell electrode 112 can be kept good.

Additionally, because as a result of the ion exchange film 21 being made a solution the ion exchange film 21 can be handled in the form of a solution, it is not necessary for the thickness of the ion exchange film 21 to be regulated from the handling point of view. Consequently, the ion exchange film 21 can be made thin, and the fuel cell electrode 112 can be made thin.

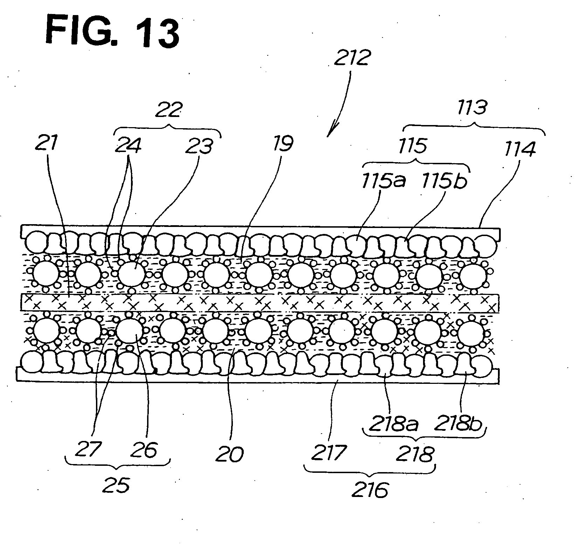

Fig. 13 shows the cross-sectional structure of a fuel cell electrode 212 of a fifth embodiment of the invention. Parts the same as in the fuel cell electrode of the fourth embodiment shown in Fig. 11 have been given the same reference numerals.

The fuel cell electrode 212 of this fifth embodiment has a negative electrode layer 19 and a positive electrode layer 20 on the inner sides of a negative electrode side diffusion layer 113 and a positive electrode side diffusion layer 216 respectively, and has an ion exchange film 21 between the negative electrode layer 19 and the positive electrode layer 20.

The positive electrode side diffusion layer 216 is a sheet made up of a positive electrode side carbon paper 217, which is a first carbon paper, and a positive electrode side binder layer 218, which is a first binder layer.

The solution of the positive electrode side binder layer 218 includes for example granular carbon 218a and a resin which is soluble in an organic solvent and is water repellent (hereinafter called "water repellent resin") 218b.

As the water repellent resin 218b, a resin of one or a plurality of types chosen from among vinylidene fluoride / tetrafluoroethylene / hexafluoropropylene copolymers, polyvinylidene fluoride (PVDF), fluoro-olefin / hydrocarbon-olefin copolymers, fluoro-acrylate copolymers, and fluoro-epoxy compounds is used.

Because a vinylidene fluoride / tetrafluoroethylene / hexafluoropropylene copolymer, polyvinylidene fluoride (PVDF), fluoro-olefin / hydrocarbon-olefin copolymer, fluoro-acrylate copolymer, or fluoro-epoxy compound serving as the water repellent resin 218b has the property of dissolving in an organic solvent included in the solution of the positive electrode side binder layer 218, it enables the invention to be worked well.

Here, the organic solvent may be of for example at least one type among alcohol solvents, ketone solvents, and ester solvents.

Because an organic solvent included in the solution for making the positive electrode side binder layer 218 has excellent dissolving power, by using an organic solvent it is possible to dissolve the water repellent resin 218b well in the organic solvent. The carbon 218a is dispersed or mixed in the organic solvent.

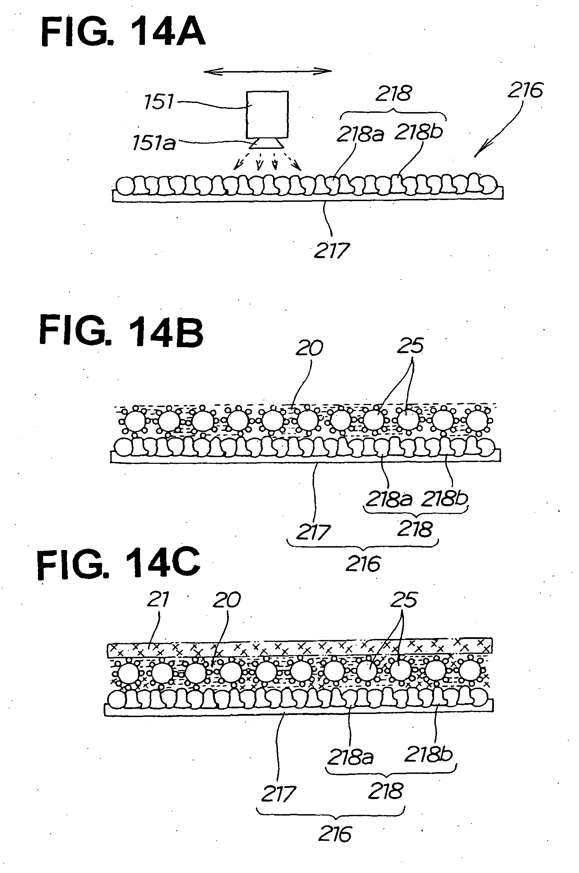

Next, a method of manufacturing the fuel cell electrode 212 of this fifth embodiment will be described, on the basis of Fig. 14A, Fig. 14B and Fig. 14C.

In Fig. 14A, the sheet-form positive electrode side diffusion layer 216 is laid. That is, a positive electrode side carbon paper 217 of the positive electrode side diffusion layer 216 is set, and by a sprayer 151 being moved over the positive electrode side carbon paper 217 in the direction of the arrow while the solution for making the positive electrode side binder layer 218 is sprayed in an atomized state through a spray nozzle 151a of the sprayer 151, the positive electrode side binder layer 218 is formed.

Here, because an organic solvent having good dissolving power is included in the solution of the positive electrode side binder layer 218, the water repellent resin 218b can be dissolved well with the organic solvent. As a result, the solution for making the positive electrode side binder layer 218 can be applied in an atomized state, and the solution for making the positive electrode side binder layer 218 can be applied well to the depressions in the surface of the positive electrode side carbon paper 217.

Consequently, the solution for making the positive electrode side binder layer 218 can be applied well to the whole surface of the positive electrode side carbon paper 217. By this means, the water repellent resin 218b is made to permeate into the whole surface of the positive electrode side carbon paper 217, and the water repellency of the positive electrode side carbon paper 217 is increased.

In Fig. 14B, before the positive electrode side binder layer 218 has dried, the solution of the positive electrode layer 20 is applied to the positive electrode side binder layer 218 to form the positive electrode layer 20. By this means, the interface between the positive electrode side binder layer 218 and the positive electrode layer 20 can be mixed well and its intimacy raised.

In Fig. 14C, in the same way as in the manufacturing method for the fuel cell electrode of the fourth embodiment, before the positive electrode layer 20 has dried, the solution of the ion exchange film 21 is applied to the positive electrode layer 20 to form the ion exchange film 21. By this means, the interface between the positive electrode layer 20 and the ion exchange film 21 can be mixed well and its intimacy raised.

Thereafter, in the same way as the method shown in Fig. 12D through Fig. 12G of the manufacturing method for the fuel cell electrode of the fourth embodiment, before the ion exchange film 21 has dried, the solution for making the negative electrode layer 19 is applied to the ion exchange film 21 to form the negative electrode layer 19

Then, before the negative electrode layer 19 has dried, the solution of the negative electrode side binder layer 115 is applied to the negative electrode layer 19 to form the negative electrode side binder layer 115. Then, before the negative electrode side binder layer 115 has dried, the negative electrode side carbon paper 114 is placed.

In this way, after the positive electrode side diffusion layer 216, the positive and negative electrode layers 20, 19, the ion exchange film 21 and the negative electrode side diffusion layer 113 are stacked, without a load being applied to the positive electrode side binder layer 218, the positive and negative electrode layers 20, 19, the ion exchange film 21 and the negative electrode side binder layer 115 (that is, without them being heated and compressed as in related art), when the positive and negative electrode layers 20, 19 and the ion exchange film 21 are dried, the positive electrode side binder layer 218 and the negative electrode side binder layer 115 are fired together.

Here, because the drying temperature of the organic solvent is likely to be about 70 to 80°C, at the time of drying the positive and negative electrode layers 20, 19, or the ion exchange film 21 the organic solvent can be removed to leave the water repellent resin 218b, and the water repellent resin 218b can be fired together with the rest. By this means, as in the manufacturing method for the fuel cell electrode of the fourth embodiment, because it is possible to eliminate the drying step of firing only the positive electrode side binder layer 218, which has been necessary in related art, the number of drying steps can be reduced and the fuel cell electrode can be manufactured efficiently.

With the manufacturing method of the embodiment described above, by including an organic solvent with superior dissolving power in the solution for making the positive electrode side binder layer 218, it is possible to dissolve the water repellent resin 218b well in the organic solvent.

Also, because the water repellent resin 218b can be fired at the same time as the positive and negative electrode layers 20, 19 and the ion exchange film 21 are being dried, the solution of the positive electrode layer 20 can be applied to the positive electrode side diffusion layer 216 before the water repellent resin 218b (that is, the positive electrode side diffusion layer 216) has dried, and the interface of the positive electrode side diffusion layer 216 and the positive electrode layer 20 can be mixed well.

Furthermore, by using an organic solvent with good dissolving power, it is possible to dissolve the water repellent resin 218b well in the organic solvent. Consequently it is possible to apply the solution for making the positive electrode side binder layer 218 in an atomized state with a sprayer or an ink jet or the like, and the solution for making the positive electrode side binder layer 218 can be applied well even to the depressions in the surface of the positive electrode side carbon paper 217. Accordingly, because the solution for making the positive electrode side binder layer 218 can be applied well to the whole surface of the positive electrode side carbon paper 217, the water repellent resin 218b can be made to permeate into the whole surface of the positive electrode side carbon paper 217, and the water repellency of the positive electrode side carbon paper 217 can be improved.

Although in the manufacturing methods of the fuel cell electrodes of the fourth and fifth embodiments examples were described wherein the positive electrode side diffusion layer 116, 216 was disposed below and the negative electrode side diffusion layer 113 was disposed above, it is also possible for the negative electrode side diffusion layer 113 to be disposed below and for the positive electrode side diffusion layer 116, 216 to be disposed above. In this case, the adhesive resin 115b which was included in the negative electrode side binder layer 115 is included in the positive electrode side binder layer 118, 218. By the adhesive resin 115b being included in the positive electrode side binder layer 118, 218 like this, the intimacy of the positive electrode side carbon paper 117, 217 and the positive electrode side binder layer 118, 218 can be kept good.

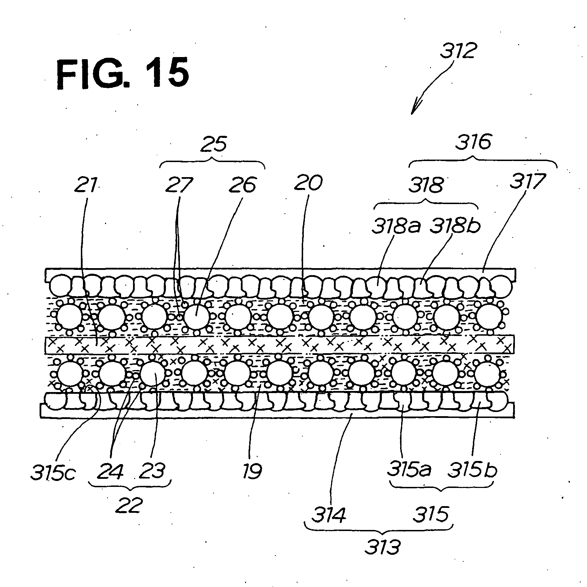

Fig. 15 shows the cross-sectional structure of a fuel cell electrode of a sixth embodiment of the invention. Parts the same as in the fuel cell electrode of the first embodiment shown in Fig. 2 have been given the same reference numerals.

This fuel cell electrode 312 has a negative electrode layer 19 and a positive electrode layer 20 on the inner sides of a negative electrode side diffusion layer 313 and a positive electrode side diffusion layer 316 respectively, and has an ion exchange film 21 between the negative electrode layer 19 and the positive electrode layer 20.

The negative electrode side diffusion layer 313 is a sheet made up of a negative electrode side carbon paper 314 and a negative electrode side binder layer 315.

The positive electrode side diffusion layer 316 is a sheet made up of a positive electrode side carbon paper 317 and a positive electrode side binder layer 318.

The negative electrode side binder layer 315 is a layer having for example granular carbon 315a and a water repellent resin (for example a fluoropolymer) 315b, with an upper face 315c adjacent to the negative electrode layer 19 formed flat.

The positive electrode side binder layer 318 has for example a granular carbon 318a and a water repellent resin (for example a fluoropolymer) 318b.

The negative electrode layer 19 is made by mixing a catalyst 22 with the solution for making the negative electrode and hardening the solution by drying it after it is applied. The catalyst 22 of the negative electrode layer 19 is one made by attaching a platinum-ruthenium alloy 24 as a catalyst to the surface of carbon 23, and hydrogen molecules ($H_2$) are adsorbed onto the platinum-ruthenium alloy 24.

The positive electrode layer 20 is made by mixing a catalyst 25 with the solution for making the positive electrode and hardening it by drying the solution after it is applied. The catalyst 25 of the positive electrode layer 20 is one made by attaching platinum 27 as a catalyst to the surface of carbon 26, and oxygen molecules ($O_2$) are adsorbed onto this platinum 27.

The ion exchange film 21 is formed by applying a solution between the negative electrode layer 19 and the positive electrode layer 20 and then hardening it integrally with the negative electrode layer 19 and the positive electrode layer 20 by drying it together with the negative electrode layer 19 and the positive electrode layer 20.

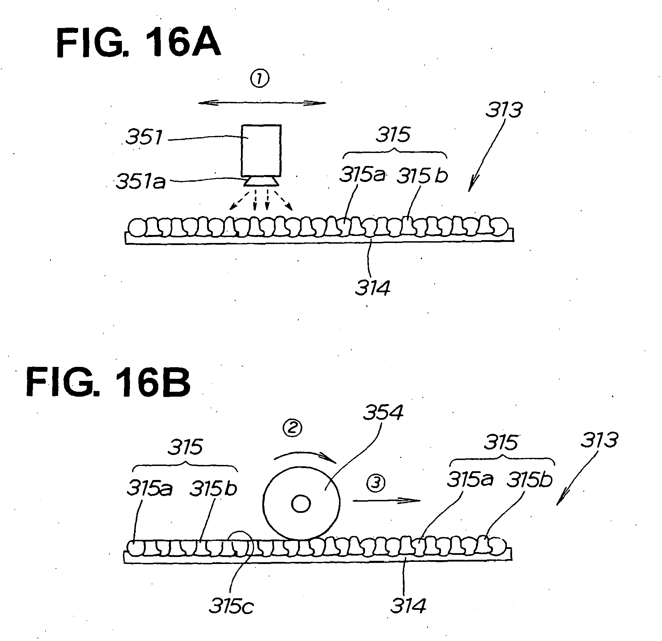

Next, a method for manufacturing the fuel cell electrode 312 of the sixth embodiment of the invention will be described, on the basis of Fig. 16A through Fig. 16H.

In Fig. 16A, the sheet-form negative electrode side diffusion layer 313 is laid. That is, the carbon paper 314 of the negative electrode side diffusion layer 313 is set, and then a sprayer 351 is moved over the carbon paper 314 as shown by the arrow [1] while the binder (that is, the carbon 315a and the fluoropolymer 315b) is sprayed from a spray nozzle 351a of the sprayer 351.

Here, the upper face of the carbon paper 314 is formed as an irregular surface, but by using the sprayer 351 it is possible to atomize the carbon 315a and the fluoropolymer 315b and apply them to the upper face of the carbon paper 314, and the carbon 315a and the fluoropolymer 315b can be applied surely even to depressions in the carbon paper 314. By this means, the fluoropolymer 315b can be made to permeate into the whole area of the carbon paper 314, and a water repellent effect is obtained over the whole area of the carbon paper.

In Fig. 16B, before the binder layer 315 has dried, while a roller 354 is rotated along the upper face 315c of the binder layer 315 as shown by the arrow [2], the roller 354 is moved as shown by the arrow [3]. As a result, the upper face 315c of the binder layer 315 becomes flat.

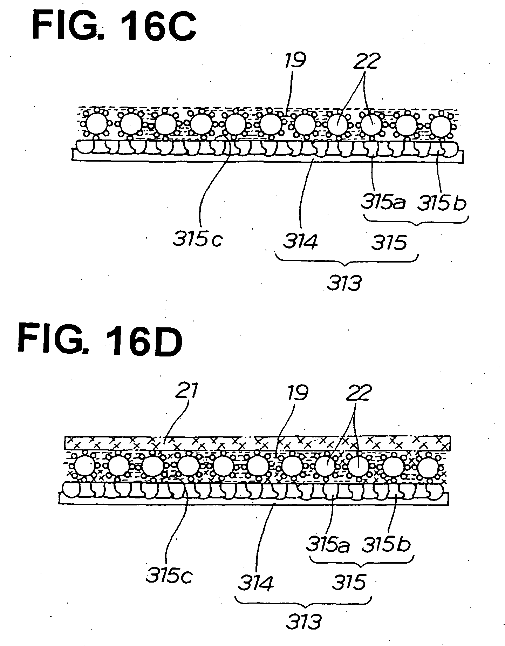

In Fig. 16C, to the negative electrode side binder layer 315 with its upper face flattened, before the binder layer 315 has dried, the solution of the negative electrode layer 19 is applied to form the negative electrode layer 19. Because the negative electrode layer 19 is formed by applying the solution of the negative electrode layer 19 to the upper face 315c of a flattened negative electrode side binder layer 315, the upper face of the negative electrode layer 19 is flat.

In Fig. 16D, before the negative electrode layer 19 has dried, by the solution of the ion exchange film 21 being applied, the ion exchange film 21 is formed. Because the ion exchange film 21 is formed by applying the solution of the ion exchange film 21 to a flat negative electrode layer 19, the upper face of the ion exchange film 21 is flat.

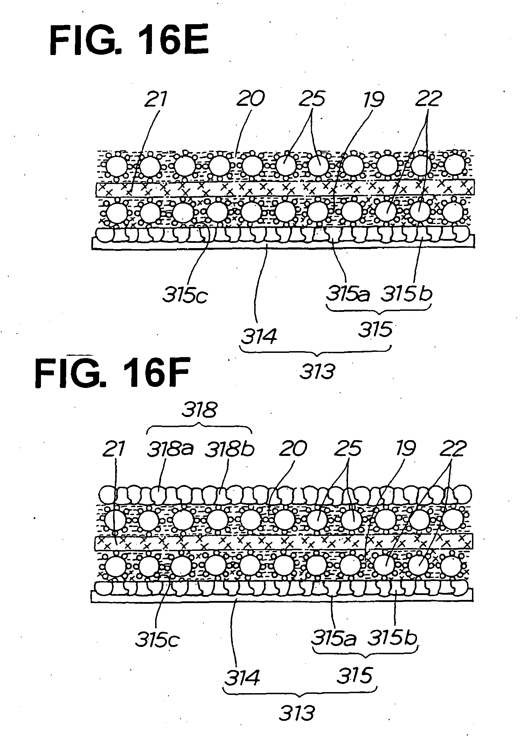

In Fig. 16E, to the ion exchange film 21 with the flat upper face, before the ion exchange film 21 has dried, the solution of the positive electrode layer 20 is applied to form the positive electrode layer 20. Because the positive electrode layer 20 is formed by applying the solution of the positive electrode layer 20 to a flat ion exchange film 21, the upper face of the positive electrode layer 20 is flat.

Because the ion exchange film 21 can be formed flat like this, the positive electrode layer 20 applied to the top of the ion exchange film 21 and the negative electrode layer 19 applied to the bottom of the ion exchange film 21 can be kept apart surely, and shorting of the positive electrode layer 20 and the negative electrode layer 19 can be prevented.

In Fig. 16F, to the positive electrode layer 20, before the positive electrode layer 20 has dried, the binder of the positive electrode side binder layer 318 (that is, the carbon 318a and the fluoropolymer 318b) are applied to form the positive electrode side binder layer 318.

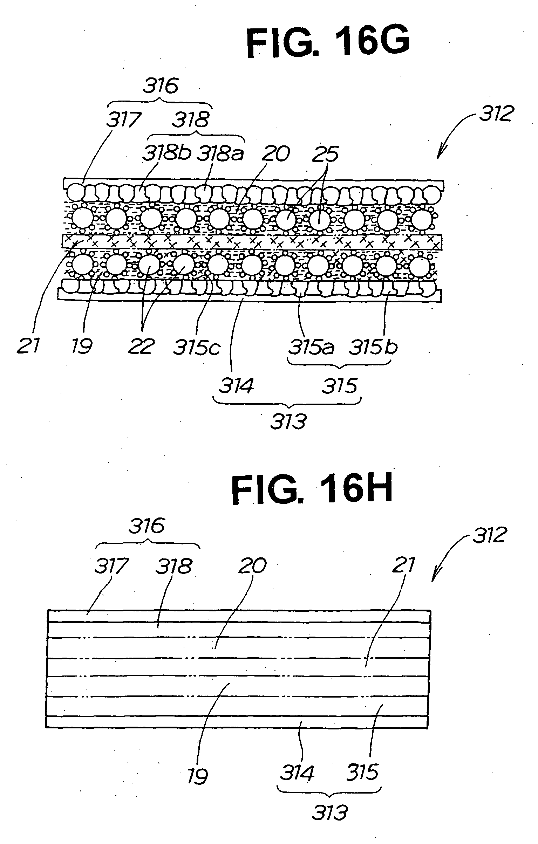

In Fig. 16G, by the positive electrode side carbon paper 317 being placed on the positive electrode side binder layer 318, the sheet-form positive electrode side diffusion layer 316 is formed with the positive electrode side binder layer 318 and the positive electrode side carbon paper 317.

Next, before the negative electrode layer 19, the ion exchange film 21 and the positive electrode layer 20 have dried, without a load being applied to the negative electrode layer 19, the ion exchange film 21 and the positive electrode layer 20, the negative electrode layer 19, the ion exchange film 21 and the positive electrode layer 20 are dried together.

In Fig. 16H, by the negative electrode layer 19, the ion exchange film 21 and the positive electrode layer 20 being hardened, the negative electrode layer 19, the ion exchange film 21 and the positive electrode layer 20 are laminated integrally. With this, the process of manufacturing the fuel cell electrode 312 of the sixth embodiment shown in Fig. 15 ends.

Thus, with the manufacturing method of the fuel cell electrode 312 of this sixth embodiment, by employing a solution for the ion exchange film 21 and applying the solution for making the ion exchange film 21 to the negative electrode layer 19 before the negative electrode layer 19 has dried, at the interface of the negative electrode layer 19 and the ion exchange film 21 their solutions can be made to mix effectively.

And by the solution for making the binder layer 18 being applied to the ion exchange film 21 before the ion exchange film 21 has dried, at the interface of the ion exchange film 21 and the positive electrode layer 20 their solutions can be made to mix effectively. And by the undried positive and negative electrode layers 20, 19 and the undried ion exchange film 21 being dried together all at once, they can be hardened with the interfaces of the positive and negative electrode layers 20, 19 and the ion exchange film 21 mixed effectively. Therefore, areas of defective intimacy can be prevented from arising at the interfaces of the layers of the positive and negative electrode layers 20, 19 and the ion exchange film 21, and the reaction efficiency in the ion exchange film 21 can be kept good. By this means, the reaction efficiency in the fuel cell electrode 312 can be kept good.

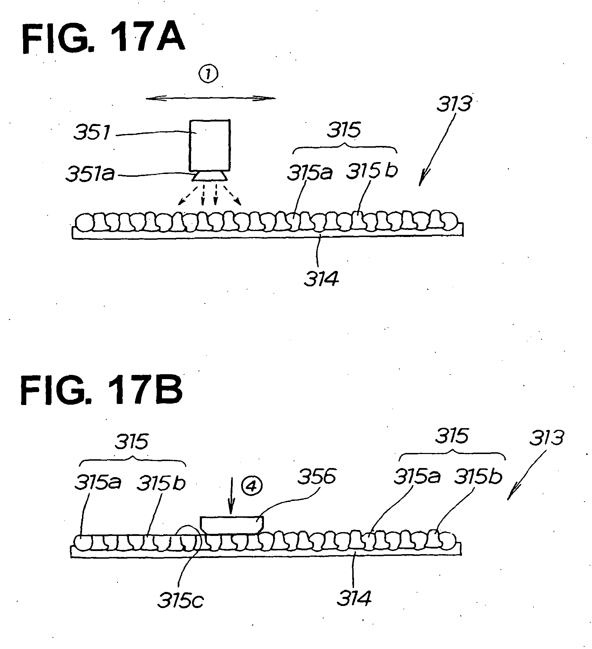

Next, another method for manufacturing the fuel cell electrode 312 of the sixth embodiment will be described, on the basis of Fig. 17A and Fig. 17B.

In Fig. 17A, in the same way as in the embodiment shown in Fig. 16A, the carbon paper 314 of the negative electrode side diffusion layer 313 is set and then a sprayer 351 is moved over the carbon paper 314 as shown by the arrow [1] while the binder (that is, the carbon 315a and the fluoropolymer 315b) is sprayed from a spray nozzle 351a of the sprayer 351.

By using a sprayer 351 like this, it is possible to apply the carbon 315a and the fluoropolymer 315b certainly even to depressions in the carbon paper 314. By this means it is possible to make the fluoropolymer 315b permeate into the whole area of the carbon paper 314 and obtain a water repellent effect over the whole area of the carbon paper.

In Fig. 17B, before the negative electrode side binder layer 315 has dried, by a presser plate 356 being pressed against the upper face 315c of the negative electrode side binder layer 315 as shown by the arrow [4], the upper face 315c of the negative electrode side binder layer 315 can be flattened.

The means for making the upper face 315c of the negative electrode side binder layer 315 flat are not limited to the roller 354 (see Fig. 16B) or the presser plate 356, and in this invention other means can alternatively be used.

Although in the sixth embodiment shown in Fig. 15 an example was described wherein the negative electrode layer 19 was disposed below and the positive electrode layer 20 was disposed above, the same effects can be obtained by disposing the negative electrode layer 19 above and disposing the positive electrode layer 20 below.

Also, although in the method of the embodiment described above an example was described wherein when the binder (that is, the carbon 315a and the fluoropolymer 315b) is spray-coated onto the upper face of the carbon paper 314 the binder is applied in an atomized state by a sprayer 351, instead of a sprayer some other spray-coating method such as an ink jet or the like can alternatively be employed.

A sprayer and an ink jet are the same in the point that they apply the solution in an atomized state, but because in the case of a sprayer the scope is relatively wide and the application time can be made short, the sprayer is preferable.

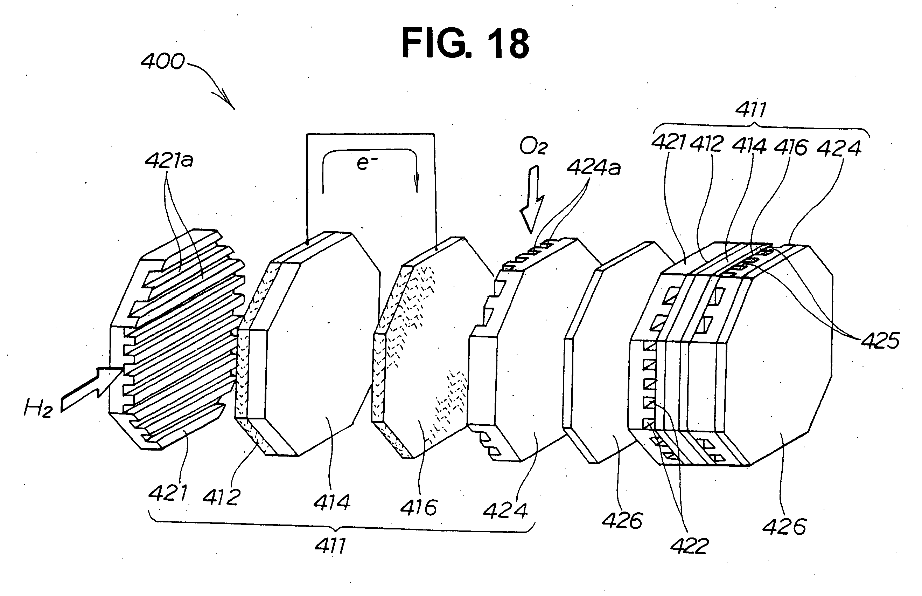

Fig. 18 shows a fuel cell shown in exploded perspective view having a fuel cell electrode pertaining to a seventh embodiment of the invention.

A fuel cell unit 400 is made up of a plurality of (in the example shown in the figure, two) fuel cells 411, 411. Each fuel cell 411 is made by providing an ion exchange film for a fuel cell (simply called an ion exchange film) 414 on a negative pole (electrode) 412, superposing a positive pole (electrode) 416 on this ion exchange film 414, disposing a negative electrode side flow channel plate 421 on the outer side of the negative electrode 412, and disposing a positive electrode side flow channel plate 424 on the outer side of the positive electrode 416. A plurality (two) of these fuel cells 411 are provided with a separator 426 between them to constitute the fuel cell unit 400.

By the negative electrode side flow channel plate 421 being stacked against the negative electrode 412, flow channels 421a in the negative electrode side flow channel plate 421 are covered by the negative electrode 412, and hydrogen gas flow passages 422 are formed. By the positive electrode side flow channel plate 424 being stacked against the positive electrode 416, flow channels 424a in the positive electrode side flow channel plate 424 are covered by the positive electrode 416, and oxygen gas flow passages 425 are formed.

By hydrogen gas being supplied to the hydrogen gas flow passages 422, hydrogen molecules ($H_2$) are adsorbed onto a catalyst included in the negative electrode 412, and by oxygen gas being supplied to the oxygen gas flow passages 425, oxygen molecules ($O_2$) are adsorbed onto a catalyst included in the positive electrode side diffusion layer 16. As a result, electrons ($e^-$) flow as shown by the arrow and a current arises. When the current arises, product water ($H_2O$) is obtained from the hydrogen molecules ($H_2$) and oxygen molecules ($O_2$).

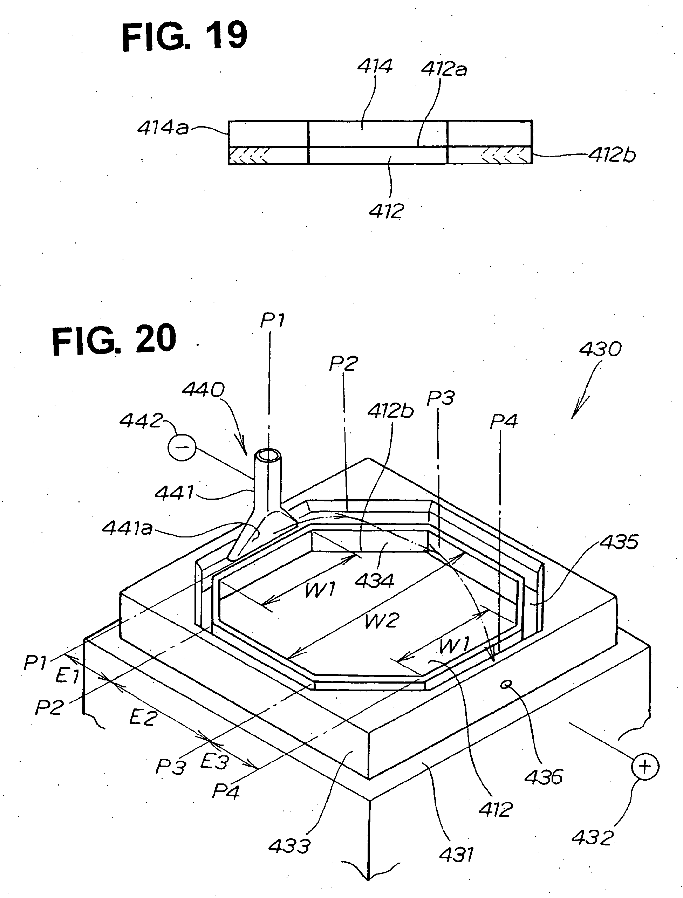

Fig. 19 shows the cross-sectional structure of the ion exchange film 414 shown in Fig. 18, and shows the negative electrode 412 covered with the ion exchange film 414.

The negative electrode 412 is a sheet formed from carbon paper in the shape of a polygon (for example an octagon); it includes a catalyst inside it, and hydrogen molecules ($H_2$) are adsorbed onto this catalyst. Here, carbon paper means paper made from carbon fiber. The positive electrode 416 shown in Fig. 18 is a sheet formed of carbon like the negative electrode 412; it includes a catalyst, and oxygen molecules ($O_2$) are adsorbed onto this catalyst.

The ion exchange film 414 is a polygonal (for example, octagonal) resin film obtained by applying a resin solution (hereinafter called "slurry") to the surface 412a of the negative electrode 412 and drying it after application. As the resin solution, for example an HC polymer solution is suitable. The "slurry" is a solution made by mixing the resin with a liquid.

Fig. 20 shows an ion exchange film forming apparatus 430.

The ion exchange film forming apparatus 430 has a bed 431 for placing an octagonal negative electrode 412 (see Fig. 18 and Fig. 19) upon, a guide frame member 433 which surrounds the negative electrode 412 when set on this bed 431, and an atomizer 440 above this guide frame member 433.

The bed 431 has plus charge imparting means 432 for imparting a plus charge to the negative electrode 412.

The guide frame member 433 has an octagonal inner face 434 which follows the periphery 412b of the negative electrode 412 (see Fig. 19), has a recovery groove 435 running alongside this inner face 434, and has a recovery hole 436 formed so as to connect with this recovery groove 435. The inner face 434 is coated with a coating (not shown).

The atomizer 440 has a slurry nozzle 441. This slurry nozzle 441 is supported movably as shown by the arrow. The slurry nozzle 441 has minus charge imparting means 442. Atomized slurry is sprayed from the end part 441a of this slurry nozzle 441.

The shape of the mouth of the end part 441a of the slurry nozzle 441 is formed so that the atomized slurry sprayed from the mouth forms an ellipse.

The minus charge imparting means 442 imparts a minus charge to the atomized slurry sprayed from the slurry nozzle 441.

As the slurry nozzle 441 is moved from position $P_1$ to position $P_4$, over a first range $E_1$ of from position $P_1$ to position $P_2$ (where the electrode is narrow) the atomizer 440 is raised in a curve with an upward gradient as shown with an arrow, over a second range E2 of from position $P_2$ to position $P_3$ (where the electrode is wide) it is moved horizontally as shown with an arrow, and over a third range $E_3$ of from position $P_3$ to position $P_4$ (where the electrode is narrow) it is lowered in a curve with a downward gradient as shown with an arrow.

However, the movement of the slurry nozzle 441 is not limited to this, and may be set freely in accordance with the shape of the negative electrode 412.

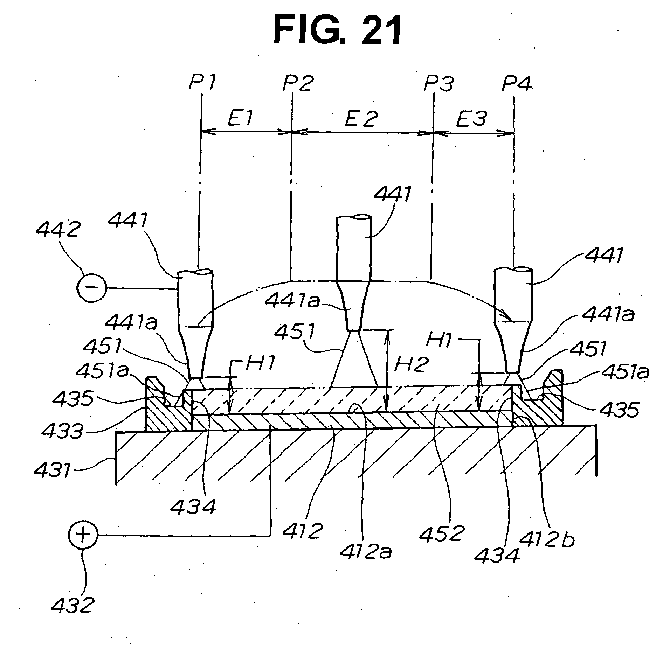

Fig. 21 shows an ion exchange film forming apparatus according to the invention.

While atomized slurry 451 is sprayed from the slurry nozzle 441, over the first range $E_1$ of from position $P_1$ to position $P_2$ the slurry nozzle 441 is raised in a curve with an upward gradient as shown with an arrow, over the second range $E_2$ of from position $P_2$ to position $P_3$ the slurry nozzle 441 is moved horizontally as shown with an arrow, and over the third range $E_3$ of from position $P_3$ to position $P_4$ the slurry nozzle 441 is lowered in a curve with a downward gradient as shown with an arrow.

In the first range $E_1$ of from position $P_1$ to position $P_2$, the width of the negative electrode 412 gradually increases as shown in Fig. 20 from a minimum width $W_1$ to a maximum width $W_2$. Because of this, as the slurry nozzle 441 is moved over the first range $E_1$ of from position $P_1$ to position $P_2$, the slurry nozzle 441 is raised in a curve with an upward gradient as shown with an arrow from the position of height $H_1$. By this means, the width of the atomized slurry sprayed from the slurry nozzle 441 is changed in correspondence with the width of the negative electrode 412, and slurry can be prevented from projecting from the negative electrode 412.

The sprayed amount of the atomized slurry 451 sprayed from the slurry nozzle 441 is increased along with the ascent of the slurry nozzle 441. By this means, the atomized slurry 451 can be applied uniformly to the negative electrode 412.

In the second range $E_2$ of from position $P_2$ to position $P_3$, as shown in Fig. 20 the width of the negative electrode 412 is constant at the maximum width $W_2$. Because of this, as the slurry nozzle 441 is moved over the second range $E_2$ of from position $P_2$ to position $P_3$, slurry nozzle 441 is moved horizontally while being held at a maximum height $H_2$. By this means, the width of the atomized slurry sprayed from the slurry nozzle 441 can be widened in correspondence with the maximum width $W_2$ of the negative electrode 412, and the maximum width $W_2$ of the negative electrode 412 can be coated with the atomized slurry.

In the second range $E_2$, the sprayed amount of the atomized slurry 451 sprayed from the slurry nozzle 441 is set to a maximum. By this means, the atomized slurry 451 can be applied uniformly to the negative electrode 412 in correspondence with the slurry on the first range $E_1$.

In the third range $E_3$ of from position $P_3$ to position $P_4$, as shown in Fig. 20 the width of the negative electrode 412 gradually decreases from the maximum width $W_2$ to the minimum width $W_1$. Because of this, as the slurry nozzle 441 is moved over the third range $E_3$ of from position $P_3$ to position $P_4$, the slurry nozzle 441 is lowered in a curve with a downward gradient as shown with an arrow from the maximum height position $H_2$ to the position of the minimum height $H_1$. By this means, the width of the atomized slurry sprayed from the slurry nozzle 441 is changed in correspondence with the width of the negative electrode 412, and the atomized slurry 451 can be prevented from projecting from the negative electrode 412 unnecessarily.

The sprayed amount of the atomized slurry 451 sprayed from the slurry nozzle 441 is decreased along with the descent of the slurry nozzle 441. By this means, the atomized slurry 451 can be applied uniformly to the negative electrode 412 in correspondence with the slurry on the first range $E_1$ and the second range $E_2$.

By the height of the slurry nozzle 441 being adjusted in correspondence with the width of the negative electrode 412 like this, for example where the negative electrode 412 is narrow, the atomized slurry 451 can be prevented from projecting from the negative electrode 412, and the atomized slurry 451 being applied to excess areas can be avoided.

Additionally, by the sprayed amount of the atomized slurry 451 being changed in correspondence with the variations in the height of the slurry nozzle 441, the slurry 452 can be applied to the surface 412a of the negative electrode 412 to a uniform thickness. By this means the surface of the ion exchange film 414 (see Fig. 19) can be made flat and the quality of the fuel cell can be made stable.

When the slurry nozzle 441 is disposed in position $P_1$ or position $P_4$, the peripheral part 451a of the atomized slurry 451 projects to outside the inner face 434 of the guide frame member 433; however, the projecting peripheral part 451a of the atomized slurry is recovered by the recovery groove 435.

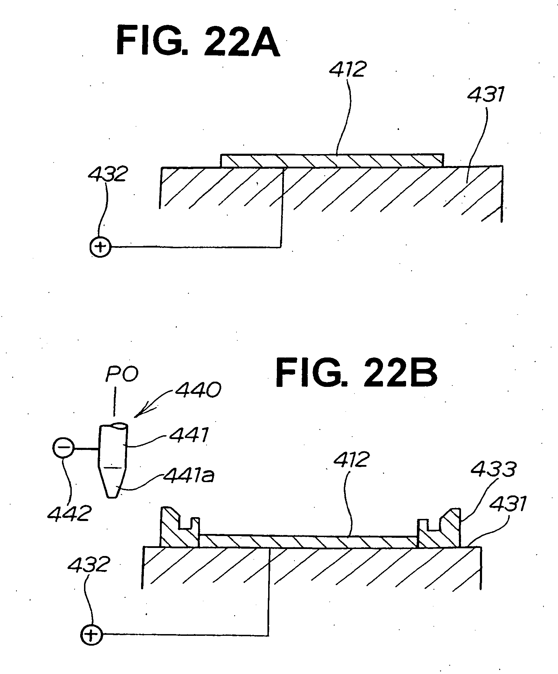

Next, a first method of forming an ion exchange film for a fuel cell (not subject matter of the invention) will be described, on the basis of Fig.22A to Fig.22J.

In Fig. 22A, the polygonal negative pole (electrode) 412 is formed from carbon paper, and the negative electrode 412 is placed on the bed 431. Then, the plus charge imparting means 432 is adjusted to impart a plus charge to the negative electrode 412.

In Fig. 22B, the guide frame member 433 is disposed so as to surround the negative electrode 412. Then, the minus charge imparting means 442 is adjusted to impart a minus charge to the atomized slurry 451 (see Fig. 21) to be sprayed from the slurry nozzle 441.

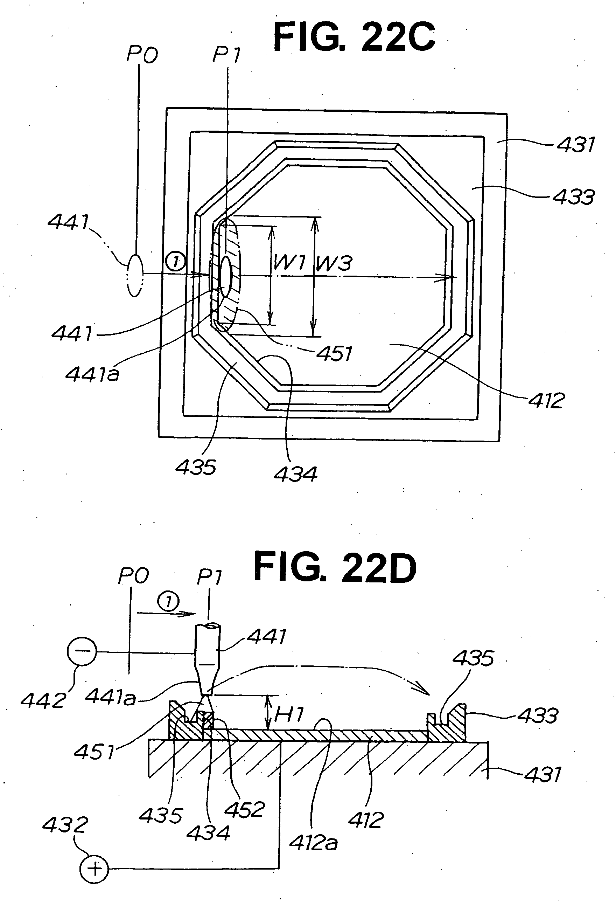

In Fig. 22C, when the slurry nozzle 441 has moved horizontally from a standby position $P_O$ as shown by the arrow [1] and reached a first spraying position $P_1$, the atomized slurry 451 is sprayed from the slurry nozzle 441.

In Fig. 22D, by the slurry nozzle 441 being disposed low so that its end part 441a is at a height $H_1$ from the surface 412a of the negative electrode 412, the width $W_3$ of the atomized slurry 451 can be set so that it is slightly greater than the width (minimum width) $W_1$ of the end of the negative electrode 412, as shown in Fig. 22C. By this means, the atomized slurry 451 is prevented from projecting more than necessary from the negative electrode 412.

The peripheral part of the atomized slurry 451 which projects to outside the inner face 434 of the guide frame member 433 is recovered by the recovery groove 435.

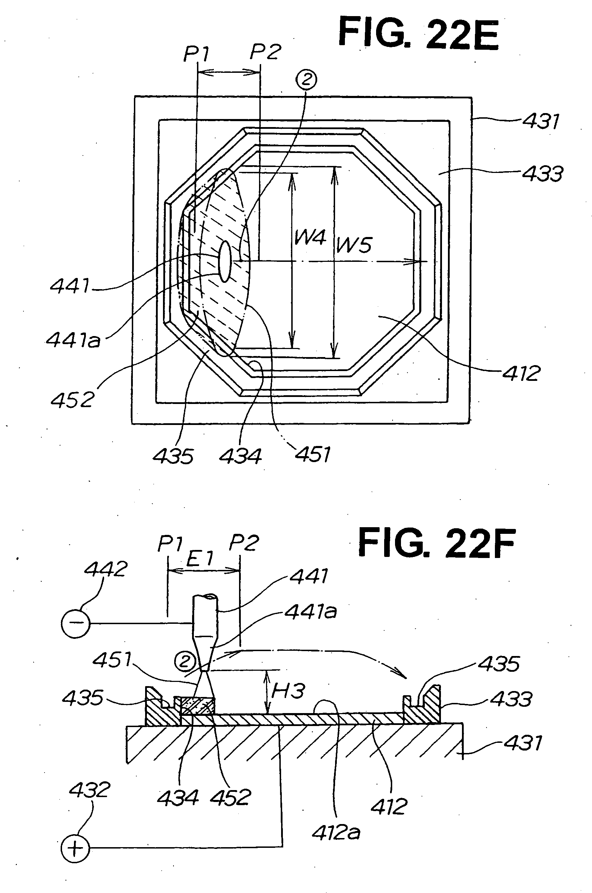

In Fig. 22E, with the atomized slurry 451 spraying from the slurry nozzle 441, the slurry nozzle 441 is moved from position $P_1$ to position $P_2$ as shown by the arrow [2].

In Fig. 22F, because over the first range $E_1$ of from position $P_1$ to position $P_2$ the slurry nozzle 441 rises in a curve with an upward gradient, the height $H_3$ of the end part 441a of the slurry nozzle 441 gradually rises along with the movement of the slurry nozzle 441. Therefore, as shown in Fig. 22E, the width $W_5$ of the atomized slurry 451 sprayed from the slurry nozzle 441 can be gradually increased in correspondence with the width $W_4$ of the tapering part of the negative electrode 412. By this means, it is possible to avoid the atomized slurry 451 projecting from the negative electrode 412 more than necessary.

The peripheral part of the atomized slurry 451 which projects to outside the inner face 434 of the guide frame member 433 is recovered by way of the recovery groove 435.

Additionally, if control is carried out so that the sprayed amount of the atomized slurry 451 is increased gradually along with the ascent of the slurry nozzle 441, the slurry 452 is applied to the surface 412a of the negative electrode 412 to a uniform thickness, as shown in Fig. 22F.

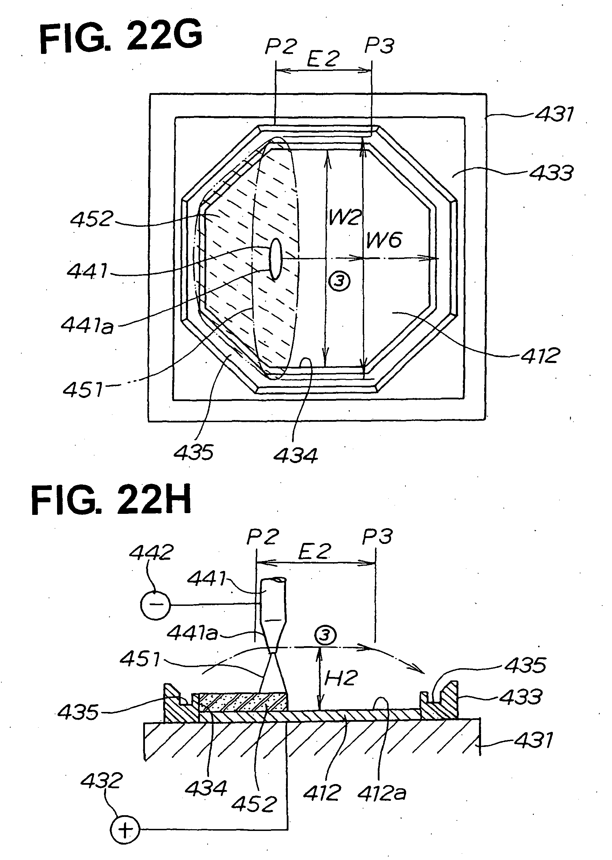

In Fig. 22G, with the atomized slurry 451 spraying from the slurry nozzle 441, the slurry nozzle 441 is moved as shown by the arrow [3] from position $P_2$ to position P3.

In Fig. 22H, the slurry nozzle 441 is moved horizontally through the second range $E_2$ of from position $P_2$ to position $P_3$ at the maximum height $H_2$. Consequently, as shown in Fig. 22G, the width W6 of the atomized slurry 451 sprayed from the slurry nozzle 441 can be kept slightly greater than the maximum width $W_2$ of the negative electrode 412. By this means, the whole maximum width of the negative electrode 412 can be coated with the atomized slurry 451.

The peripheral part of the atomized slurry 451 which projects to outside the inner face 434 of the guide frame member 433 is recovered by way of the recovery groove 435.

Additionally, to spray the atomized slurry 451 from the slurry nozzle 441 at the maximum height $H_2$, if control is carried out so that the sprayed amount of the atomized slurry 451 is increased to a maximum, as shown in Fig. 22H, the slurry 452 is applied to the surface 412a of the negative electrode 412 to a uniform thickness.

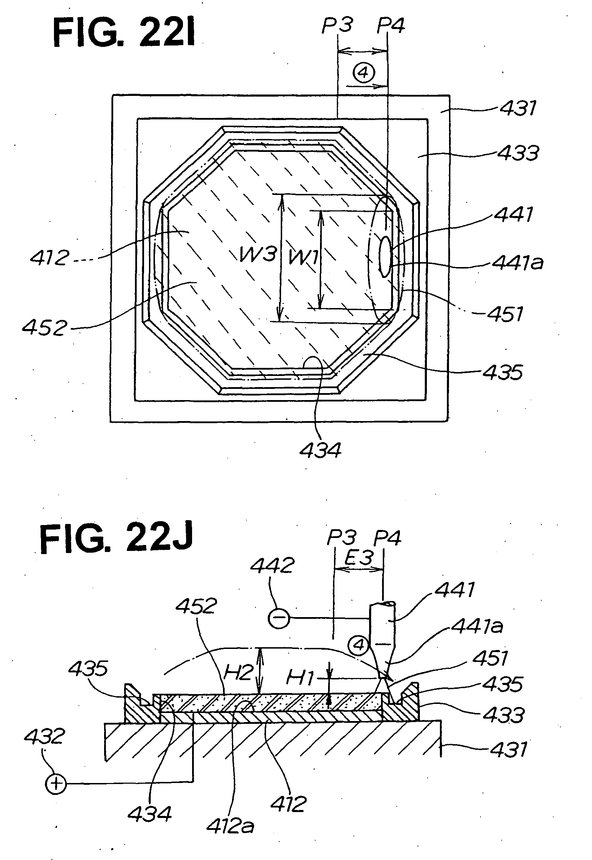

In Fig. 22I, with the atomized slurry 451 spraying from the slurry nozzle 441, the slurry nozzle 441 is moved from position $P_3$ to position $P_4$ as shown by the arrow [4].

In Fig. 22J, the slurry nozzle 441 descends in a curve with a downward gradient over the third range $E_3$ of from position $P_3$ to position $P_4$, as shown by the arrow [4]. The end part 441a of the slurry nozzle 441 descends gradually from the maximum height $H_2$ to the minimum height $H_1$ along with the movement of the slurry nozzle 441. Consequently, as shown in Fig. 22I, the width $W_3$ of the atomized slurry 451 sprayed from the slurry nozzle 441 can be gradually made smaller in correspondence with the width (minimum width) $W_1$ of the other end of the negative electrode 412. As a result, the atomized slurry 451 does not project more than necessary from the negative electrode 412.

The peripheral part of the atomized slurry 451 which projects to outside the inner face 434 of the guide frame member 433 is recovered by way of the recovery groove 435.

Additionally, by control being carried out so that along with the descent of the slurry nozzle 441 the sprayed amount of the atomized slurry 451 is gradually decreased, the slurry 452 is applied to the surface 412a of the negative electrode 412 to a uniform thickness.

By the slurry nozzle 441 reaching the position $P_4$ in this way, the process of applying the slurry 452 ends. On completion of the coating process, the slurry 452 applied to the negative electrode 412 is dried to form the ion exchange film 414 (see Fig. 19).

With the first ion exchange film forming method described above, by imparting a plus charge to the negative electrode 412 and imparting a minus charge to the atomized slurry 451 sprayed from the slurry nozzle 441, it is possible to prevent coating nonuniformity of the slurry 452. By this means, the ion exchange film 414 shown in Fig. 19 can be formed to a uniform thickness

Additionally, by regulating the application area of the slurry 452 with the guide frame member 433, it is possible to form the slurry 452 to the required shape simply. Consequently, the edge 414a of the ion exchange film 414 can be formed well without difficulty.

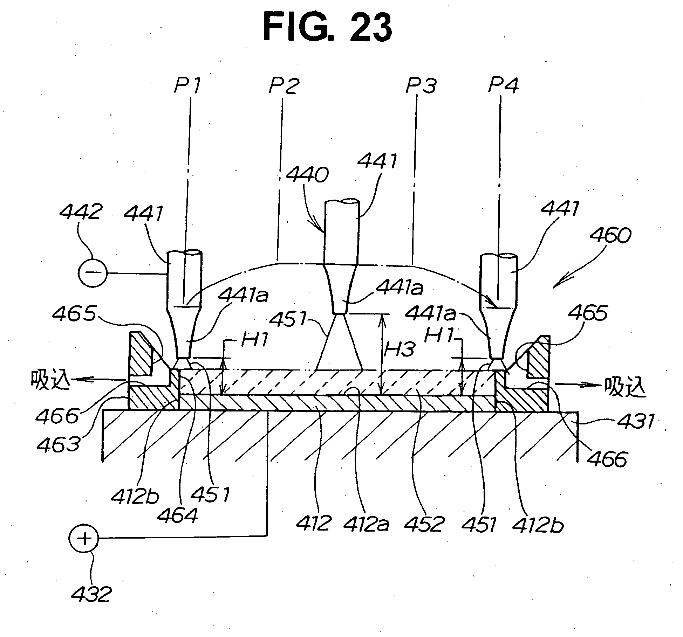

Next, a second method of forming the ion exchange film (not subject matter of the invention) will be described, on the basis of Fig. 23.

In the forming apparatus for implementing the second forming method shown in Fig. 23, parts the same as in the forming apparatus 430 for implementing the first forming method shown in Fig. 21 have been given the same reference numerals.

The ion exchange film forming apparatus 460 shown in Fig. 23 has a bed 431 for placing a negative electrode 412 upon, a guide frame member 463 which surrounds the negative electrode 412 when set on this bed 431, and an atomizer 440 provided above this guide frame member 463.

The guide frame member 463 has an inner face 464 of a shape which follows the periphery 412b of the negative electrode 412. A recovery groove 465 is formed so as to follow this inner face 464. A recovery hole 466 connecting with this recovery groove 465 is provided. Suction means (not shown) are connected to the recovery groove 465 by way of this suction hole 466. The inner face 464 is coated with a coating

By suction means being connected to the recovery groove 465, because slurry collecting in the recovery groove 465 can be drawn out, the slurry can be recovered more easily. Consequently, fuel cell productivity can be greatly increased.

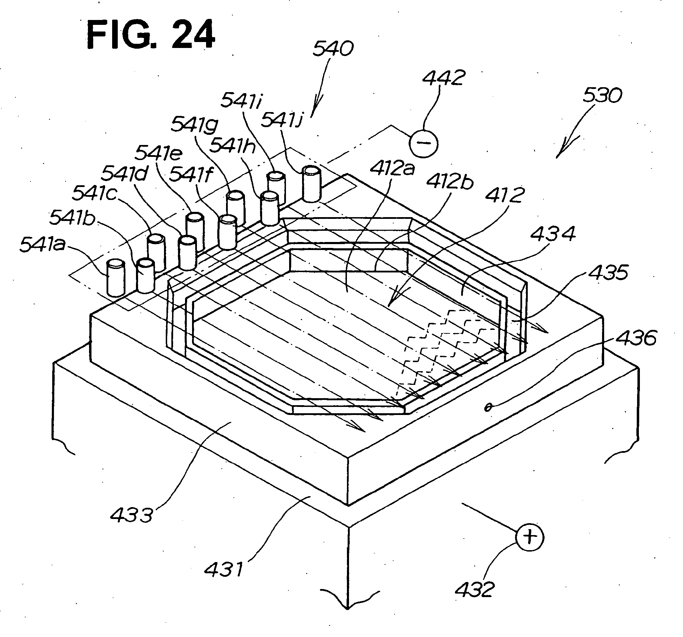

Although in the foregoing first and second forming methods examples were described wherein a slurry 452 is applied to a negative electrode 412, the same effects can be obtained in applying a slurry 452 to a positive electrode 416. Next, a forming apparatus for implementing a third ion exchange film manufacturing method (not subject matter of the invention) will be described, on the basis of Fig. 24 through Fig. 26.

In the description of this third ion exchange film forming apparatus, parts the same as in the forming apparatus 430 for implementing the first forming method shown in Fig. 21 have been given the same reference numerals.

A third ion exchange film forming apparatus 530 has a bed 431 for the octagonal negative electrode 412 shown in Fig. 19 to be place upon, a guide frame member 433 which surrounds the negative electrode 412 when set on this bed 431, and a spraying device 540 disposed above this guide frame member 433.

The bed 431 has plus charge imparting means 432 for imparting a plus charge to the negative electrode 412.

The guide frame member 433 has an octagonal inner face 434 formed to follow the periphery 412b of the negative electrode 412 (see Fig. 19), a recovery groove 435 formed to follow this inner face 434, and a recovery hole 436 formed to connect with this recovery groove 435. A coating (not shown) has been applied to the inner face 434.

The spraying device 540 has multiple slurry nozzles 541a through 541j disposed in a zigzag. The multiple slurry nozzles 541a through 541j are supported movably as shown by an arrow. The slurry nozzles 541a through 541j are each given a minus charge by minus charge imparting means 442. That is, the minus charge imparting means 442 imparts a minus charge to the slurry sprayed from each of the slurry nozzles 541a through 541j.

The slurry nozzles 541a through 541j are constructed to be individually switchable between a state in which they spray slurry and a state in which they do not spray slurry.

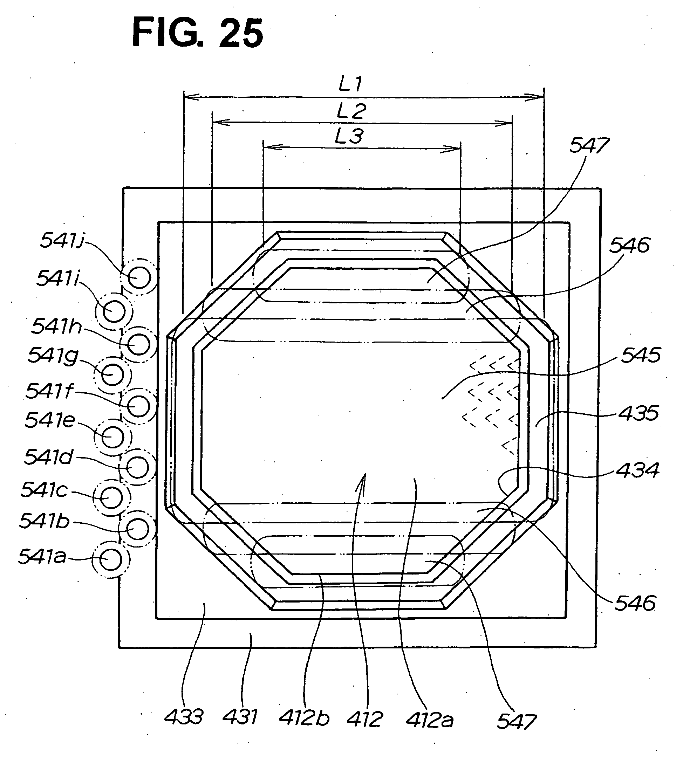

Referring to Fig. 25, the multiple slurry nozzles 541a through 541j are made up of for example a first slurry nozzle through a tenth slurry nozzle 541a through 541j, and these slurry nozzles 541a through 541j are disposed in a zigzag shape.

By the third through eighth slurry nozzles 541c through 541h among these first through tenth slurry nozzles 541a through 541j being brought to their spraying state over a distance $L_1$, a first area 545 located in the center of the negative electrode 412 can be coated.

By the second slurry nozzle 541b positioned on the outer side of the third slurry nozzle 541c and the ninth slurry nozzle 541i positioned on the outer side of the eighth slurry nozzle 541h being brought to their spraying state over a distance $L_2$, second areas 546, 546 on the outer sides of the first area 545 can be coated.

And by the first slurry nozzle 541a positioned on the outer side of the second slurry nozzle 541b and the tenth slurry nozzle 541j positioned on the outer side of the ninth slurry nozzle 541i being brought to their spraying state over a distance $L_3$, third areas 547, 547 on the outer sides of the second areas 546, 546 can be coated.

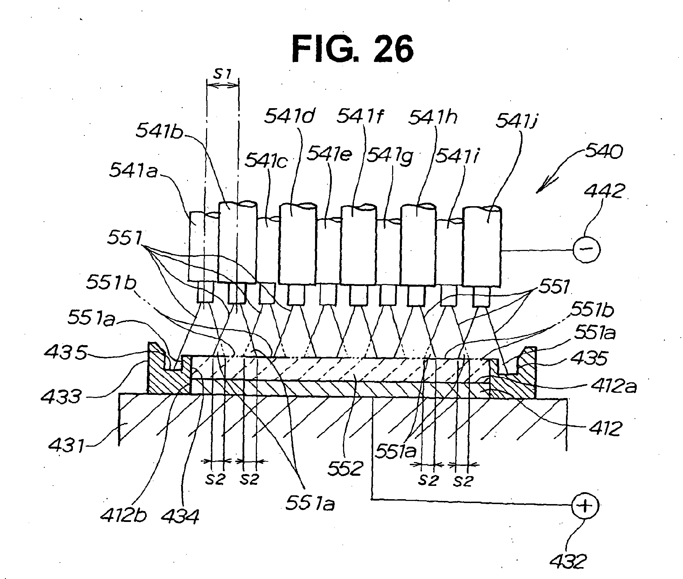

Fig. 26 shows in sectional view the ion exchange film forming apparatus shown in Fig. 24 and Fig. 25. First through tenth slurry sprays 551 are sprayed from the first through tenth slurry nozzles 541a through 541j disposed in a zigzag shape as shown in Fig. 25, and a slurry 552 is thereby applied to the negative electrode 412.

Here, the application amounts of respective peripheral parts 551a of the slurry sprays 551 sprayed from the first through tenth slurry nozzles 541a through 541j are small. Because of this, to make the application amounts of the peripheral parts 551a equal to the application amounts of the central parts 551b, it is necessary for the application amounts of the peripheral parts 551a to be supplemented. Now, as a method of supplementing the application amounts of the peripheral parts 551a, making the peripheral parts 551a, 551a of adjacent slurry sprays 551, 551 overlap with each other is conceivable.

However, when the peripheral parts 551a, 551a of adjacent slurry sprays 551, 551 interfere with each other, turbulence arises in the interfering peripheral parts 551a, 551a and the slurry 552 cannot be applied well. To avoid this, the first through tenth slurry nozzles 541a through 541j are arranged in a zigzag shape, to prevent the peripheral parts 551a, 551a of adjacent slurry sprays 551, 551 from interfering with each other.

That is, in an initial state, before the first through tenth slurry nozzles 541a through 541j move in the direction shown by the arrows, as shown in Fig. 25, the first through tenth slurry nozzles 541a through 541j are disposed so that the peripheral parts 551a of the slurry sprays 551 sprayed from the first through tenth slurry nozzles 541a through 541j do not overlap.

However, when the first through tenth slurry nozzles 541a through 541j are moved, the first of the adjacent slurry sprays 551, 551 are applied to the surface of the negative electrode 412 first, and then the peripheral parts 551a of the other slurry sprays 551 are applied to the peripheral parts in the applied slurry 552, whereby the peripheral parts 551a, 551a of the adjacent slurry sprays 551, 551 can be applied in an overlapping state without turbulence arising in the adjacent slurry sprays 551, 551.

As a result of it being possible for peripheral parts 551a of the slurry sprays 551 to be applied in an overlapping state without turbulence arising in the adjacent slurry sprays 551, the applied amounts of the peripheral parts 551a of the slurry sprays 551 sprayed from the first through tenth slurry nozzles 541a through 541j can be made equal to the applied amounts of the central parts 551b of the respective slurry sprays 551.

That is, the spacing $S_1$ of the adjacent slurry nozzles 541a through 541j is set so that coating is possible with the peripheral parts 551a of the slurry sprays 551 sprayed from the second, fourth, sixth, eighth and tenth slurry nozzles 541b, 541d, 541f, 541h and 541j overlapping by an amount of overlap S2 with the peripheral parts 551a of the slurry sprays 551 sprayed from the first, third, fifth, seventh and ninth slurry nozzles 541a, 541c, 541e, 541g and 541i.

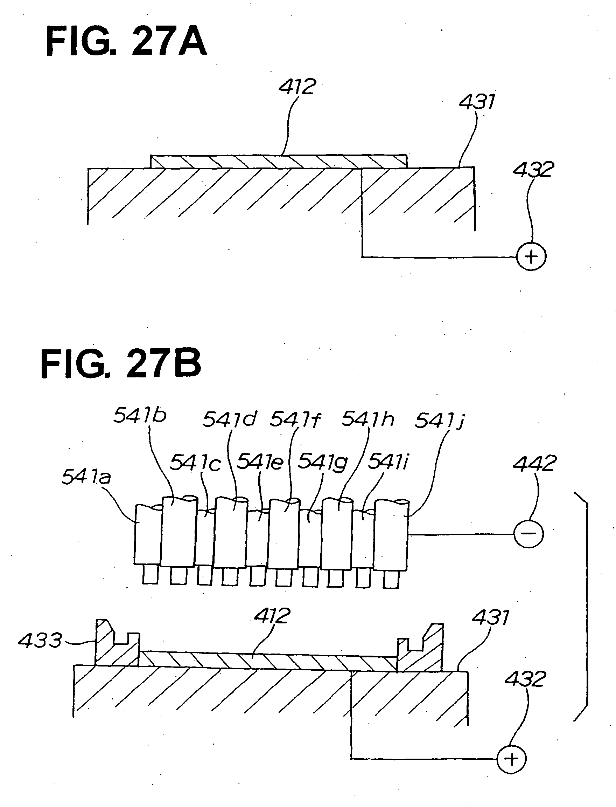

Next, a third method of forming an ion exchange film for a fuel cell (not subject matter of the invention) will be described, on the basis of Fig. 27A through Fig. 27J.

In Fig. 27A, the polygonal negative pole (electrode) 412 is formed from carbon paper, and the negative electrode 412 is placed on the bed 431. Then, the plus charge imparting means 432 is adjusted to impart a plus charge to the negative electrode 412.

In Fig. 27B, the guide frame member 433 is disposed so as to surround the negative electrode 412. Then, the minus charge imparting means 442 is adjusted to impart a minus charge to the slurry sprays 551 (see Fig. 26) to be sprayed from the first through tenth slurry nozzles 541a through 541j.

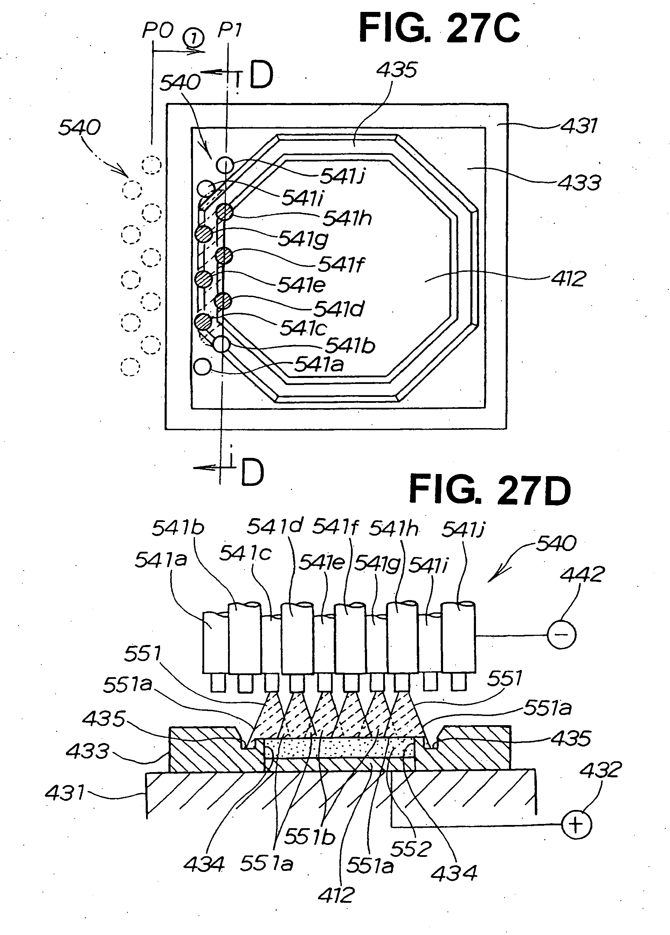

In Fig. 27C, when the first through tenth slurry nozzles 541a through 541j have moved horizontally from a standby position $P_0$ as shown by the arrow [1] and reached a first spraying position $P_1$, the slurry sprays 551 (see Fig. 27D) are sprayed from the third through eighth slurry nozzles 541c through 541h.

Fig. 27D is a sectional view on the line D-D in Fig. 27C. In Fig. 27D, by the first through tenth slurry nozzles 541a through 541j being moved horizontally across the negative electrode 412, the peripheral parts 551a of the slurry sprays 551 sprayed from the third, fifth, and seventh slurry nozzles 541c, 541e and 541g are applied to overlap with the surfaces coated with the peripheral parts 551a of the slurry sprays 551 sprayed from the fourth, sixth and eighth slurry nozzles 541d, 541f and 541h. By this means, the application amounts of the peripheral parts 551a of the slurry sprays 551 sprayed from the third through eighth slurry nozzles 541c through 541h can be made equal to the application amounts of the central parts 551b of those slurry sprays 551.

On the other hand, to keep the application amounts equal, the peripheral parts 551a of the slurry sprays 551 sprayed from the third and eighth slurry nozzles 541c and 541h are made to project to outside the inner face 434 of the guide frame member 433. These projecting peripheral parts 551a are recovered by way of the recovery groove 435.

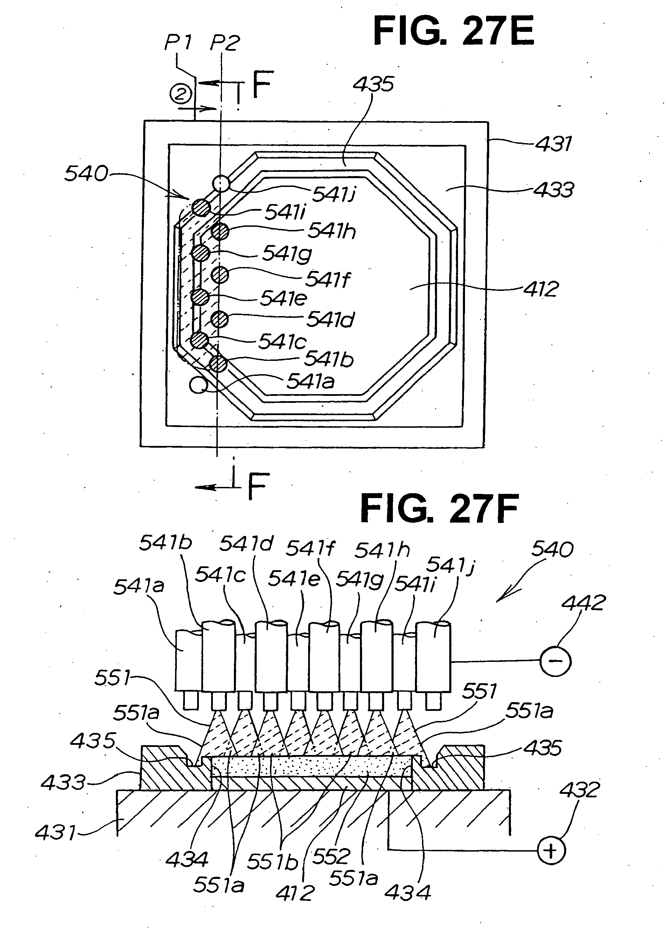

In Fig. 27E, when the first through tenth slurry nozzles 541a through 541j have moved horizontally from a first spraying position $P_1$ as shown by the arrow [2] and reached a second spraying position $P_2$, with the slurry sprays 551 (see Fig. 27F) from the third through eighth slurry nozzles 541c through 541h still spraying, slurry sprays 551 are sprayed from the second and ninth slurry nozzles 541b, 541i.

Fig. 27F is a sectional view on the line F-F in Fig. 27E. In Fig. 27F, by the first through tenth slurry nozzles 541a through 541j being moved further horizontally across the negative electrode 412, the peripheral parts 551a of the slurry sprays 551 sprayed from the third, fifth, seventh and ninth slurry nozzles 541c, 541e, 541g and 541i are applied to overlap with the surfaces coated with the peripheral parts 551a of the slurry sprays 551 sprayed from the second, fourth, sixth and eighth slurry nozzles 541b, 541d, 541f and 541h. By this means, the application amounts of the peripheral parts 551a of the slurry sprays 551 sprayed from the second through eighth slurry nozzles 541b through 541i can be made equal to the application amounts of the central parts 551b of the slurry sprays 551.

On the other hand, to keep the application amounts equal, the peripheral parts 551a of the slurry sprays 551 sprayed from the second and ninth slurry nozzles 541b and 541i are made to project to outside the inner face 434 of the guide frame member 433. These projecting peripheral parts 551a are recovered by way of the recovery groove 435.

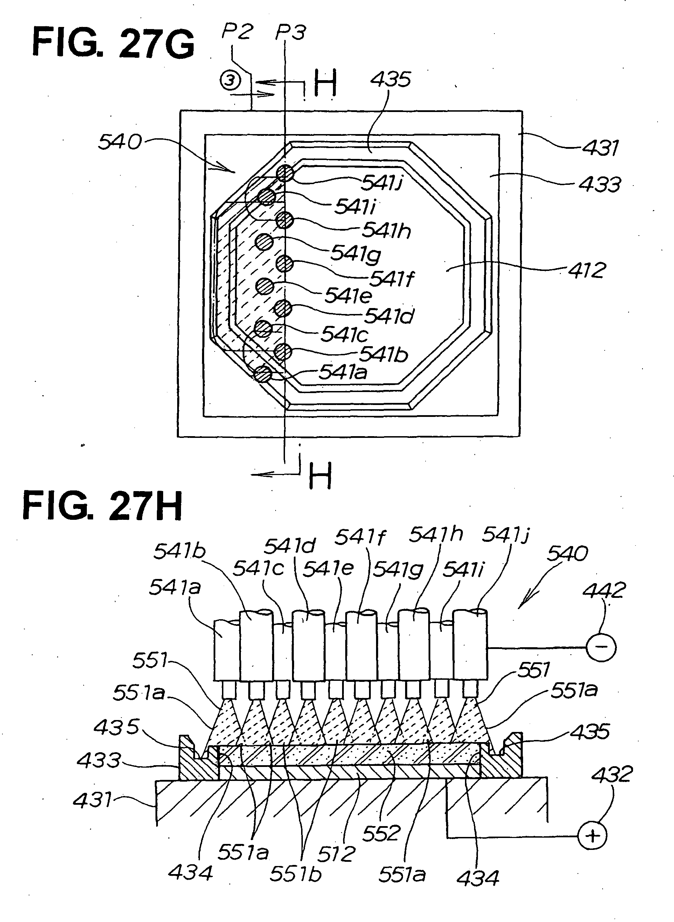

In Fig. 27G, when the first through tenth slurry nozzles 541a through 541j have moved horizontally from the second spraying position $P_2$ as shown by the arrow [3] and reached a third spraying position $P_3$, with the slurry sprays 551 (see Fig. 27H) from the second through ninth slurry nozzles 541b through 541i still spraying, slurry sprays 551 are sprayed from the first and tenth slurry nozzles 541a, 541j.

Fig. 27H is a sectional view on the line H-H in Fig. 27G. In Fig. 27H, by the first through tenth slurry nozzles 541a through 541j being moved further horizontally across the negative electrode 412, the peripheral parts 551a of the slurry sprays 551 sprayed from the first, third, fifth, seventh and ninth slurry nozzles 541a, 541c, 541e, 541g and 541i are applied to overlap with the surfaces coated with the peripheral parts 551a of the slurry sprays 551 sprayed from the second, fourth, sixth eighth and tenth slurry nozzles 541b, 541d, 541f, 541h and 541j. By this means, the application amounts of the peripheral parts 551a of the slurry sprays 551 sprayed from the first through tenth slurry nozzles 541a through 541j can be made equal to the application amounts of the central parts 551b of those slurry sprays 551.

On the other hand, to keep the application amounts equal, the peripheral parts 551a of the slurry sprays 551 sprayed from the first and tenth slurry nozzles 541a and 541j are made to project to outside the inner face 434 of the guide frame member 433. These projecting peripheral parts 551a are recovered by way of the recovery groove 435.

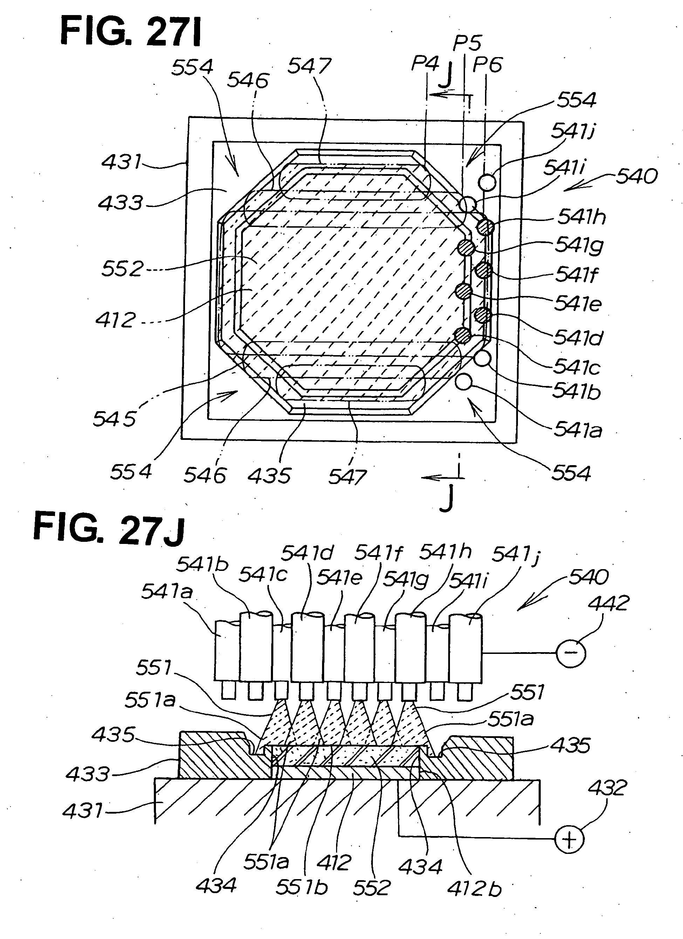

In Fig. 27I, when the first through tenth slurry nozzles 541a through 541j have reached a fourth spraying position $P_4$, the spraying of the slurry sprays 551 from the first and tenth slurry nozzles 541a, 541j is stopped. As a result, the coating of the third areas 547, 547 ends.

Next, when the first through tenth slurry nozzles 541a through 541j have reached a fifth spraying position $P_5$, the spraying of the slurry sprays 551 from the second and ninth slurry nozzles 541b, 541i is stopped. As a result, the coating of the second areas 546, 546 ends.

Then, when the first through tenth slurry nozzles 541a through 541j have reached a sixth spraying position P6, the spraying of the slurry sprays 551 from the third through eighth slurry nozzles 541c through 541h is stopped. As a result, the coating of the first area 545 ends.

With the ending of the coating of the first area 545, the process of applying the slurry 552 to the negative electrode 412 is completed. After the completion of the application process, by the slurry 552 applied to the negative electrode 412 being dried, the ion exchange film 414 (see Fig. 19) is formed.

With this third forming method, by using multiple slurry nozzles 541a through 541j, when some of the slurry nozzles fall outside the periphery 412b of the negative electrode 412, no slurry sprays 551 are sprayed from the slurry nozzles having fallen outside. By this means, because it is possible to avoid the slurry 552 being applied to the areas 554 outside the periphery 412b of the negative electrode 412 (i.e. the corner parts of the guide frame member 433), the time required for recovering slurry after the application can be shortened.

Because slurry sprays 551 are sprayed and applied to the negative electrode 412 individually from multiple slurry nozzles 541a through 541j, the slurry spray amounts from the respective slurry nozzles 541a through 541j can be adjusted individually. As a result, without making the spraying accuracy of the slurry nozzles 541a through 541j unnecessarily high, just by adjusting the slurry spray amounts from the respective slurry nozzles 541a through 541j individually, it is possible to make the surface of the slurry 552 flat relatively easily.

Also, by imparting a plus charge to the negative electrode 412 and imparting a minus charge to the slurry sprayed from the first through tenth slurry nozzles 541a through 541j, it is possible to prevent coating nonuniformity of the slurry 552. By this means, the ion exchange film 414 shown in Fig. 19 can be formed to a uniform thickness.

Furthermore, as explained with reference to Fig. 27C through Fig. 27H, in the spraying of the slurry sprays 551 from the first through tenth slurry nozzles 541a through 541j, the peripheral parts 551a of the slurry sprays 551 sprayed from the first, third, fifth, seventh and ninth slurry nozzles 541a, 541c, 541e, 541g and 541i can be applied to overlap with the surfaces coated with the peripheral parts 551a of the slurry sprays 551 sprayed from the second, fourth, sixth eighth and tenth slurry nozzles 541b, 541d, 541f, 541h and 541j. By this means, the slurry 551 sprayed from the first through tenth slurry nozzles 541a through 541j can be applied uniformly to the negative electrode 412 and the thickness of the ion exchange film 414 shown in Fig. 19 can be made uniform.

Additionally, by regulating the application areas (the first, second and third areas) 545, 546, 547 of the slurry 552 with the guide frame member 433, it is possible to form the slurry 552 to the required shape simply. Consequently, the edge 414a of the ion exchange film 414 can be formed well without difficulty.

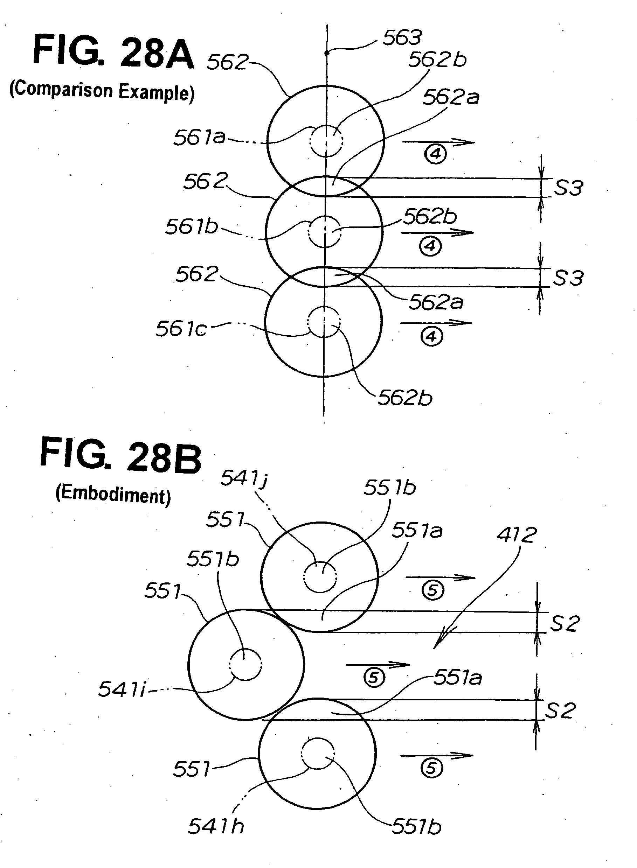

Fig. 28A and Fig. 28B are views comparing the characteristics of a fuel cell ion exchange film forming method described in the application with a comparison example. Fig. 28A shows the comparison example, and Fig. 28B shows as an embodiment the slurry nozzles 541h, 541i, 541j, which are some of the slurry nozzles 541a through 541j.

In the comparison example shown in Fig. 28A, slurry nozzles 561a through 561c are disposed on straight line 563, and when slurry sprays 562 are sprayed from the slurry nozzles 561a through 561c, peripheral parts 562a of adjacent slurry sprays 562 interfere with each other and turbulence arises in the peripheral parts 562a of the slurry sprays 562. Consequently, because it is not possible for the slurry to be applied uniformly even by moving the slurry nozzles 561a through 561c as shown with the arrows, the thickness of the ion exchange film cannot be made uniform.

In Fig. 28B, the slurry nozzles 541h, 541i and 541j are disposed in a zigzag shape so that the peripheral parts 551a of the slurry sprays 551 do not interfere with each other.

When the slurry nozzles 541h, 541i and 541j move horizontally as shown by the arrows [5], first the surface of the negative electrode 412 is coated with the peripheral parts 551a of the slurry sprays 551 sprayed from the slurry nozzles 541h and 541j, and then the peripheral parts 551a of the slurry sprays 551 sprayed from the slurry nozzle 541i are applied to overlap. Thus the slurry 552 (see Fig. 27J) can be applied uniformly, and the thickness of the ion exchange film 414 shown in Fig. 19 can be made uniform.

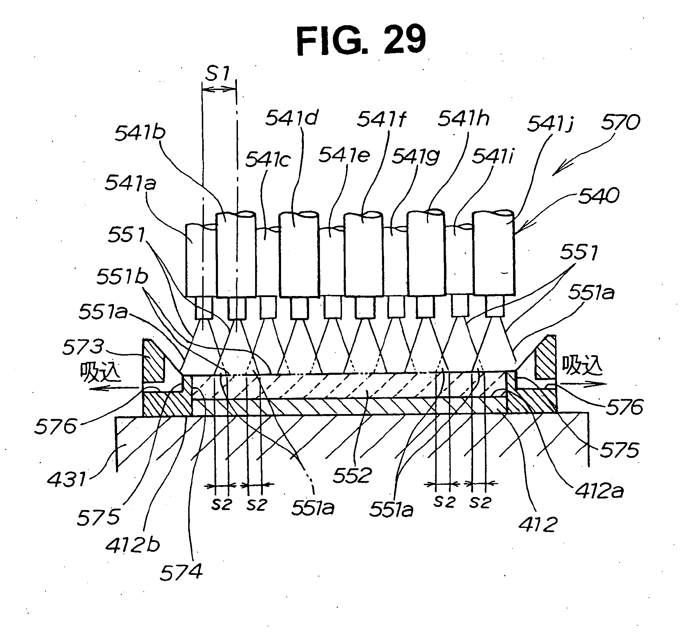

Fig. 29 shows an ion exchange film forming apparatus for implementing a fourth ion exchange film forming method. In the description of this fourth forming method, parts the same as parts of the forming apparatus for implementing the third forming method shown in Fig. 26 have been given the same reference numerals.

An ion exchange film forming apparatus 570 has a bed 431 for placing a negative electrode 412 upon, a guide frame member 573 which surrounds the negative electrode 412 when set on this bed 431, and a spraying device 540 disposed above this guide frame member 573.

The guide frame member 573 has an inner face 574 formed so as to follow the periphery 412b of the negative electrode 412, a recovery groove 575 formed so as to follow this inner face 574, and suction passages 576 formed so as to connect with this recovery groove 575. By suction means not shown in the drawing, slurry collected in the recovery groove 575 is recovered through the suction passages 576. A coating has been applied to the inner face 574.

By connecting suction means to the recovery groove 575 like this, slurry collecting in the recovery groove 575 can be drawn out, and the slurry can be more easily recovered. Consequently, fuel cell productivity can be increased further.

Although in the third and fourth ion exchange film forming methods examples were described wherein a slurry 552 was applied to a negative electrode 412, it is not limited to this, and a slurry 552 may alternatively be applied to a positive electrode 416.

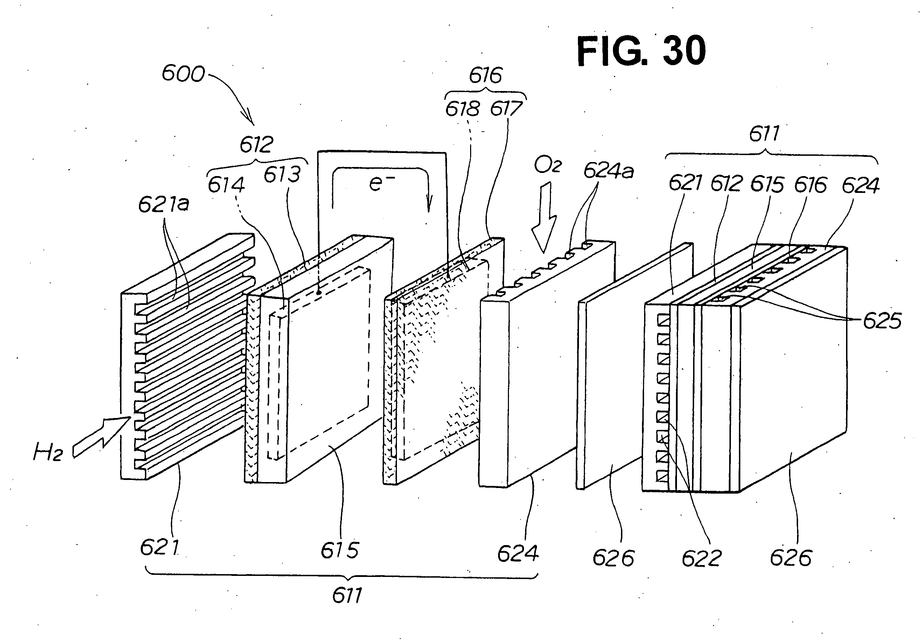

Fig. 30 is an exploded perspective view of a fuel cell having a fuel cell electrode according to an eighth embodiment of the invention.

A fuel cell unit 600 of this embodiment is made up of a plurality of (in this example, two) fuel cells 611, 611. Each fuel cell 611 has a negative electrode plate 612, an ion exchange film 615, a positive electrode plate 616 stacked against the ion exchange film 615, a negative electrode side flow channel plate 621 disposed on the outer side of the negative electrode plate 612, and a positive electrode side flow channel plate 624 disposed on the outer side of the positive electrode plate 616. The negative electrode 612 is made up of a negative substrate 613 and a negative pole (electrode) 614. The positive electrode plate 616 is made up of a positive substrate 617 and a positive pole (electrode) 618.

A plurality of these fuel cells 611 are provided with separators 626 between them to constitute the fuel cell unit 600.

By the negative electrode side flow channel plate 621 being stacked against the negative substrate 613 and flow channels 621a in the negative electrode side flow channel plate 621 being covered by the negative substrate 613, hydrogen gas flow passages 622 are formed. And by the positive electrode side flow channel plate 624 being stacked against the positive substrate 617 and flow channels 624a in the positive electrode side flow channel plate 624 being covered by the positive substrate 617, oxygen gas flow passages 625 are formed.

By hydrogen gas being supplied to the hydrogen gas flow passages 622, hydrogen molecules ($H_2$) are adsorbed onto a catalyst included in the negative electrode 614. And by oxygen gas being supplied to the oxygen gas flow passages 625, oxygen molecules ($O_2$) are adsorbed onto a catalyst included in the positive electrode 618. As a result, electrons ($e^-$) flow as shown by the arrow and a current is produced. When the current arises, product water ($H_2O$) is obtained from the hydrogen molecules ($H_2$) and oxygen molecules ($O_2$).

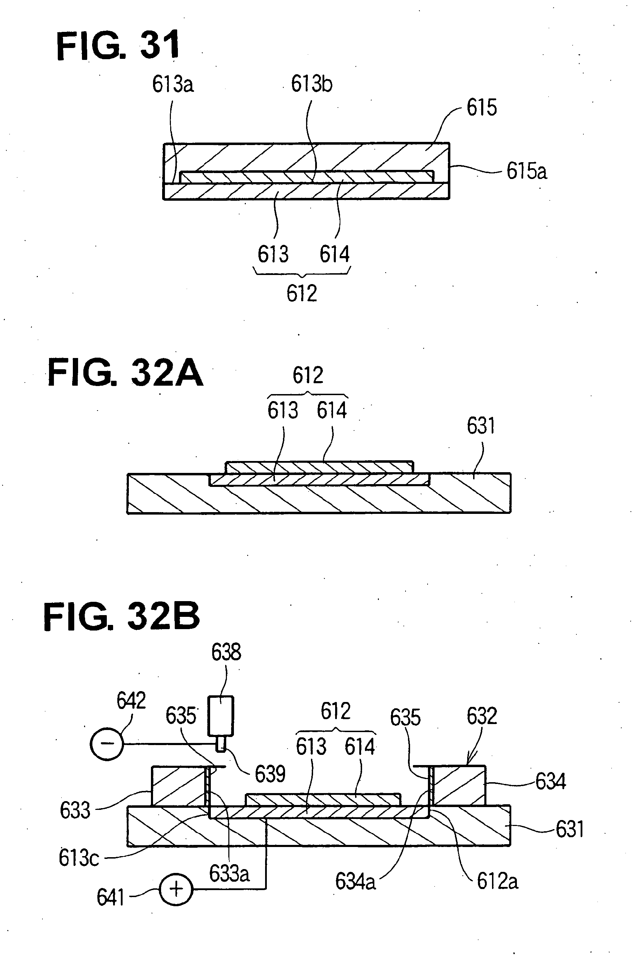

Fig. 31 shows a cross-section of the negative electrode plate 612 and the ion exchange film 615 shown in Fig. 30. The negative electrode plate 612 is formed by providing the negative electrode 614 on the negative substrate 613. A surface part 613a of the negative substrate 613 projecting from the periphery of the negative electrode 614 is covered by the ion exchange film 615.

The negative substrate 613 is a sheet of carbon paper made of carbon, and has the negative electrode 614 provided on one side 613b thereof. A catalyst is included in this negative electrode 614, and hydrogen molecules ($H_2$) are adsorbed onto this catalyst.

The positive substrate 617 shown in Fig. 30 is a sheet of carbon paper made of carbon like this negative substrate 613, and has the positive electrode 618 on one side thereof. A catalyst is included in this positive electrode 618, and oxygen molecules ($O_2$) are adsorbed onto this catalyst.

The ion exchange film 615 is obtained by applying a resin solution (for example an HC polymer solution) to the negative electrode 614 and the surface part 613a of the negative substrate 613 which projects from the negative electrode 614, and then drying the resin solution. Next, a method of forming the ion exchange film shown in Fig. 31 (not subject matter of the invention) will be described, on the basis of Fig. 32A through Fig. 32G.

In Fig. 32A, a negative electrode plate (negative electrode) 612 made by applying a negative pole (electrode) 614 to a negative substrate (substrate) 613 is prepared, and this negative electrode plate 612 is placed on a bed 631.

In Fig. 32B, by an outer side regulating wall member 632 being disposed along the periphery 612a of the negative electrode plate 612, the negative electrode plate 612 is surrounded with this outer side regulating wall member 632. This outer side regulating wall member 632 is made up of two divided left and right outer side regulating wall members 633, 634. After the negative electrode plate 612 is surrounded with the two outer side regulating wall members 633, 634, coatings 635, 635 are applied to the inner walls 633a, 634a of the outer side regulating wall members 633, 634.

Then, a spraying device 638 is disposed above the negative electrode plate 612 (for example, above one end 613c of the negative substrate 613. After that, plus charge imparting means 641 is adjusted to impart a plus charge to the negative electrode plate 612, and minus charge imparting means 642 is adjusted to impart a minus charge to the resin solution sprayed from the nozzle 639 of the spraying device 638.

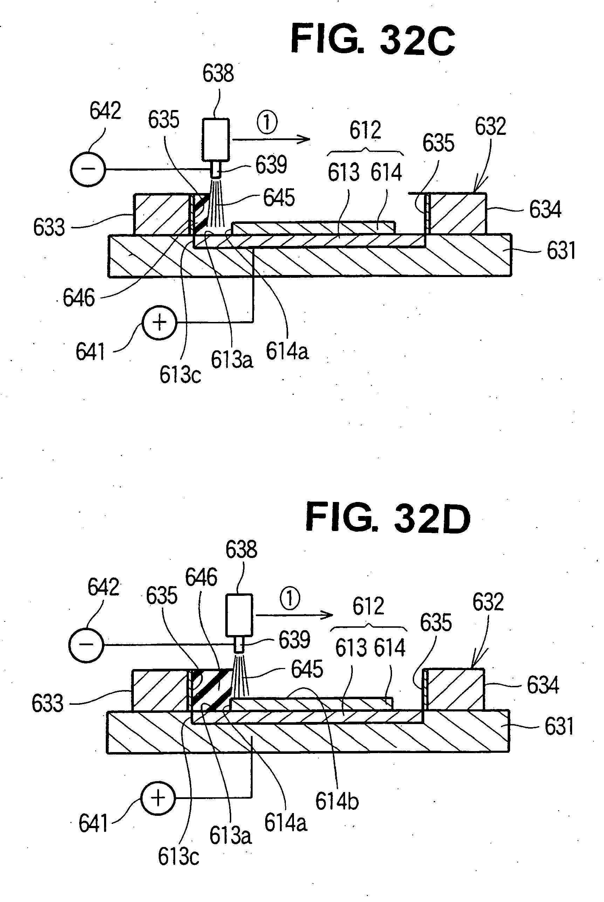

In Fig. 32C, a resin solution included in a gas is sprayed from the nozzle 639 of the spraying device 638. This atomized resin liquid 645 is given a minus charge by the minus charge imparting means 642. By the spraying device 638 being moved across the surface of the negative electrode plate 612 in this state as shown by the arrow [1], the resin solution 646 is applied to the surface part 613a of the negative substrate 613 from the end 613c of the negative substrate 613 to one end 614a of the negative electrode 614.

As the resin solution 646 is applied, by a minus charge being applied to the atomized resin liquid 645 and a plus charge being applied to the negative electrode plate 612, the atomized resin liquid 645 can be applied to the surface part 613a of the negative substrate 613 well without unevenness.

In Fig. 32D, the spraying device 638 is moved further as shown by the arrow [1]. At this time, a spray pressure of the atomized resin liquid 645 acts on the edge of the end 614a of the negative electrode 614, but because a gas is included in the atomized resin liquid 645, the spray pressure of the atomized resin liquid 645 can be kept down. By this means, when the resin solution 646 is applied to the edge of the end 614a of the negative electrode 614, the spray pressure, i.e. the shear force, acting on the edge of the end 614a of the negative electrode 614 can be kept small. Consequently, the surface layer 614b of the negative electrode 614 is prevented from shifting horizontally as it does in related art.

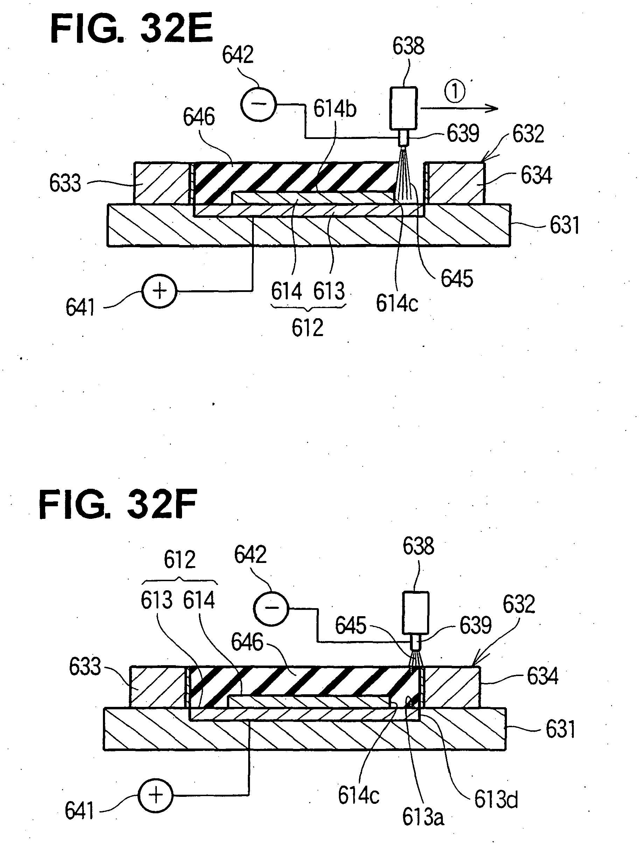

In Fig. 32E, the spraying device 638 is moved further as shown by the arrow [1]. At this time, the spray pressure of the atomized resin liquid 645 acts on the surface layer 614b of the negative electrode 614, but because the spray pressure acts vertically on the surface layer 614b of the negative electrode 614, the surface layer 614b of the negative electrode 614 is prevented from shifting horizontally as it does in related art.

Also, when the spraying device 638 reaches the other end 614c of the negative electrode 614, the spray pressure of the atomized resin liquid 645 acts on the edge of the other end 614c of the negative electrode 614, but because a gas is included in the atomized resin liquid 645, the spray pressure of the atomized resin liquid 645 can be kept down. By this means, in applying the resin solution 646 to the edge of the other end 614c of the negative electrode 614, the spray pressure, that is, the shear force, acting on the edge of this end 614c of the negative electrode 614 can be kept small. Consequently, the surface layer 614b of the negative electrode 614 is prevented from shifting horizontally as it does in related art.

In Fig. 32F, by the spraying device 638 moving from the end 614c of the negative electrode 614 to the end 613d of the negative substrate 613, the resin solution 646 is applied to the surface part 613a between the end 614c of the negative electrode 614 and the end 613d of the negative substrate 613. This completes the coating process.

As a result of the negative electrode plate 612 being surrounded with the outer side regulating wall member 632, when the resin solution 646 is applied, the resin solution 646 is formed to follow the outer side regulating wall member 632. Consequently, the periphery of the resin solution 646, i.e. the periphery 615a of the ion exchange film 615 shown in Fig. 31, can be formed well.

By imparting a plus charge to the negative electrode plate 612 and imparting a minus charge to the atomized resin liquid 645 sprayed from the spraying device 638, it is possible to prevent coating unevenness of the resin solution 646 and apply the resin solution 646 to a uniform thickness.

In cases where by just moving the spraying device 638 as shown in Fig. 32D in the direction of the arrow [1] it would be difficult to apply the resin solution 646 to a uniform thickness, by applying it again with the spraying device 638 where the thickness of the resin solution 646 is thin, the resin solution 646 can be applied to a uniform thickness.

Also, as another method, by adjusting the rate of delivery of the atomized resin liquid 645 from the spraying device 638, the resin solution 646 can be applied to a uniform thickness. For example, in cases where there are parts where the thickness of the resin solution 646 is thin when the atomized resin liquid 645 is applied, by delivering more of the atomized resin liquid 645 at those parts, the resin solution 646 can be applied to a uniform thickness.

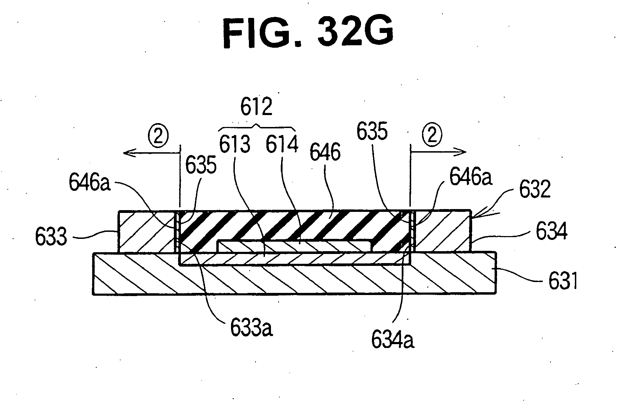

After completion of the coating process, the spraying device 638 is withdrawn from above the resin solution 646. Then, by cooling the outer side regulating wall member 632 (the left and right outer side regulating wall members 633, 634), the peripheral part 646a of the resin solution 646 is cooled and to a certain extent set. In this state, as shown in Fig. 32G the left and right outer side regulating wall members 633, 634 are removed from the bed 631 as shown by the arrows [2].

Because the coatings 635, 635 have been applied to the inner walls 633a, 634a of the left and right outer side regulating wall members 633, 634, their detachability from the resin solution 646 can be kept good.

Additionally, by the peripheral part 646a of the resin solution 646 being cooled and somewhat set, when the outer side regulating wall member 632 (the left and right outer side regulating wall members 633, 634) is removed, deformation of the peripheral part 646a of the resin solution 646 can be prevented.

Although in the fifth ion exchange film forming method an example was described wherein the spraying device 638 was moved from one end of the negative electrode plate 612 toward the other end, it is not limited to this, and it is also possible for the coating to be carried out by the spraying device 638 being moved from the center of the spraying device 638 (that is, the center of the negative electrode 614) toward the ends or by some other movement method.

Although in the forming method described above an example was described wherein the resin solution 646 was applied to a negative electrode plate 612, it is not limited to this, and the same effects can be obtained in applying the resin solution 646 to a positive electrode plate 616.

Industrial Applicability

In the fuel cell electrode manufacturing method of this invention, because the ion exchange film is made a solution, and a solution for making the positive electrode layer, the solution for making the ion exchange film and a solution for making the negative electrode layer are each applied in an undried state, each solution permeates the film applied before it and areas of defective intimacy do not arise at the interfaces of the layers. Also, because the ion exchange film is applied using a solution, it can be made thin and the electrode structure can be made as small as possible, and it is useful in the manufacture of fuel cells used in various industries.

**Claims**

1.    A fuel cell electrode manufacturing method, comprising:

    a step of applying a solution for making a first electrode of positive and negative electrodes of a fuel cell to a sheet to form a first electrode layer;
    a step of, before this electrode layer has dried, applying a solution for making an ion exchange film to this first electrode layer to form an ion exchange film;

a step of, before this ion exchange film has dried, applying a solution for making the second electrode to the ion exchange film to form a second electrode layer; and

a step of hardening the first electrode layer, the second electrode layer and the ion exchange film by drying them.

2. A fuel cell electrode manufacturing method according to claim 1, wherein the drying is carried out without a load being applied.

3. A fuel cell electrode manufacturing method according to claim 1, wherein, of the electrode layers of the positive and negative electrodes, the negative electrode layer is formed below the ion exchange film and the positive electrode layer is formed above the ion exchange film.

4. A fuel cell electrode manufacturing method according to claim 1, wherein the solution for making the positive electrode is applied in a spray state.

5. A fuel cell electrode manufacturing method according to claim 1, wherein the drying is carried out by heating from the insides of the electrodes with far infrared radiation so as to prevent excessive penetration of the solution for making the ion exchange film into the electrodes.

6. A fuel cell electrode manufacturing method according to claim 1, wherein in the solutions for making the positive and negative electrodes a solvent with a higher vaporization temperature than a solvent used in the solution for making the ion exchange film is used.

7. A fuel cell electrode manufacturing method according to claim 1, wherein the first electrode layer is divided into two layers, a first layer on the side away from the ion exchange film and a second layer on the side in contact with the ion exchange film, and the porosity of the second layer is lower than the porosity of the first layer.

8. A fuel cell electrode manufacturing method according to claim 7, wherein the porosity of the second layer is 70 to 75%.

9. A fuel cell electrode manufacturing method according to claim 7, wherein the porosity of the first layer is 76 to 85%.

10. A fuel cell electrode manufacturing method according to claim 7, wherein to make the porosity of the second layer lower than the porosity of the first layer, a solution for making the second layer is applied with a higher atomization energy than a solution for making the first layer.

11. A fuel cell electrode manufacturing method according to claim 7, wherein to make the porosity of the second layer lower than the porosity of the first layer, the size of electrode particles included in a solution for making the second layer is made smaller than the size of electrode particles included in a solution for making the first layer, to make the density of the solution for making the second layer higher than the density of the solution for making the first layer.

12. A fuel cell electrode manufacturing method according to claim 1, comprising a step of forming a first electrode side diffusion layer before the step of forming the first electrode layer, the first electrode layer then being formed while the first electrode side diffusion layer is not yet dry, and a step of forming a second electrode side diffusion layer after the second electrode layer is formed, the second electrode side diffusion layer being formed while the second electrode layer is not yet dry.

13. A fuel cell electrode manufacturing method according to claim 12, wherein the first electrode side diffusion layer is made up of a positive electrode side carbon paper and a positive electrode side binder layer, and the second electrode side diffusion layer is made up of a negative electrode side carbon paper and a negative electrode side binder layer.

14. A fuel cell electrode manufacturing method according to claim 13, wherein a solution for making the positive electrode side binder layer includes water as a solvent and includes a water repellent low-melting-point resin whose melting point is not greater than 150°C.

15. A fuel cell electrode manufacturing method according to claim 14, wherein the low-melting-point resin is a vinylidene fluoride / tetrafluoroethylene / hexafluoropropylene copolymer.

16. A fuel cell electrode manufacturing method according to claim 14, wherein in the stacking of the positive electrode side diffusion layer, the positive electrode layer, the ion exchange film, the negative electrode layer and the negative electrode side diffusion layer, a first binder layer is formed on a first carbon paper of the negative electrode side diffusion layer and the positive electrode side diffusion layer, a first of the positive and negative electrode layers is formed on the first binder layer, the ion exchange film is formed on this first electrode layer, the second electrode layer is formed on this ion exchange film, a second binder layer is formed on this second electrode layer, and a second carbon paper is placed on this second binder layer, and an adhesive resin having excellent adhesion is included in a solution for making the second binder layer.

17. A fuel cell electrode manufacturing method according to claim 16, wherein the adhesive resin is an ion exchange resin.

18. A fuel cell electrode manufacturing method according to claim 13, wherein a solution for making the positive electrode side binder layer includes an organic solvent and includes a resin which is soluble in this organic solvent and is water repellent.

19. A fuel cell electrode manufacturing method according to claim 18, wherein the water repellent resin soluble in the organic solvent is a resin chosen from among vinylidene fluoride / tetrafluoroethylene / hexafluoropropylene copolymers, polyvinylidene fluoride, fluoro-olefin / hydrocarbon-olefin copolymers, fluoro-acrylate copolymers, and fluoro-epoxy compounds.

20. A fuel cell electrode manufacturing method according to claim 12, comprising a step of, after forming the first diffusion layer, flattening the upper face of the first diffusion layer by pressing the upper face of the first diffusion layer before the first diffusion layer has dried.

21. A fuel cell electrode manufacturing method according to claim 20, wherein the first diffusion layer is made by applying a binder to a sheet with a sprayer.

22. A fuel cell electrode, comprising:

a first electrode layer, formed by applying a solution for making a first electrode of positive and negative electrodes of a fuel cell to a sheet;
an ion exchange film, formed by applying a solution for making an ion exchange film to the first electrode layer before the first electrode layer has dried; and
a second electrode layer, formed by applying a solution for making the second electrode to the ion exchange film before the ion exchange film has dried,
wherein the first electrode layer is made up of a first layer on the side away from the ion exchange film and a second layer on the side in contact with the ion exchange film, and the porosity of the second layer is lower than the porosity of the first layer.

23. A fuel cell electrode according to claim 22 wherein the porosity of the second layer is 70 to 75%.

24. A fuel cell electrode according to claim 22 wherein the porosity of the first layer is 76 to 85%.

25. A fuel cell electrode according to claim 22 wherein to make the porosity of the second layer lower than the porosity of the first layer, the size of electrode particles included in a solution for making the second layer is made smaller than the size of electrode particles included in a solution for making the first layer.

**Patentansprüche**

1. Verfahren zur Herstellung einer Brennstoffzellenelektrode, umfassend:

einen Schritt, bei dem eine Lösung zur Herstellung einer ersten Elektrode von positiven und negative Brennstoffzellenelektroden auf eine Schicht aufgetragen wird, um eine erste Elektrodenschicht zu bilden;
einen Schritt, bei dem eine Lösung zum Herstellen eines Ionenaustauscherfilms auf diese erste Elektrodenschicht aufgebracht wird, bevor diese Elektrodenschicht getrocknet ist, um einen Ionenaustauscherfilm zu bilden;
einen Schritt, bei dem eine Lösung zur Herstellung der zweiten Elektrode auf den Ionenaustauscheffilm aufgetragen wird, bevor dieser Ionenaustauscherflm getrocknet ist, um eine zweite Elektrodenschicht zu bilden; und
einen Schritt, bei dem die erste Elektrodenschicht, die zweite Elektrodenschicht und der Ionenaustauscherfilm gehärtet werden, indem sie getrocknet werden.

2. Verfahren zur Herstellung einer Brennstoffzellenelektrode gemäß Anspruch 1, wobei das Trocknen ausgeführt wird, ohne dass eine Kraft angewendet wird.

3. Verfahren zur Herstellung einer Brennstoffzellenelektrode gemäß Anspruch 1, wobei von den Elektrodenschichten der positiven und negativen Elektroden, die negative Elektrodenschicht unter dem Ionenaustauscherfilm gebildet wird und die positive Elektrodenschicht über dem Ionenaustauscherfilm gebildet wird.

4. Verfahren zur Herstellung einer Brennstoffzellenelektrode gemäß Anspruch 1, wobei die Lösung zur Herstellung der positiven Elektrode in einem Sprühzustand aufgebracht wird.

5. Verfahren zur Herstellung einer Brennstoffzellenelektrode gemäß Anspruch 1, wobei das Trocknen ausgeführt wird durch Erwärmen von den Innenseiten der Elektroden mit Fern-UV-Strahlung, so dass eine exzessive Durchdringung der Lösung zur Herstellung des Ionenaustauscherfilms in die Elektroden vermieden wird.

6. Verfahren zur Herstellung einer Brennstoffzellenelektrode gemäß Anspruch 1, wobei in den Lösungen zur Herstellung der positiven und negativen Elektroden ein Lösungsmittel mit einer höheren Verdampfungstemperatur verwendet wird als die eines Lösungsmittels, das in der Lösung zur Herstellung des Ionenaustauscherfilms verwendet wird.

7. Verfahren zur Herstellung einer Brennstoffzellenelektrode gemäß Anspruch 1, wobei die erste Elektrodenschicht in zwei Schichten geteilt ist, nämlich in eine erste Schicht auf der abgewandten Seite des Ionenaustauscherfilms und in eine zweite Schicht auf der Seite, die mit dem Ionenaustauscherfilm in Kontakt steht, wobei die Porosität der zweiten Schicht geringer ist als die Porosität der ersten Schicht.

8. Verfahren zur Herstellung einer Brennstoffzellenelektrode gemäß Anspruch 7, wobei die Porosität der zweiten Schicht 70-75 % ist.

9. Verfahren zur Herstellung einer Brennstoffzellenelektrode gemäß Anspruch 7, wobei die Porosität der ersten Schicht 76-85 % ist.

10. Verfahren zur Herstellung einer Brennstoffzellenelektrode gemäß Anspruch 7, wobei eine Lösung zur Herstellung der zweiten Schicht mit einer höheren Atomisierungsenergie aufgetragen wird als die einer Lösung zur Herstellung der ersten Schicht, um die Porosität der zweiten Schicht geringer als die Porosität der ersten Schicht zu machen.

11. Verfahren zur Herstellung einer Brennstoffzellenelektrode gemäß Anspruch 7, wobei die Größe von Elektrodenpartikeln, die in einer Lösung zur Herstellung der zweiten Schicht enthalten sind, kleiner gemacht werden als die Größe von Elektrodenpartikeln, die in einer Lösung zur Herstellung der ersten Schicht enthalten sind, um die Porosität der zweiten Schicht geringer als die Porosität der ersten Schicht zu machen, um die Dichte der Lösung zur Herstellung der zweiten Schicht größer zu machen als die Dichte der Lösung zur Herstellung der ersten Schicht.

12. Verfahren zur Herstellung einer Brennstoffzellenelektrode gemäß Anspruch 1, umfassend einen Schritt, bei dem eine erste elektrodenseitige Diffusionsschicht vor dem Schritt, bei dem die erste Elektrodenschicht gebildet wird, gebildet wird, wobei die erste Elektrodenschicht dann gebildet wird, während die erste elektrodenseitige Diffusionsschicht noch nicht trocken ist, und einen Schritt, bei dem eine zweite elektrodenseitige Diffusionsschicht gebildet wird, nachdem die zweite Elektrodenschicht gebildet wird, wobei die zweite elektrodenseitige Diffusionsschicht gebildet wird, während die zweite Elektrodenschicht noch nicht trocken ist.

13. Verfahren zur Herstellung einer Brennstoffzellenelektrode gemäß Anspruch 12, wobei die erste elektrodenseitige Diffusionsschicht aus einem positiven elektrodenseitigen Kohlenstoffpapier und einer positiven elektrodenseitigen Bindemittelschicht hergestellt ist und die zweite elektrodenseitige Diffusionsschicht aus einem negativen elektrodenseitigen Kohlenstoffpapier und einer negativen elektrodenseitigen Bindemittelschicht hergestellt ist.

14. Verfahren zur Herstellung einer Brennstoffzellenelektrode gemäß Anspruch 13, wobei eine Lösung zur Herstellung der positiven elektrodenseitigen Bindemittelschicht Wasser als ein Lösungsmittel enthält und ein wasserabweisendes niederschmelzendes Harz enthält, dessen Schmelzpunkt nicht größer als 150 °C ist.

15. Verfahren zur Herstellung einer Brennstoffzellenelektrode gemäß Anspruch 14, wobei das Harz mit niedrigem Schmelzpunkt ein Vinylidenfluorid / Tetrafluorethylen / Hexafluorpropylen-Copolymer ist.

16. Verfahren zur Herstellung einer Brennstoffzellenelektrode gemäß Anspruch 14, wobei in dem Stapel aus positiver elektrodenseitiger Diffusionsschicht, positiver Elektrodenschicht, Ionenaustauscherfilm, negativer Elektrodenschicht und negativer elektrodenseitiger Diffusionsschicht eine erste Bindemittelschicht auf einem ersten Kohlenstoffpapier der negativen elektrodenseitigen Diffusionsschicht und der positiven elektrodenseitigen Diffusionsschicht gebildet wird, eine erste der positiven und negativen Elektrodenschichten auf der ersten Bindemittelschicht gebildet wird, der Ionenaustauscherfilm auf dieser ersten Elektrodenschicht gebildet wird, die zweite Elektrodenschicht auf diesem Ionenaustauscherfilm gebildet wird, eine zweite Bindemittelschicht auf dieser zweiten Elektrodenschicht gebildet und ein zweites Kohlenstoffpapier auf dieser zweiten Bindemittelschicht angebracht wird und ein Klebeharz mit hervorragender Adhäsion in einer Lösung zur Herstellung der zweiten Bindemittelschicht enthalten ist.

17. Verfahren zur Herstellung einer Brennstoffzellenelektrode gemäß Anspruch 16, wobei das Klebeharz ein Ionenaustauscherharz ist.

18. Verfahren zur Herstellung einer Brennstoffzellenelektrode gemäß Anspruch 13, wobei eine Lösung zur Herstellung der positiven elektrodenseitigen Bindemittelschicht ein organisches Lösungsmittel enthält und ein Harz enthält, das in diesem organischen Lösungsmittel löslich ist und wasserabweisend ist.

19. Verfahren zur Herstellung einer Brennstoffzellenelektrode gemäß Anspruch 18, wobei das wasserabweisende Harz, das in dem organischen Lösungsmittel löslich ist, ein Harz ausgewählt aus Vinylidenfluorid / Tetrafluorethylen / Hexafluorpropylencopolymeren, Polyvinylidenfluorid, Fluorolefin / Kohlenwasserstoffolefin-Copolymeren, Fluoracrylatcopolymeren, und Fluorepoxyverbindungen, ist.

20. Verfahren zur Herstellung einer Brennstoffzellenelektrode gemäß Anspruch 12, umfassend einen Schritt, bei dem die obere Fläche der ersten Diffusionsschicht durch Drücken der oberen Fläche der ersten Diffusionsschicht flach gemacht wird, bevor die erste Diffusionsschicht getrocknet ist, nachdem die erste Diffusionsschicht gebildet ist.

21. Verfahren zur Herstellung einer Brennstoffzellenelektrode gemäß Anspruch 20, wobei die erste Diffusionsschicht hergestellt wird, indem ein Bindemittel auf eine Schicht mit einer Sprühvorrichtung aufgebracht wird.

22. Eine Brennstoffzellenelektrode, umfassend:

eine erste Elektrodenschicht, die durch Aufbringen einer Lösung zur Herstellung einer ersten Elektrode der positiven und negativen Elektroden einer Brennstoffzelle auf eine Schicht gebildet wird;
einen Ionenaustauscherfilm, der gebildet wird, indem eine Lösung zur Herstellung eines Ionenaustauscherfilms auf die erste Elektrodenschicht aufgebracht wird, bevor die erste Elektrodenschicht getrocknet ist; und
eine zweite Elektrodenschicht, die gebildet wird, indem eine Lösung zur Herstellung der zweiten Elektrode auf den Ionenaustauscherfilm aufgebracht wird, bevor der Ionenaustauscherfilm getrocknet ist, wobei die erste Elektrodenschicht hergestellt ist aus einer ersten Schicht auf der abgewandten Seite des Ionenaustauscherfilms und einer zweiten Schicht auf der Seite, die mit dem Ionenaustauscherfilm in Kontakt steht und wobei die Porosität der zweiten Schicht geringer ist als die Porosität der ersten Schicht.

23. Eine Brennstoffzellenelektrode gemäß Anspruch 22, wobei die Porosität der zweiten Schicht 70-75 % ist.

24. Eine Brennstoffzellenelektrode gemäß Anspruch 22, wobei die Porosität der ersten Schicht 76-85 % ist.

25. Eine Brennstoffzellenelektrode gemäß Anspruch 22, wobei die Größe der Elektrodenpartikel, die in einer Lösung zur Herstellung der zweiten Schicht enthalten sind, kleiner gemacht wird als die Größe der Elektrodenpartikel, die in einer Lösung zur Herstellung der ersten Schicht enthalten sind, um die Porosität der zweiten Schicht niedriger zu machen als die Porosität der ersten Schicht.

**Revendications**

1. Procédé de fabrication d'électrode de pile à combustible, comprenant :

une étape consistant à appliquer une solution pour faire une première électrode parmi des électrodes positive et négative d'une pile à combustible sur une feuille pour former une première couche d'électrode ;
une étape consistant à, avant que cette couche d'électrode soit sèche, appliquer une solution pour faire un film échangeur d'ions sur cette première couche d'électrode pour former un film échangeur d'ions ;
une étape consistant à, avant que ce film échangeur d'ions soit sec, appliquer une solution pour faire la seconde électrode sur le film échangeur d'ions pour former une seconde couche d'électrode ; et
une étape consistant à durcir la première couche d'électrode, la seconde couche d'électrode et le film échangeur d'ions en les séchant.

2. Procédé de fabrication d'électrode de pile à combustible selon la revendication 1, dans lequel le séchage est réalisé sans application de charge.

3. Procédé de fabrication d'électrode de pile à combustible selon la revendication 1, dans lequel parmi les couches d'électrode des électrodes positive et négative, la couche d'électrode négative est formée sous le film échangeur d'ions et la couche d'électrode positive est formée sur le film échangeur d'ions.

4. Procédé de fabrication d'électrode de pile à combustible selon la revendication 1, dans lequel la solution pour faire l'électrode positive est appliquée dans un état de pulvérisation.

5. Procédé de fabrication d'électrode de pile à combustible selon la revendication 1, dans lequel le séchage est réalisé par chauffage depuis l'intérieur des électrodes avec un rayonnement infrarouge lointain de façon à empêcher une pénétration excessive de la solution pour faire le film échangeur d'ions dans les électrodes.

6. Procédé de fabrication d'électrode de pile à combustible selon la revendication 1, dans lequel dans les solutions pour faire les électrodes positive et négative, un solvant ayant une température de vaporisation supérieure à celle d'un solvant utilisé dans la solution pour faire le film échangeur d'ions est utilisé.

7. Procédé de fabrication d'électrode de pile à combustible selon la revendication 1, dans lequel la première couche d'électrode est divisée en deux couches, une première couche sur le côté éloigné du film échangeur d'ions et une seconde couche sur le côté en contact avec le film échangeur d'ions, et la porosité de la seconde couche est inférieure à la porosité de la première couche.

8. Procédé de fabrication d'électrode de pile à combustible selon la revendication 7, dans lequel la porosité de la seconde couche est de 70 à 75 %.

9. Procédé de fabrication d'électrode de pile à combustible selon la revendication 7, dans lequel la porosité de la première couche est de 76 à 85 %.

10. Procédé de fabrication d'électrode de pile à combustible selon la revendication 7, dans lequel pour rendre la porosité de la seconde couche inférieure à la porosité de la première couche, une solution pour faire la seconde couche est appliquée avec une énergie d'atomisation plus élevée qu'une solution pour la première couche.

11. Procédé de fabrication d'électrode de pile à combustible selon la revendication 7, dans lequel pour rendre la porosité de la seconde couche inférieure à la porosité de la première couche, la taille des particules d'électrode incluses dans une solution pour faire la seconde couche est rendue plus petite que la taille des particules d'électrode incluses dans une solution pour faire la première couche, afin de rendre la densité de la solution pour faire la seconde couche plus élevée que la densité de la solution pour faire la première couche.

12. Procédé de fabrication d'électrode de pile à combustible selon la revendication 1, comprenant une étape consistant à former une couche de diffusion du côté première électrode avant l'étape consistant à former la première couche d'électrode, la première couche d'électrode étant alors formée tandis que la couche de diffusion du côté première électrode n'est pas encore sèche, et une étape consistant à former une couche de diffusion du côté seconde électrode après la formation de la seconde couche d'électrode, la couche de diffusion du côté seconde électrode étant formée tandis que la seconde couche d'électrode n'est pas encore sèche.

13. Procédé de fabrication d'électrode de pile à combustible selon la revendication 12, dans lequel la couche de diffusion du côté première électrode est constituée d'un papier carbone du côté électrode positive et d'une couche de liant du côté électrode positive, et la couche de diffusion du côté seconde électrode est constituée d'un papier carbone du côté électrode négative et d'une couche de liant du côté électrode négative.

**14.** Procédé de fabrication d'électrode de pile à combustible selon la revendication 13, dans lequel une solution pour faire la couche de liant du côté électrode positive inclut de l'eau en tant que solvant et inclut une résine hydrophobe à bas point de fusion dont le point de fusion n'est pas supérieur à 150 °C.

**15.** Procédé de fabrication d'électrode de pile à combustible selon la revendication 14, dans lequel la résine à bas point de fusion est un copolymère de fluorure de vinylidène/tétrafluoroéthylène/hexafluoro propylène.

**16.** Procédé de fabrication d'électrode de pile à combustible selon la revendication 14, dans lequel lors de l'empilement de la couche de diffusion du côté électrode positive, de la couche d'électrode positive, du film échangeur d'ions, de la couche d'électrode négative et de la couche de diffusion du côté électrode négative, une première couche de liant est formée sur un premier papier carbone de la couche de diffusion du côté électrode négative et de la couche de diffusion du côté électrode positive, une première des couches d'électrodes positive et négative est formée sur la première couche de liant, le film échangeur d'ions est formé sur cette première couche d'électrode, la seconde couche d'électrode est formée sur ce film échangeur d'ions, une seconde couche de liant est formée sur cette seconde couche d'électrode, et un second papier carbone est placé sur cette seconde couche de liant, et une résine adhésive ayant une excellente adhérence est incluse dans une solution pour faire la seconde couche de liant.

**17.** Procédé de fabrication d'électrode de pile à combustible selon la revendication 16, dans lequel la résine adhésive est une résine échangeuse d'ions.

**18.** Procédé de fabrication d'électrode de pile à combustible selon la revendication 13, dans lequel une solution pour faire la couche de liant du côté électrode positive inclut un solvant organique et inclut une résine qui est soluble dans ce solvant organique et qui est hydrophobe.

**19.** Procédé de fabrication d'électrode de pile à combustible selon la revendication 18, dans lequel la résine hydrophobe soluble dans le solvant organique est une résine choisie parmi les copolymères de fluorure de vinylidène/tétrafluoroéthylène/hexafluoropropylène, les copolymères de poly(fluorure de vinylidène), fluoro-oléfine/hydrocarbure-oléfine, les copolymères de fluoro-acrylate, et les composés fluoro-époxy.

**20.** Procédé de fabrication d'électrode de pile à combustible selon la revendication 12, comprenant une étape consistant à, après la formation de la première couche de diffusion, aplanir la face supérieure de la première couche de diffusion en pressant la face supérieure de la première couche de diffusion avant que la première couche de diffusion soit sèche.

**21.** Procédé de fabrication d'électrode de pile à combustible selon la revendication 20, dans lequel la première couche de diffusion est faite par l'application d'un liant sur une feuille avec un pulvérisateur.

**22.** Electrode de pile à combustible, comprenant :

une première couche d'électrode, formée par application d'une solution pour faire une première électrode parmi les électrodes positive et négative d'une pile à combustible sur une feuille ;
un film échangeur d'ions, formé par application d'une solution pour faire un film échangeur d'ions sur La première couche d'électrode avant que la première couche d'électrode soit sèche ; et
une seconde couche d'électrode, formée par application d'une solution pour faire la seconde électrode sur le film échangeur d'ions avant que le film échangeur d'ions soit sec,
dans laquelle la première couche d'électrode est constituée d'une première couche sur le côté éloigné du film échangeur d'ions et d'une seconde couche sur le côté en contact avec le film échangeur d'ions, et la porosité de la seconde couche est inférieure à la porosité de la première couche.

**23.** Electrode de pile à combustible selon la revendication 22, dans laquelle la porosité de la seconde couche est de 70 à 75 %.

**24.** Electrode de pile à combustible selon la revendication 22, dans lequel la porosité de la première couche est de 76 à 85 %.

**25.** Electrode de pile à combustible selon la revendication 22, dans laquelle pour rendre la porosité de la seconde couche inférieure à la porosité de la première couche, la taille des particules d'électrode incluses dans une solution pour faire la seconde couche est rendue plus petite que la taille des particules d'électrode incluses dans une solution pour faire la première couche.

# FIG. 1

EP 1 450 426 B1

EP 1 450 426 B1

# FIG. 2

40

# FIG. 3A

# FIG. 3B

# FIG. 3C

# FIG. 3D

# FIG. 3E

# FIG. 3F

# FIG. 4A

# FIG. 4B

# FIG. 4C

# FIG. 4D

# FIG. 4E

EP 1 450 426 B1

# FIG. 5

46

# FIG. 6A

# FIG. 6B

# FIG. 7

# FIG. 8A

# FIG. 8B

# FIG. 8C

# FIG. 8D

# FIG. 8E

# FIG. 8F

# FIG. 8G

# FIG. 8H

# FIG. 9

# FIG. 10A

# FIG. 10B

# FIG. 10C

# FIG. 10D

# FIG. 10E

# FIG. 10F

EP 1 450 426 B1

# FIG. 10G

# FIG. 10H

# FIG. 10I

55

# FIG. 11

## FIG. 12A

## FIG. 12B

## FIG. 12C

# FIG. 12D

# FIG. 12E

# FIG. 12F

# FIG. 12G

# FIG. 13

# FIG. 14A

# FIG. 14B

# FIG. 14C

# FIG. 15

## FIG. 16A

## FIG. 16B

# FIG. 16C

# FIG. 16D

# FIG. 16E

# FIG. 16F

# FIG. 16G

# FIG. 16H

# FIG. 17A

# FIG. 17B

# FIG. 18

EP 1 450 426 B1

# FIG. 19

# FIG. 20

# FIG. 21

# FIG. 22A

# FIG. 22B

# FIG. 22C

# FIG. 22D

# FIG. 22E

# FIG. 22F

# FIG. 22G

# FIG. 22H

# FIG. 22I

# FIG. 22J

# FIG. 23

# FIG. 24

# FIG. 25

# FIG. 26

# FIG. 27A

# FIG. 27B

## FIG. 27C

## FIG. 27D

**FIG. 27G**

P2  P3

③  H  435

540  431

433

541j
541i
541h
541g
541f  412
541e
541d
541c
541b
541a

H

**FIG. 27H**

541b  541d  541f  541h  541j
541c  541e  541g  541i
541a  540  442
551  551  −
551a  551a
435  435
433  432
431  +
551a  552  551a
434  551b  512  551a  434

## FIG. 27I

## FIG. 27J

# FIG. 28A
(Comparison Example)

563
562
562b
562a
561a
561b
562
562
562b
561c
562a
562b
S3
S3

# FIG. 28B
(Embodiment)

541j
551b
551
551a
551b
412
551
551b
551a
541i
551
551a
541h
551b
S2
S2

# FIG. 29

吸込

吸込

# FIG. 30

EP 1 450 426 B1

# FIG. 31

# FIG. 32A

# FIG. 32B

# FIG. 32C

# FIG. 32D

# FIG. 32E

# FIG. 32F

# FIG. 32G

# FIG. 33
## (Prior Art)

$e^-$

700

$O_2$

703

702

701

$H_2$

$H_2O$

# FIG. 34
## (Prior Art)

COMPRESSED

707 702 705

704 706 701 703

# FIG. 35A
## (Prior Art)

# FIG. 35B
## (Prior Art)

# FIG. 36A
## (Prior Art)

# FIG. 36B
## (Prior Art)